# EUROPÄISCHE PATENTSCHRIFT

(11) **EP 1 759 537 B1**
(45) Veröffentlichungstag und Bekanntmachung des Hinweises auf die Patenterteilung: **06.08.2008**
(21) Anmeldenummer: 05752552.9
(22) Anmeldetag: 02.06.2005
(51) Int. Cl.: H04Q 7/00

(54) **AUFBAU EINES DRAHTLOSEN SELBSTORGANISIERENDEN KOMMUNIKATIONSNETZWERKES UND ÜBERGABE DER BASISSTATIONSFUNKTIONALITÄT**
ESTABLISHMENT OF A WIRELESS, AUTONOMOUS COMMUNICATIONS NETWORK AND TRANSFER OF BASE STATION FUNCTIONALITY
PROCEDE D'ETABLISSEMENT D'UN RESEAU DE COMMUNICATION AUTO-ORGANISE SANS FIL ET TRANSFERT DE FONCTIONNALITE DE STATION DE BASE

(30) Priorität: 02.06.2004 DE 102004026775
(43) Veröffentlichungstag der Anmeldung: 07.03.2007
(60) Teilanmeldung: 07021723.7
(73) Patentinhaber: Siemens Home and Office Communication Devices GmbH & Co. KG, 81379 München (DE)
(72) Erfinder: MÖSKER, Volker, 46419 Isselburg (DE); WINKLER, Andreas, 41065 Mönchengladbach (DE)
(74) Vertreter: Maier, Daniel Oliver
(86) Internationale Anmeldenummer: PCT/EP2005/052540
(87) Internationale Veröffentlichungsnummer: WO 2005/120089

(56) Entgegenhaltungen:
- EP-A- 1 261 171
- WO-A-02/087172
- DE-A1- 19 930 423
- US-A1- 2001 012 757
- "Specification of the Bluetooth System, Specification Volume 1, Wireless Connections made easy, Core, v1.0 B" SPECIFICATION OF THE BLUETOOTH SYSTEM, 1. Dezember 1999 (1999-12-01), Seiten 108,1039-1041, XP002215199

## Beschreibung

Die Erfindung bezieht sich auf ein Verfahren zum Aufbau eines drahtlosen selbstorganisierenden Kommunikationsnetzwerkes gemäß dem Oberbegriff des Patentanspruches 1, eine Basisstation eines drahtlosen selbstorganisierenden Kommunikationsnetzwerkes gemäß dem Oberbegriff des Patentanspruches 31 und ein drahtloses selbstorganisierendes Kommunikationsnetzwerk gemäß dem Oberbegriff des Patentanspruches 16.

Bei drahtlosen Kommunikationsnetzwerken - z.B. nach dem IEEE Standard 802.11a/b/g (WLAN-Standard) funktionierende Computernetzwerke, die von einer Basisstation aufgespannt werden, die ihrerseits auch Datenverkehr weiterleiten können, hängt die Erreichbarkeit aller am Kommunikationsnetzwerk beteiligten Sendeempfangsgeräten (z.B. Fest- oder Mobilstationen zur drahtlosen Telekommunikation) - mit anderen Worten: der Teilnehmer - von der jeweiligen Position des betreffenden Gerätes, das mobil oder stationär ausgebildet sein kann, zu einer vorzugsweise als "Access Point" ausgebildeten Master- oder Basisstation ab.

Die Geräte, die sich nicht in Sichtweite zur Master- bzw. Basisstation befinden, können beispielsweise auch nicht am Netzwerk teilnehmen. Da die Master- bzw. Basisstation - wie vorstehend erwähnt - in der Lage ist, Datenverkehr weiterzuleiten, können zwei Geräte, die einander nicht direkt sehen können, über die Master- bzw. Basisstation miteinander kommunizieren.

Es ist also offensichtlich, dass eine optimale Platzierung der Master- bzw. Basisstation die Performance und die Ausleuchtung eines Kommunikationsnetzwerkes optimieren kann.

Eine Optimierung, wenngleich auch nur eingeschränkt, ist durch einen manuellen Eingriff in die Netzwerktopologie gegeben. Die Optimierung durch einen manuellen Eingriff ist jedoch dann nicht möglich, wenn das Kommunikationsnetzwerk einen Zugang zu einem Festnetz besitzt und dieser in der Regel über die Master- bzw. Basisstation realisiert wird.

Aus der WO 02/087172 A1 ist ein selbstorganisierendes Kommunikationsnetzwerk bekannt, in dem mehrere Sendeempfangsgeräte durch drahtlose Kommunikation miteinander verkehren und von denen ein Sendeempfangsgerät einer Gerätegruppe (cluster) als Master (cluster head) fungiert. Jedes dieser Master-Geräte sendet in regelmäßigen Zeitabständen eine HELLO-Nachricht an benachbarte Sendeempfangsgeräte aus. Empfängt das benachbarte Sendeempfangsgerät innerhalb einer vorgegebenen Zeit keine HELLO-Nachricht, so beginnt es selber eine solche Nachricht auszusenden und operiert damit als Master. Das Master-Gerät wartet anschließend auf Antworten der benachbarten Geräte, die die gesendete HELLO-Nachricht empfangen haben. Sobald es auf die zuvor gesendete Nachricht Antworten empfängt, erstellt es anhand dieser eine gerätespezifische Nachbarschaftsliste von benachbarten Sendeempfangsgeräten. Mit der von dem benachbarten Sendeempfangsgerät gesendeten Antwort wird zugleich der Aufbau einer Verbindung zwischen dem Master-Gerät und dem antwortenden Sendeempfangsgerät initiiert.

Aus der DE 199 30 423 A1 ist ein Datenübertragungsnetzwerk mit einer Vielzahl von Netzwerkknoten bekannt, die in dem Netzwerk wahlweise als Master oder Slave operieren können. Der Master ist zudem in der Lage, z.B. wenn er aus dem Netzwerk ausscheidet, einem Slave einenBefehl zur Übernahme der Master-Funktion zu erteilen.

Die der Erfindung zugrunde liegende Aufgabe besteht darin, ein Verfahren zum Aufbau eines drahtlosen selbstorganisierenden Kommunikationsnetzwerkes, ein Sendeempfangsgerät und eine Basisstation eines drahtlosen selbstorganisierenden Kommunikationsnetzwerkes sowie ein drahtloses selbstorganisierendes Kommunikationsnetzwerk anzugeben, bei dem bzw. bei der in einer dynamischen Netzwerktopologie durch Autokonfiguration eine optimale Netzwerkperformance und Netzwerkausleuchtung erreicht wird.

Diese Aufgabe wird ausgehend von dem im Oberbegriff des Patentanspruches 1 definierten Verfahren durch die im Kennzeichen des Patentanspruches 1 angegebenen Merkmale gelöst.

Außerdem wird die Aufgabe ausgehend von dem im Oberbegriff des Patentanspruches 16 definierten Kommunikationsnetzwerk durch die im Kennzeichen des Patentanspruches 16 angegebenen Merkmale gelöst.

Darüber hinaus wird die Aufgabe ausgehend von der im - Oberbegriff des Patentanspruches 31 definierten Basisstation durch die im Kennzeichen des Patentanspruches 31 angegebenen Merkmale gelöst.

Die der Erfindung zugrunde liegende Idee besteht darin, durch funktionale Erweiterungen eines Kommunikationsnetzwerkes (Implementierung eines Algorithmus/einer Methode) das Kommunikationsnetzwerk in die Lage zu versetzen, dass es selbst (automatisch) die aktuelle Netzwerkkonfiguration und die Erreichbarkeit von am Kommunikationsnetzwerk beteiligten vorzugsweise als mobile und/stationäre Sendempfangsgeräten, die z.B. als WLAN- und/oder DECT-Geräte funktionieren, untereinander durch Messungen ermittelt und aus dadurch gewonnenen Daten die optimale Position einer Master- bzw. Basisstation, die gegenüber den sonstigen Sendeempfangsgeräten eine um die Master- bzw. Basisstationsfunktionalität erweiterte Grundfunktionalität besitzen jederzeit bestimmt.

Wird weiterhin, falls das Kommunikationsnetzwerk einen Zugang zu einem Festnetz gemäß der Patentansprüche 4, 19 und 32 aufweist, dieser Festnetzzugang des drahtlosen Kommunikationsnetzwerkes von der Master- bzw. Basisstationsfunktionalität getrennt, indem über die Master- bzw. Basisstation nicht zugleich zwingend der Festnetzzugang realisiert wird, so ist es möglich, die Station beliebig zu positionieren, um eine optimale Netzkonfiguration zu erreichen. Durch die so gewonnene dynamische Platzierung der Master- bzw. Basisstation (Platzierung in dem Sinne, dass die Funktionalität der Master- bzw. Basisstation auf ein anderes Sendeempfangsgerät des Kommunikationsnetzwerkes übertragen wird), kann das Netzwerk selbständig und ohne manuelle Eingriffe die jeweils aktuelle optimale Konfiguration ermitteln und einnehmen. Durch die Möglichkeit der Autokonfiguration des Netzwerkes kann erstmals auch ein Ausfall der Master- bzw. Basisstation vom Netzwerk selbständig kompensiert werden, indem automatisch eine der verbleibenden Sendeempfangsgeräte die Funktionalität der Master- bzw. Basisstation übernimmt. Dies bedeutet jedoch, dass die verbleibenden Sendeempfangsgeräte für die Übernahme der Funktionalität der Master- bzw. Basisstation neben der Grundfunktionalität auch die um die Master- bzw. Basisstationsfunktionalität erweiterte Funktionalität besitzen.

Ein großer Vorteil der in den unabhängigen Patentansprüchen vorgestellten Lösung besteht darin, dass diese sich alleine durch Software-Änderungen realisieren lässt.

Die mit der jeweils angegebenen technischen Lehre verbundene Bereicherung des Standes der Technik liegt zum einen in der automatischen Netzwerkkonfiguration und zum anderen in der Art und Weise, wie diese automatische Netzwerkkonfiguration bewerkstelligt wird (vgl.: die unabhängigen Patentansprüche 1, 16 und/oder 31).

Wird das Kommunikationsnetzwerk - z.B. ein drahtloses insbesondere nach dem IEEE Standard 802.11a/b/g (WLAN-Standard) funktionierendes Computernetzwerk - in Betrieb genommen und sind aufgrund einer suboptimalen Platzierung der Master- bzw. Basisstation nicht alle Geräte des Computernetzwerkes in der Lage, dem Netzwerk beizutreten, ist das Netzwerk eigenständig und ohne manuelles Zutun in der Lage, diese Situation zu erkennen und durch ein Übertragen der Master- bzw. Basisstationsfunktionalität auf ein anderes Gerät zu erreichen, dass alle Geräte in Reichweite des Netzwerkes kommen, sofern dies die Lage der einzelnen Geräte zueinander zulässt.

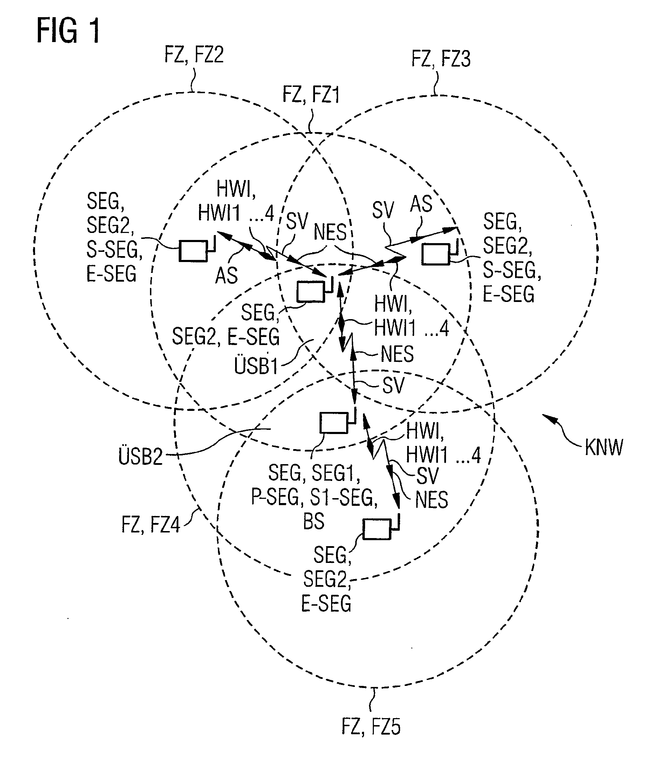

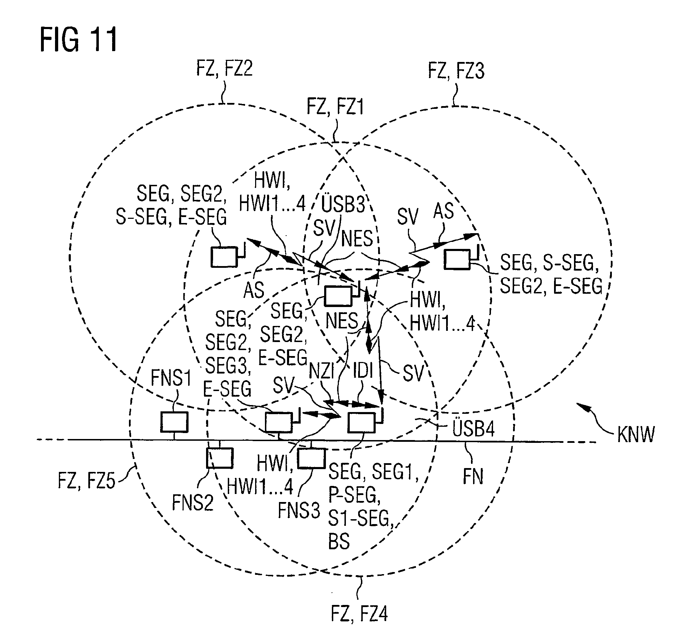

Gibt es z.B. wie in den FIGUREN 1 bis 18 fünf drahtlose Sendeempfangsgeräte, wovon ein Gerät gemäß den Patentansprüchen 4, 19 und 32 sowie den FIGUREN 11 bis 18 Zugang zu einem drahtgebundenen Netz (Festnetz) mit Festnetzstationen hat - dies kann gemäß den Patentansprüchen 7, 22 und 32 vorzugsweise die Basisstation des Kommunikationsnetzwerkes sein, so kann nicht immer selbstverständlich davon ausgegangen werden, dass alle Sendeempfangsgeräte am Netzwerk teilnehmen können. So wird es, wie in den FIGUREN 11 bis 18 dargestellt, immer Geräte geben, die sich nicht in unmittelbarer Kommunikationsreichweite zu dem Sendeempfangsgerät mit der Festnetzanbindung befinden. Mit dem/der in den unabhängigen Patentansprüchen 1, 16 und/oder 31 enthaltenen Algorithmus/Methode wird immer sichergestellt, dass das Sendeempfangsgerät die Basisstationsfunktionalität des Kommunikationsnetzwerkes erhält, das sich hierfür am besten eignet.

Die Auswahlkriterien für die beste Eignung sind frei wählbar bzw. können auf die Gegebenheiten im betreffenden Kommunikationsnetzwerk angepasst werden; so ist es zum Beispiel möglich, die Kriterien beispielsweise durch die Art der Hinweisinformationen in den Patentansprüchen 8 bis 11, 23 bis 26 und 35 bis 38 so zu wählen, dass das Sendeempfangsgerät die Master- bzw. Basisstationsfunktionalität erhält, das sich zum einen zu den meisten Sendeempfangsgeräten in Kommunikationsreichweite befindet und sich zum anderen in Kommunikationsreichweite zu dem Sendeempfangsgerät befindet, welches den Festnetzzugang hat. Die letzte Bedingung ist selbstverständlich auch erfüllt, wenn das betreffende Sendeempfangsgerät, das die Master- bzw. Basisstationsfunktionalität erhält, auch den Festnetzzugang aufweist. Wenn jedoch das Kommunikationsnetzwerk keinen Festnetzzugang aufweist, dann erübrigt sich die letzte Bedingung.

Der genannte Algorithmus bzw. die genannte Methode funktioniert im Einzelnen folgendermaßen:
Zu Beginn, beim Start des Kommunikationsnetzwerkes, hören alle Sendeempfangsgeräte die Umgebung nach bereits bestehenden, aufgebauten Netzwerken ab. Dies geschieht dadurch, dass überprüft wird, ob ein Netzwerkexistenzsignal empfangen wird. Ist dies der Fall, so ist das das Netzwerkexistenzsignal sendende Sendeempfangsgerät das Gerät mit der Master- bzw. Basisstationsfunktionalität, also die Master- bzw. Basisstation. Sind keine Netzwerke vorhanden bzw. wird kein Netzwerkexistenzsignal empfangen, so beginnen sie selbst ein Netzwerk aufzubauen. Hierbei kann es nun vorkommen, dass Geräte, die sich nicht direkt sehen können also sich nicht in unmittelbarer Kommunikationsreichweite zueinander befinden, gleichzeitig ein Netzwerk aufbauen. Ist nun ein Sendeempfangsgerät vorhanden, das gleichzeitig mehrere Netzwerke sehen kann, so muss dieses Sendeempfangsgerät entweder allen Sendeempfangsgeräten oder allen Sendeempfangsgeräten bis auf ein einziges Sende-empfangsgerät eine Anweisung schicken, ihre Netzwerke zu beenden. In diesem Fall ist entweder das die Anweisung sendende Sendeempfangsgerät oder das die Anweisung nicht erhaltende Sendeempfangsgerät die Master- bzw. Basisstation. Der vorstehend vorgestellte Teil des Algorithmus/der Methode beim Start des Kommunikationsnetzwerkes ist in den Patentansprüchen 2 und 17 angegeben.

In einer sich daran anschließenden Messphase hören alle Sendeempfangsgeräte weiterhin die Umgebung nach Signalverkehr anderer Sendeempfangsgeräte ab. Dieser Signalverkehr kann aus Rahmen bestehen, die an das betreffende Sendeempfangsgerät gerichtet sind oder Rahmen, die an andere Sendeempfangsgeräte gesendet werden oder aus speziellen Broadcast-Rahmen, die nur für Messzwecke gedacht sind und eine eindeutige Identifikation des sendenden Gerätes enthalten müssen.

Diese speziellen Broadcast-Rahmen werden in regelmäßigen Abständen gesendet. Die empfangenden Sendeempfangsgeräte müssen die empfangbaren Sendeempfangsgeräte in einer Tabelle festhalten, in der auch Informationen über die Qualität der Verbindungen zu diesen Sendeempfangsgeräten gespeichert werden können.

Nach der Messphase soll nun die Master- bzw. Basisstation einen weiteren Broadcast-Rahmen senden, mit dem er alle Sendeempfangsgeräte, die ihn empfangen können, auffordert, ihre gesammelten Daten über die empfangbaren Sendeempfangsgeräte an die Master- bzw. Basisstation zu senden.

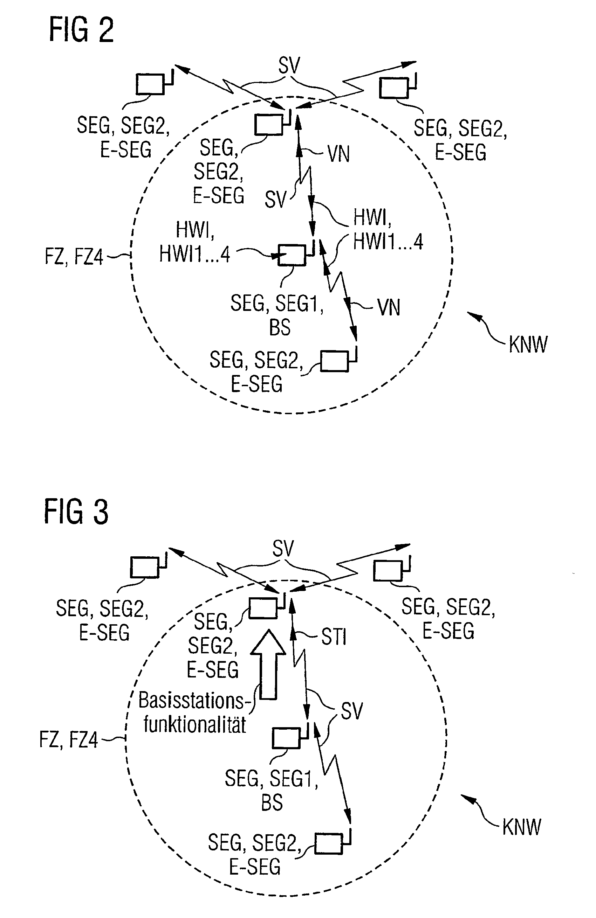

Anhand der von den einzelnen Sendeempfangsgeräten gesendeten Daten ist die Master- bzw. Basisstation nun in der Lage zu erkennen, ob in ihrem Empfangsbereich ein Sendeempfangsgerät vorhanden ist, das im Vergleich zu ihr besser als Master- bzw. Basisstation geeignet ist. Ist das nicht der Fall, so behält die Master- bzw. Basisstation die Master- bzw. Basisstationsfunktionalität. Anderenfalls muss das als Master- bzw. Basisstation fungierende Sendeempfangsgerät nun ihre Master- bzw. Basisstationsfunktionalität an das besser geeignete Sendeempfangsgerät übergeben. Hierzu sendet das als Master- bzw. Basisstation fungierende Sendeempfangsgerät einen Rahmen, mit dem es dem besser geeigneten Gerät signalisiert, dass es die Master- bzw. Basisstationsfunktionalität aufgibt und das adressierte Sendeempfangsgerät diese übernehmen soll. Hierbei können auch noch Konfigurationsdaten bezüglich des Netzwerkes (z.B. am Netzwerk teilnehmende Geräte) an die neue Master- bzw. Basisstation übergeben werden (vgl.: FIGUREN 3, 7, 15 und 16).

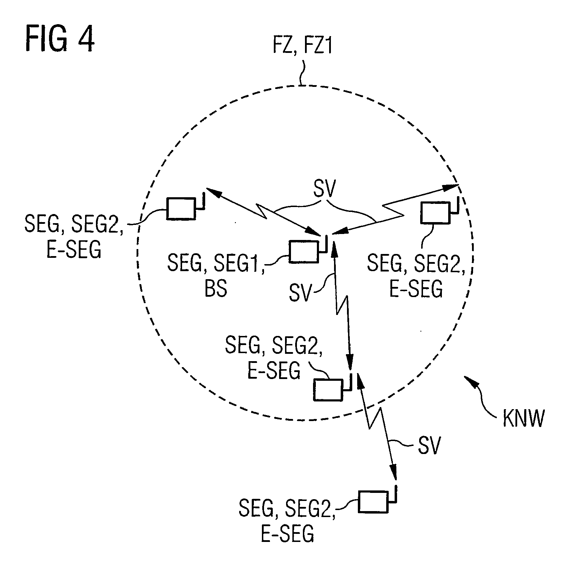

In den FIGUREN 4, 8 bis 10, 17 und 18 ist jeweils das Netzwerk nach Übertragung der Basisstationsfunktionalität zu sehen.

Besitzt das Kommunikationsnetzwerk einen Zugang zum Festnetz, so ist dieser Umstand bei dem Algorithmus/der Methode wie folgt zu berücksichtigen:
Bietet ein Sendeempfangsgerät einen Festnetzzugang und hat dieses Sendeempfangsgerät nicht die Master- bzw. Basisstationsfunktionalität, so muss sichergestellt sein, dass dieses Sendeempfangsgerät immer aktuelle Informationen über das drahtlose Netzwerk bezüglich dessen Teilnehmer erhält. Ansonsten könnte sie nicht entscheiden, welche Datenpakete aus dem Festnetz in das drahtlose Netzwerk weitergeleitet werden müssen.

Kommt es im weiteren aufgrund des Algorithmus/der Methode zu einer Übertragung der Master- bzw. Basisstationsfunktionalität, so muss sichergestellt werden, dass die neue Basisstation stets in Sichtweite des Sendeempfangsgerätes bleibt, über das der Festnetzzugang realisiert ist. Ist dies nicht der Fall, werden die teilnehmenden Geräte des drahtlosen Netzwerkes, die zwar die (neue) Master- bzw. Basisstation aber nicht das Sendeempfangsgerät mit dem Festnetzzugang sehen, vom Festnetz abgeschnitten.

Der Algorithmus/die Methode stellt weiterhin sicher, dass der Algorithmus/die Methode auch im Fall einer optionalen Direktverbindung zwischen Sendeempfangsgeräten im Kommunikationsnetzwerk funktioniert.

Besteht die Möglichkeit einer Direktverbindung zwischen zwei Sendeempfangsgeräten, d.h. der Datenverkehr muss nicht zwangsläufig über die Master- bzw. Basisstation laufen, muss gewährleistet werden, dass jedes Sendeempfangsgerät mögliche direkte Gesprächspartner und, sofern in Reichweite, auch das Sendeempfangsgerät mit dem Festnetzzugang als solches kennt. Dies kann z.B. über die bereits oben erwähnten speziellen Broadcast-Rahmen realisiert werden, in dem das Sendeempfangsgerät mit dem Festnetzzugang ein spezielles Identifikationsbit setzt. Da diese Rahmen zu Messzwecken periodisch gesendet werden, kann jedes Sendeempfangsgerät ermitteln, welche potentiellen Sendeempfangsgeräte für direkte Verbindungen in Frage kommen. Setzt nun ausschließlich das Sendeempfangsgerät mit dem Festnetzzugang ein Identifikationsbit, kann auch die Master- bzw. Basisstation eindeutig identifiziert werden.

Außerdem berücksichtigt der Algorithmus/die Methode den Fall, dass die Basisstation ausfallen kann.

Wird die Master- bzw. Basisstation ausgeschaltet oder fällt aus einem anderen Grund aus, tritt im Prinzip der oben beschriebene Fall eines Netzwerkstarts ein. Nachdem die teilnehmenden Sendeempfangsgeräte des drahtlosen Netzwerkes den Verlust der Basisstation bemerken, werden sie selbständig ein neues Netzwerk aufbauen.

Weitere vorteilhafte Weiterbildungen der Erfindung sind in den übrigen Unteransprüchen sowie in der nachfolgenden Figurenbeschreibung angegeben.

Ein Ausführungsbeispiel der Erfindung wird im Folgenden anhand der FIGUREN 1 bis 22 erläutert. Diese zeigen:
FIGUREN 1 bis 4 ein erstes Autokonfigurationsszenario zum Erreichen einer optimalen Netzwerkperformance und Netzwerkausleuchtung für ein drahtloses, selbstorganisierendes Kommunikationsnetzwerk ohne Festnetzanbindung und mit einer einzigen Master- bzw. Basisstation beim Start des Autokonfigurationsszenarios,
FIGUREN 5 bis 10 ein zweites Autokonfigurationsszenario zum Erreichen einer optimalen Netzwerkperformance und Netzwerkausleuchtung für ein drahtloses, selbstorganisierendes Kommunikationsnetzwerk ohne Festnetzanbindung und mit zwei Master- bzw. Basisstationen beim Start des Autokonfigurationsszenarios,
FIGUREN 11, 13, 15 und 17 ein drittes Autokonfigurationsszenario zum Erreichen einer optimalen Netzwerkperformance und Netzwerkausleuchtung für ein drahtloses, selbstorganisierendes Kommunikationsnetzwerk mit Festnetzanbindung und einer einzigen Master- bzw. Basisstation, wobei die Master- bzw. Basisstation beim Start des Autokonfigurationsszenarios die Festnetzanbindung nicht besitzt,
FIGUREN 12, 14, 16 und 18 ein viertes Autokonfigurationsszenario zum Erreichen einer optimalen Netzwerkperformance und Netzwerkausleuchtung für ein drahtloses, selbstorganisierendes Kommunikationsnetzwerk mit Festnetzanbindung und einer einzigen Master- bzw. Basisstation, wobei die Master- bzw. Basisstation beim Start des Autokonfigurationsszenarios die Festnetzanbindung besitzt,
FIGUR 19 Aufbau eines Sendeempfangsgerätes mit Festnetzanbindung und einer Master- bzw. Basisstation die gemäß FIGUR 11 miteinander kommunizieren,
FIGUR 20 Aufbau einer Master- bzw. Basisstation mit Festnetzanbindung und eines Sendeempfangsgerätes die gemäß FIGUR 12 miteinander kommunizieren,
FIGUR 21 Aufbau einer Master- bzw. Basisstation mit Festnetzanbindung und eines Sendeempfangsgerätes die gemäß der FIGUREN 12, 14 und 16 miteinander kommunizieren,
FIGUR 22 Aufbau eines Sendeempfangsgerätes mit abgegebener Master- bzw. Basisstationsfunktionalität und Festnetzanbindung und eines Sendeempfangsgerätes mit übernommener Master- bzw. Basisstationsfunktionalität die gemäß FIGUR 18 miteinander kommunizieren.
FIGUREN 1 bis 4 zeigen ein erstes Autokonfigurationsszenario, bestehend aus vier Autokonfigurationsphasen, zum Erreichen einer optimalen Netzwerkperformance und Netzwerkausleuchtung für ein drahtloses, selbstorganisierendes Kommunikationsnetzwerk KNW ohne Festnetzanbindung und mit einer einzigen Master- bzw. Basisstation beim Start des Autokonfigurationsszenarios.

Das Kommunikationsnetzwerk KNW weist fünf Sendeempfangsgeräte SEG auf, die jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also ein Signalverkehr SV statt. Der Signalverkehr umfasst dabei unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 1 aus fünf Funkzellen FZ1...FZ5 gebildet, von denen in einer ersten Funkzelle FZ1 vier der fünf Sendeempfangsgeräte SEG enthalten sind. In dieser ersten Funkzelle FZ1 befindet sich des Weiteren ein erster Überschneidungsbereich ÜSB1 von drei zu der ersten Funkzelle FZ1 benachbarten Funkzellen - eine zweite Funkzelle FZ2, eine dritte Funkzelle FZ3 und eine vierte Funkzelle FZ4 -, in dem ein Sendeempfangsgerät SEG der vier Sendeempfangsgeräte SEG angeordnet ist.

Die erste Funkzelle FZ1 bildet darüber hinaus mit einer fünften Funkzelle FZ5 einen zweiten Überschneidungsbereich ÜSB2, der sich in der vierten Funkzelle FZ4 befindet. In diesem zweiten Überschneidungsbereich ÜSB2 ist das zu der vierten Funkzelle FZ4 korrespondierende Sendeempfangsgerät SEG angeordnet.

In einer ersten Phase des Autokonfigurationsszenarios (beim Start des Autokonfigurationsszenarios) gemäß der FIGUR 1 wird von den dem Kommunikationsnetzwerk KNW zugeordneten Sendeempfangsgeräten SEG einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, generell in der Lage sind, die Master- bzw. Basisstationsfunktionalität zu übernehmen. Entsprechend der zugewiesenen Funktionalität fungiert das erste Sendeempfangsgerät SEG1 als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, Erst-Sendeempfangsgeräte E-SEG.

Gemäß der FIGUR 1 ist es das zu der vierten Funkzelle FZ4 korrespondierende Sendeempfangsgerät SEG, das als erstes Sendeempfangsgerät SEG1 die Master- bzw. Basisstationsfunktionalität besitzt. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 1 dargestellte Kommunikationsnetzwerk KNW erläutert werden:
In dem Kommunikationsnetzwerk KNW hat keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es von sich aus damit beginnen, ein Kommunikationsnetzwerk aufzuspannen. Dies geschieht dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 1 durch die Sendeempfangsgeräte SEG in der vierten Funkzelle FZ4 und der fünften Funkzelle FZ5 dargestellt. Das Sendeempfangsgerät SEG in der vierten Funkzelle FZ4 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der fünften Funkzelle FZ5 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der fünften Funkzelle FZ5 das Netzwerkexistenzsignal NES nur ein einziges Mal und zwar von dem Sendeempfangsgerät SEG in der vierten Funkzelle FZ4. Das Sendeempfangsgerät SEG in der vierten Funkzelle FZ4 ist somit aus der Sicht des Sendeempfangsgerätes SEG in der fünften Funkzelle FZ5 das bereits erwähnte Primär-Sendeempfangsgerät P-SEG. Inwieweit dieses Primär-Sendeempfangsgerät P-SEG in der vierten Funkzelle FZ4 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der vierten Funkzelle FZ4 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 1 sind dies die Sendeempfangsgeräte SEG in der zweiten Funkzelle FZ2, der dritten Funkzelle FZ3 und der vierten Funkzelle FZ4, so sendet das die verschiedenen Netzwerkexistenzsignale NES empfangende Sendeempfangsgerät SEG in der ersten Funkzelle FZ1 entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sende-empfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 1 wird das Anweisungssignal AS von dem Sende-empfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der vierten Funkzelle FZ4 das Anweisungssignal AS nicht erhält. Damit ist das Sendeempfangsgerät SEG in der vierten Funkzelle FZ4 zugleich Primär-Sendeempfangsgerät P-SEG (aus der Sicht des Sendeempfangsgerätes SEG in der fünften Funkzelle FZ5) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert.

In der ersten Phase des ersten Autokonfigurationsszenarios wird außerdem von jedem Sendeempfangsgerät SEG, sowohl von dem ersten Sendeempfangsgerät SEG1 als auch von den zweiten Sendeempfangsgeräten SEG2 in regelmäßigen Zeitabständen während einer Messphase zumindest ein Teil des Signalverkehrs SV von in Kommunikationsreichweite zu dem messenden Sendeempfangsgerät SEG befindlichen Sendeempfangsgeräten SEG erfasst. Anhand dieses erfassten Signalverkehrs SV wird die Empfangbarkeit der Sendeempfangsgeräte SEG festgestellt und es werden von jedem Sendeempfangsgerät SEG jeweils vier Hinweisinformationen HWI über die insgesamt empfangenen Sendeempfangsgeräte SEG generiert und gespeichert.

So werden eine erste Hinweisinformation HWI1, mit der die Anzahl der empfangenen Sendeempfangsgeräte SEG angegeben wird, eine zweite Hinweisinformation HWI2, die die Empfangsqualität angibt, mit der die empfangenen Sendeempfangsgeräte SEG jeweils empfangen werden, eine dritte Hinweisinformation HWI3, mit der die Existenz eines privilegierten Sendeempfangsgerätes unter den empfangenen Sendeempfangsgeräten SEG angegeben wird, und eine vierte Hinweisinformation HWI4, mit der die Gerätetypen der empfangenen Sendeempfangsgeräte SEG angegeben werden, generiert und gespeichert.

Alternativ ist es auch möglich weniger oder mehr als vier Hinweisinformationen HWI zu generieren und zu speichern. So ist es beispielsweise möglich, sich nur auf die erste Hinweisinformation HWI1 zu beschränken.

In einer zweiten Phase des ersten Autokonfigurationsszenarios gemäß der FIGUR 2, in der von dem Kommunikationsnetzwerk KNW in der FIGUR 1 nur die fünf Sendeempfangsgeräte SEG und die vierte Funkzelle FZ4 dargestellt sind, wird von dem Sendeempfangsgerät SEG mit der Master- bzw. Basisstationsfunktionalität in der vierten Funkzelle FZ4, dem ersten Sendeempfangsgerät SEG1, eine Verteilnachricht VN ausgesendet, mit der die zweiten Sendeempfangsgeräte SEG2, die diese Verteilnachricht VN empfangen können, jeweils aufgefordert werden, die von diesen Geräten generierten Hinweisinformationen HWI1...HWI4 an das erste Sendeempfangsgerät SEG1 zu senden. Die zweiten Sendeempfangsgeräte SEG2, die diesbezüglich aufgefordert werden, sind die beiden sich ebenfalls in der vierten Funkzelle FZ4 befindenden oder aufhaltenden Sendeempfangsgeräte SEG, die zu der ersten Funkzelle FZ1 und fünften Funkzelle FZ5 in der FIGUR 1 korrespondieren. Nach Erhalt der Verteilnachricht VN senden die aufgeforderten zweiten Sendeempfangsgeräte SEG2 ihre generierten Hinweisinformationen HWI1...HWI4 an das erste Sendeempfangsgerät SEG1. Das erste Sendeempfangsgerät SEG1 ermittelt im Anschluss daran anhand der selbst generierten und der von den genannten zweiten Sendeempfangsgeräten SEG2 übertragenen Hinweisinformationen HWI1...HWI4, welches der genannten zweiten Sendeempfangsgeräte SEG2 im Vergleich zu dem ersten Sendeempfangsgerät SEG1 am besten geeignet ist, die Master- bzw. Basisstationsfunktionalität von dem ersten Sendeempfangsgerät SEG1 zu übernehmen.

In einer dritten Phase des ersten Autokonfigurationsszenarios gemäß der FIGUR 3, in der wie in der FIGUR 2 wieder von dem Kommunikationsnetzwerk KNW in der FIGUR 1 nur die fünf Sendeempfangsgeräte SEG und die vierte Funkzelle FZ4 dargestellt sind, wird von dem Sendeempfangsgerät SEG mit der Master- bzw. Basisstationsfunktionalität in der vierten Funkzelle FZ4, dem ersten Sendeempfangsgerät SEG1, nachdem es gemäß der FIGUR 2 die eigenen und empfangenen Hinweisinformationen HWI1...HWI4 ausgewertet und das für die Funktionalitätsübernahme am besten geeignete zweite Sendeempfangsgerät SEG2 ermittelt hat, eine Steuerungsinformation STI generiert und diese an dieses am besten geeignete zweite Sendeempfangsgerät SEG2, dem gemäß der FIGUR 1 zur ersten Funkzelle FZ1 korrespondierenden Sendeempfangsgerät SEG, gesendet. Das zur ersten Funkzelle FZ1 korrespondierende zweite Sendeempfangsgerät SEG2 befindet sich wie das erste Sendeempfangsgerät SEG1 in der vierten Funkzelle FZ4, weshalb die Steuerungsinformation STI unmittelbar übertragen werden kann. Mit der Steuerungsinformation STI wird das zur ersten Funkzelle FZ1 korrespondierende zweite Sendeempfangsgerät SEG2 darauf hingewiesen, dass es die Master- und Basisstationsfunktionalität übernehmen soll.

Es sei an dieser Stelle der Form halber erwähnt, dass das Aussenden der Steuerungsinformation STI durch das erste Sendeempfangsgerät SEG1 unterbleibt, wenn keines der zweiten Sendeempfangsgeräte SEG2 im Vergleich zu dem ersten Sendeempfangsgerät SEG1 besser geeignet ist.

In einer vierten Phase des ersten Autokonfigurationsszenarios gemäß der FIGUR 4, in der von dem Kommunikationsnetzwerk KNW in der FIGUR 1 nur die fünf Sendeempfangsgeräte SEG und die erste Funkzelle FZ1 dargestellt sind, kommt es zum Wechsel des Sendeempfangsgerätes SEG, das die Master- bzw. Basisstationsfunktionalität besitzt. Die Master- bzw. Basisstationsfunktionalität geht dabei von dem Sendeempfangsgerät SEG der vierten Funkzelle FZ4, dem bisherigen ersten Sendeempfangsgerät SEG1 (vgl. FIGUREN 1 bis 3), auf das zur ersten Funkzelle FZ1 korrespondierende Sendeempfangsgerät SEG, das neue erste Sendeempfangsgerät SEG1, über.

Die in den FIGUREN 1 bis 4 dargestellten und beschriebenen Autokonfigurationsphasen können zu jeder Zeit wiederholt werden. Auf diese Weise kann auf Änderungen in dem Kommunikationsnetzwerk, z.B. was die Anzahl der beteiligten Sendeempfangsgeräte betrifft, flexibel im Sinne einer dynamischen Anpassung reagiert und immer eine optimale Netzwerkperformance und Netzwerkausleuchtung erreicht werden.

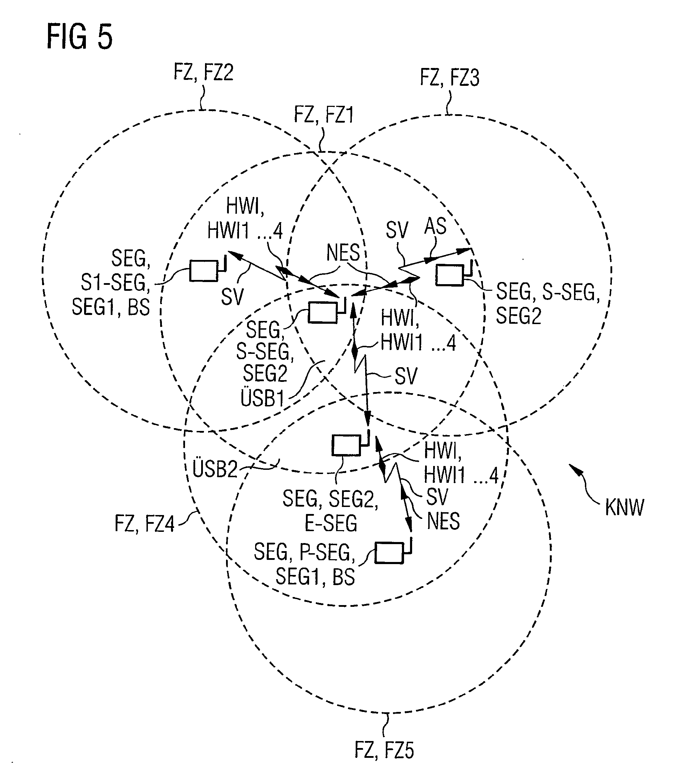

FIGUREN 5 bis 10 zeigen ein zweites Autokonfigurationsszenario, bestehend aus wieder vier Autokonfigurationsphasen wie beim ersten Szenario, zum Erreichen einer optimalen Netzwerkperformance und Netzwerkausleuchtung für ein drahtloses, selbstorganisierendes Kommunikationsnetzwerk ohne Festnetzanbindung und mit zwei Master- bzw. Basisstationen beim Start des Autokonfigurationsszenarios.

Das Kommunikationsnetzwerk KNW weist wieder fünf Sendeempfangsgeräte SEG auf, die jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG wieder entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird wieder vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 5 wieder aus fünf Funkzellen FZ1...FZ5 gebildet, von denen wieder, in einer ersten Funkzelle FZ1 vier der fünf Sendeempfangsgeräte SEG enthalten sind. In dieser ersten Funkzelle FZ1 befindet sich des Weiteren wieder ein erster Überschneidungsbereich ÜSB1 von wieder drei zu der ersten Funkzelle FZ1 benachbarten Funkzellen - eine zweite Funkzelle FZ2, eine dritte Funkzelle FZ3 und eine vierte Funkzelle FZ4 -, in dem ein Sendeempfangsgerät SEG der vier Sendeempfangsgeräte SEG angeordnet ist.

Die erste Funkzelle FZ1 bildet darüber hinaus wieder mit einer fünften Funkzelle FZ5 einen zweiten Überschneidungsbereich ÜSB2, der sich in der vierten Funkzelle FZ4 befindet.

In diesem zweiten Überschneidungsbereich ÜSB2 ist wieder das zu der vierten Funkzelle FZ4 korrespondierende Sendeempfangsgerät SEG angeordnet.

In einer ersten Phase des Autokonfigurationsszenarios (beim Start des Autokonfigurationsszenarios) gemäß der FIGUR 5 werden von den dem Kommunikationsnetzwerk KNW zugeordneten Sendeempfangsgeräten SEG zwei ersten Sendeempfangsgeräten SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, generell in der Lage sind, die Master- bzw. Basisstationsfunktionalität zu übernehmen. Entsprechend der zugewiesenen Funktionalität fungiert das erste Sendeempfangsgerät SEG1 als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, Erst-Sendeempfangsgeräte E-SEG.

Gemäß der FIGUR 5 sind es die zu der zweiten Funkzelle FZ2 und der fünften Funkzelle FZ5 korrespondierenden Sendeempfangsgeräte SEG, die als erste Sendeempfangsgeräte SEG1 die Master- bzw. Basisstationsfunktionalität besitzen. Die Sendeempfangsgeräte SEG der zweiten und fünften Funkzelle FZ2, FZ5 können die Funktionalität wieder entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 5 dargestellte Kommunikationsnetzwerk KNW erläutert werden:
In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG ein Primär-Sendeempfangsgerät P-SEG, dann besitzt das Primär-Sendeempfangsgerät P-SEG aus der Sicht des empfangenden Sendeempfangsgerätes SEG gemäß der Zuweisungsprozedur die erweiterte Funktionalität, also die Master- bzw. Basisstationsfunktionalität, und ist somit das erste Sende-empfangsgerät SEG1, das als Basisstation BS fungiert.

Dieser Fall ist in der FIGUR 5 durch die Sendeempfangsgeräte SEG in der vierten Funkzelle FZ4 und der fünften Funkzelle FZ5 dargestellt. Das Sendeempfangsgerät SEG in der fünften Funkzelle FZ5 "broadcastet" das Netzwerkexistenzsignal NES. Dieses Netzwerkexistenzsignal NES kann gemäß dem Funkversorgungsbereich des Kommunikationsnetzwerkes KNW nur von dem Sendeempfangsgerät SEG in der vierten Funkzelle FZ4 empfangen werden. Das Sendeempfangsgerät SEG in der vierten Funkzelle FZ4 erhält. da es von dem ebenfalls benachbarten Sendeempfangsgerät SEG in der ersten Funkzelle FZ1 kein Netzwerkexistenzsignal NES empfängt, das Netzwerkexistenzsignal NES nur ein einziges Mal und zwar von dem Sendeempfangsgerät SEG in der fünften Funkzelle FZ5. Das Sendeempfangsgerät SEG in der fünften Funkzelle FZ5 ist somit aus der Sicht des Sendeempfangsgerätes SEG in der vierten Funkzelle FZ4 das bereits erwähnte Primär-Sendeempfangsgerät P-SEG, das zudem auch bereits die Master- bzw. Basisstationsfunktionalität besitzt und somit das erste Sendeempfangsgerät SEG1 ist, weil weder ein weiteres Sendeempfangsgerät SEG zu dem Sendeempfangsgerät SEG in der fünften Funkzelle FZ5 benachbart ist noch das Sendeempfangsgerät SEG in der ersten Funkzelle FZ1 ein Netzwerkexistenzsignal NES an das Sendeempfangsgerät SEG in der vierten Funkzelle FZ4 gesendet hat.

Wenn ein das Netzwerkexistenzsignal NES empfangende Sendeempfangsgerät SEG - gemäß der FIUGR 5 ist dies das Sendeempfangsgerät SEG in der ersten Funkzelle FZ1 - statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein Netzwerkexistenzsignal NES empfängt - gemäß der FIUGR 5 sind dies die Sendeempfangsgeräte SEG in der zweiten Funkzelle FZ2 und der dritten Funkzelle FZ3, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sende-empfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 5 wird das Anweisungssignal AS von dem Sende-empfangsgerät SEG in der ersten Funkzelle FZ1 an das Sende-empfangsgerät SEG in der dritten Funkzellen FZ3 gesendet, während das Sende-Empfangsgerät SEG in der zweiten Funkzelle FZ2 das Anweisungssignal AS nicht erhält. Damit ist das Sendeempfangsgerät SEG in der zweiten Funkzelle FZ2 erstes Sekundär-Sendeempfangsgerät S1-SEG (aus der Sicht des Sendeempfangsgerätes SEG in der ersten Funkzelle FZ1), das neben dem Sendeempfangsgerät SEG in der fünften Funkzelle FZ5 gemäß der Zuweisungsprozedur die Master- bzw. Basisstationsfunktionalität besitzt und damit als Basisstation BS fungiert.

In der ersten Phase des zweiten Autokonfigurationsszenarios wird außerdem wieder von jedem Sendeempfangsgerät SEG, sowohl von dem ersten Sendeempfangsgerät SEG1 als auch von den zweiten Sendeempfangsgeräten SEG2 in regelmäßigen Zeitabständen während einer Messphase zumindest ein Teil des Signalverkehrs SV von in Kommunikationsreichweite zu dem messenden Sendeempfangsgerät SEG befindlichen Sendeempfangsgeräten SEG erfasst. Anhand dieses erfassten Signalverkehrs SV wird wieder die Empfangbarkeit der Sendeempfangsgeräte SEG festgestellt und es werden wieder von jedem Sendeempfangsgerät SEG jeweils vier Hinweisinformationen HWI über die insgesamt empfangenen Sendeempfangsgeräte SEG generiert und gespeichert.

So werden wieder eine erste Hinweisinformation HWI1, mit der die Anzahl der empfangenen Sendeempfangsgeräte SEG angegeben wird, eine zweite Hinweisinformation HWI2, die die Empfangsqualität angibt, mit der die empfangenen Sendeempfangsgeräte SEG jeweils empfangen werden, eine dritte Hinweisinformation HWI3, mit der die Existenz eines privilegierten Sendeempfangsgerätes unter den empfangenen Sendeempfangsgeräten SEG angegeben wird, und eine vierte Hinweisinformation HWI4, mit der die Gerätetypen der empfangenen Sendeempfangsgeräte SEG angegeben werden, generiert und gespeichert.

Alternativ ist es auch wieder möglich weniger oder mehr als vier Hinweisinformationen HWI zu generieren und zu speichern. So ist es beispielsweise möglich, sich nur auf die erste Hinweisinformation HWI1 zu beschränken.

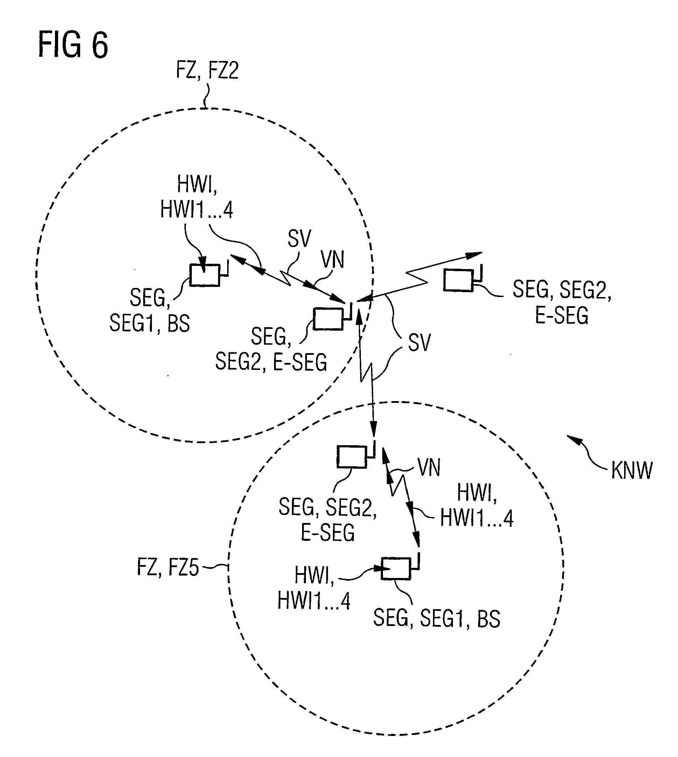

In einer zweiten Phase des zweiten Autokonfigurationsszenarios gemäß der FIGUR 6, in der von dem Kommunikationsnetzwerk KNW in der FIGUR nur die fünf Sendeempfangsgeräte SEG, die zweite Funkzelle FZ2 und die fünfte Funkzelle FZ5 dargestellt sind, wird von den Sendeempfangsgeräten SEG mit der Master- bzw. Basisstationsfunktionalität in der zweiten und fünften Funkzelle FZ2, FZ5, den ersten Sendeempfangsgeräten SEG1, jeweils eine Verteilnachricht VN ausgesendet, mit der die zweiten Sendeempfangsgeräte SEG2, die diese Verteilnachricht VN empfangen können, jeweils aufgefordert werden, die von diesen Geräten generierten Hinweisinformationen HWI1...HWI4 an das jeweilige erste Sendeempfangsgerät SEG1 zu senden. Die zweiten Sendeempfangsgeräte SEG2, die diesbezüglich jeweils aufgefordert werden, sind bezüglich der zweiten Funkzelle FZ2 das sich ebenfalls in dieser Funkzelle befindende oder aufhaltende, zur ersten Funkzelle FZ1 korrespondierende Sendeempfangsgerät SEG und bezüglich der fünften Funkzelle FZ2 das sich ebenfalls in dieser Funkzelle befindende oder aufhaltende, zur vierten Funkzelle FZ1 korrespondierende Sendeempfangsgerät SEG. Nach Erhalt der Verteilnachricht VN senden die jeweils aufgeforderten zweiten Sendeempfangsgeräte SEG2 ihre generierten Hinweisinformationen HWI1...HWI4 an das jeweilige erste Sendeempfangsgerät SEG1 in der zweiten und fünften Funkzelle FZ2, FZ5. Die beiden ersten Sendeempfangsgeräte SEG1 ermitteln im Anschluss daran anhand der jeweils selbst generierten und der von den genannten zweiten Sendeempfangsgeräten SEG2 jeweils übertragenen Hinweisinformationen HWI1...HWI4, ob das jeweils betreffende zweite Sendeempfangsgerät SEG2 im Vergleich zu dem jeweils ersten Sendeempfangsgerät SEG1 besser geeignet ist, die Master- bzw. Basisstationsfunktionalität von dem jeweiligen ersten Sendeempfangsgerät SEG1 zu übernehmen.

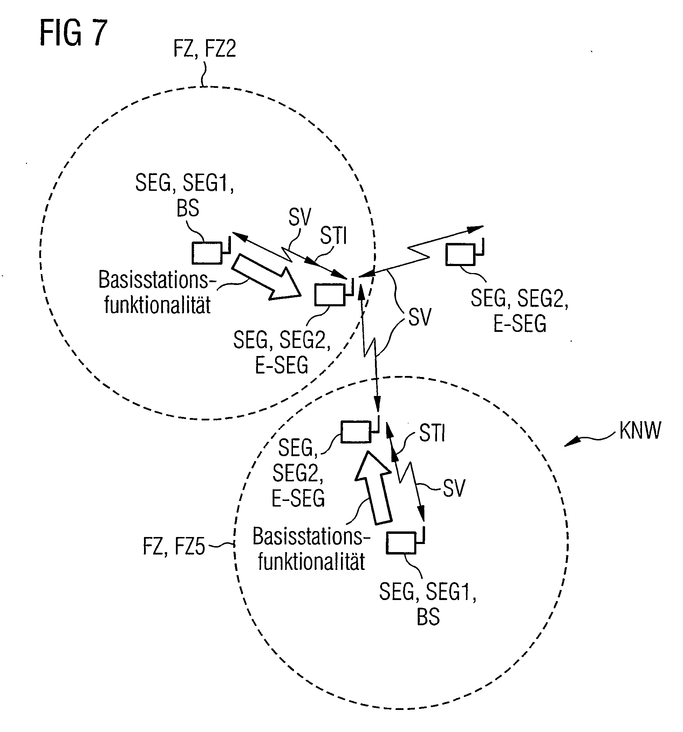

In einer dritten Phase des zweiten Autokonfigurationsszenarios gemäß der FIGUR 7, in der wie in der FIGUR 6 wieder von dem Kommunikationsnetzwerk KNW in der FIGUR 5 nur die fünf Sendeempfangsgeräte SEG, die zweite Funkzelle FZ2 und die fünfte Funkzelle FZ5 dargestellt sind, wird von den Sendeempfangsgeräten SEG mit der Master- bzw. Basisstationsfunktionalität in der zweiten und fünften Funkzelle FZ2, FZ5, den ersten Sendeempfangsgeräten SEG1, nachdem diese gemäß der FIGUR 6 jeweils die eigenen und empfangenen Hinweisinformationen HWI1...HWI4 ausgewertet und jeweils das für die Funktionalitätsübernahme am besten geeignete zweite Sendeempfangsgerät SEG2 ermittelt haben, jeweils eine Steuerungsinformation STI generiert und diese jeweils an das jeweils am besten geeignete zweite Sendeempfangsgerät SEG2, dem gemäß der FIGUR 5 zur ersten Funkzelle FZ1 korrespondierenden Sendeempfangsgerät SEG bzw. dem gemäß der FIGUR 5 zur vierten Funkzelle FZ4 korrespondierenden Sendeempfangsgerät SEG, gesendet. Das zur ersten Funkzelle FZ1 korrespondierende zweite Sendeempfangsgerät SEG2 befindet sich wie das erste Sendeempfangsgerät SEG1 in der zweiten Funkzelle FZ2, während das zur vierten Funkzelle FZ4 korrespondierende zweite Sendeempfangsgerät SEG2 sich, wie das erste Sendeempfangsgerät SEG1, in der fünften Funkzelle FZ5 befindet, so dass die Steuerungsinformation STI jeweils unmittelbar übertragen werden kann. Mit der Steuerungsinformation STI werden das zur ersten Funkzelle FZ1 korrespondierende zweite Sendeempfangsgerät SEG2 und das das zur vierten Funkzelle FZ4 korrespondierende zweite Sende-empfangsgerät SEG2 jeweils darauf hingewiesen, dass es die Master- und Basisstationsfunktionalität übernehmen soll.

Es sei an dieser Stelle der Form halber erwähnt, dass das Aussenden der Steuerungsinformation STI durch das jeweilige erste Sendeempfangsgerät SEG1 unterbleibt, wenn keines der zweiten Sendeempfangsgeräte SEG2 im Vergleich zu dem jeweils ersten Sendeempfangsgerät SEG1 besser geeignet ist.

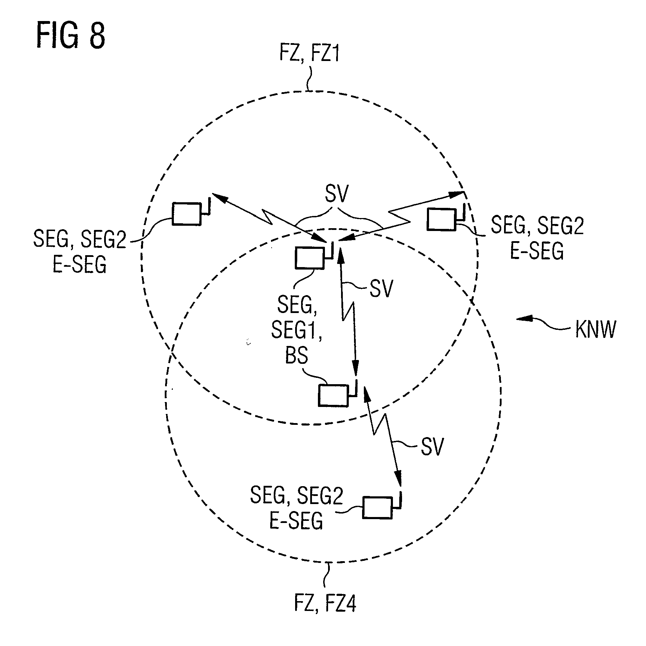

In einer vierten Phase des zweiten Autokonfigurationsszenarios gemäß der FIGUR 8, in der von dem Kommunikationsnetzwerk KNW in der FIGUR 5 nur die fünf Sendeempfangsgeräte SEG, die erste Funkzelle FZ1 und die vierte Funkzelle FZ4 dargestellt sind, kommt es zum Doppel-Wechsel von Sendeempfangsgeräten SEG, die die Master- bzw. Basisstationsfunktionalität besitzen. Die Master- bzw. Basisstationsfunktionalität geht dabei sowohl von dem Sendeempfangsgerät SEG der zweiten Funkzelle FZ2, dem bisherigen ersten Sendeempfangsgerät SEG1 (vgl. FIGUREN 5 bis 7), auf das zur ersten Funkzelle FZ1 korrespondierende Sendeempfangsgerät SEG, das neue erste Sendeempfangsgerät SEG1, als auch von dem Sendeempfangsgerät SEG der fünften Funkzelle FZ5, dem bisherigen ersten Sendeempfangsgerät SEG1 (vgl. FIGUREN 5 bis 7), auf das zur vierten Funkzelle FZ4 korrespondierende Sendeempfangsgerät SEG, das neue erste Sendeempfangsgerät SEG1, über.

Die in den FIGUREN 5 bis 8 dargestellten und beschriebenen Autokonfigurationsphasen können zu jeder Zeit wiederholt werden. Auf diese Weise kann auf Änderungen in dem Kommunikationsnetzwerk, z.B. was die Anzahl der beteiligten Sendeempfangsgeräte betrifft, flexibel im Sinne einer dynamischen Anpassung reagiert und immer eine optimale Netzwerkperformance und Netzwerkausleuchtung erreicht werden.

Darüber hinaus kann die in der FIGUR 8 dargestellte Konfiguration des Kommunikationsnetzwerkes KNW mit den zwei Master- bzw. Basisstationen BS noch dahingehend vereinfacht bzw. optimiert werden , dass es nur noch eine einzige Master- bzw. Basisstation BS für das gesamte Kommunikationsnetzwerk gibt. Zu diesem Zweck übergibt entweder (Fall I) das als Master- bzw. Basisstation fungierende erste Sendeempfangsgerät SEG1 in der vierten Funkzelle FZ4 seine gerade erhaltene Master- bzw. Basisstationsfunktionalität an das ebenfalls als Master- bzw. Basisstation fungierende erste Sendeempfangsgerät SEG1 in der ersten Funkzelle FZ1 oder (Fall II) das als Master- bzw. Basisstation fungierende erste Sendeempfangsgerät SEG1 in der ersten Funkzelle FZ1 seine gerade erhaltene Master- bzw. Basisstationsfunktionalität an das ebenfalls als Master- bzw. Basisstation fungierende erste Sendeempfangsgerät SEG1 in der vierten Funkzelle FZ4.

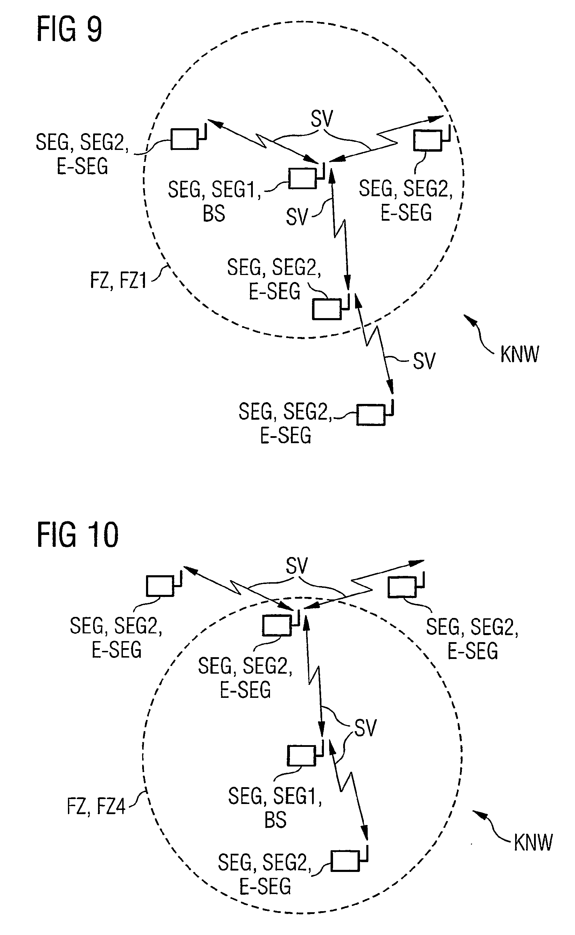

Im Fall I liegt eine Konfiguration des Kommunikationsnetzwerkes KNW vor, wie sie in der FIGUR 9 dargestellt ist, während im Fall 2 eine Konfiguration des Kommunikationsnetzwerkes KNW vorliegt, wie sie in der FIGUR 10 dargestellt ist. Die Darstellung des Kommunikationsnetwerkes KNW in der FIGUR 9 entspricht exakt der Netzwerkdarstellung in der FIGUR 4, die die vierte Phase des ersten Autokonfigurationsszenarios zeigt. Demgegenüber entspricht die Darstellung des Kommunikationsnetwerkes KNW in der FIGUR 10 dem Grundzustand der Netzwerkdarstellung in der FIGUR 2, die die zweite Phase des ersten Autokonfigurationsszenarios zeigt, mit Ausnahme der dort gezeigten Übertragung der Verteilnachricht VN und der Hinweisinformationen HWI1...HWI4.

Mit anderen Worten:
Kommt es in der FIGUR 10, wie der in der FIGUR 2, zu der dort gezeigten Übertragung der Verteilnachricht VN und der Hinweisinformationen HWI1...HWI4, so liegt auch im Fall II eine exakte Übereinstimmung zwischen beiden FIGUREN vor.

In beiden Fällen ist somit im Zuge der vorstehend erwähnten Vereinfachung das zweite Autokonfigurationsszenario auf das erste Autokonfigurationsszenario zurückgeführt worden.

FIGUREN 11, 13, 15, 17 zeigen ein drittes Autokonfigurationsszenario, wieder bestehend aus vier Autokonfigurationsphasen, zum Erreichen einer optimalen Netzwerkperformance und Netzwerkausleuchtung für ein drahtloses, selbstorganisierendes Kommunikationsnetzwerk KNW mit Festnetzanbindung und mit einer einzigen Master- bzw. Basisstation, wobei die Master- bzw. Basisstation beim Start des Autokonfigurationsszenarios die Festnetzanbindung nicht besitzt.

Das Kommunikationsnetzwerk KNW weist wieder fünf Sendeempfangsgeräte SEG auf, die wieder jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 11 wieder aus fünf Funkzellen FZ1...FZ5 gebildet, von denen in einer ersten Funkzelle FZ1 alle fünf Sendeempfangsgeräte SEG enthalten sind. In dieser ersten Funkzelle FZ1 befindet sich des Weiteren ein dritter Überschneidungsbereich ÜSB3 von vier zu der ersten Funkzelle FZ1 benachbarten Funkzellen - eine zweite Funkzelle FZ2, eine dritte Funkzelle FZ3, eine vierte Funkzelle FZ4 und eine fünfte Funkzelle FZ5 -, in dem ein Sendeempfangsgerät SEG der vier Sendeempfangsgeräte SEG angeordnet ist.

Die erste Funkzelle FZ1 bildet darüber hinaus mit der vierten und fünften Funkzelle FZ4, FZ5 einen vierten Überschneidungsbereich ÜSB4, der sich ebenfalls in der ersten Funkzelle FZ1 befindet. In diesem vierten Überschneidungsbereich ÜSB4 sind das zu der ersten Funkzelle FZ1 korrespondierende Sendeempfangsgerät SEG, das zu der vierten Funkzelle FZ4 korrespondierende Sendeempfangsgerät SEG und das zu der fünften Funkzelle FZ5 korrespondierende Sendeempfangsgerät SEG angeordnet.

In einer ersten Phase des dritten Autokonfigurationsszenarios (beim Start des Autokonfigurationsszenarios) gemäß der FIGUR 11 wird von den dem Kommunikationsnetzwerk KNW zugeordneten Sendeempfangsgeräten SEG wieder einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, wieder generell in der Lage sind, die Master- bzw. Basisstationsfunktionalität zu übernehmen. Entsprechend der zugewiesenen Funktionalität fungiert das erste Sendeempfangsgerät SEG1 wieder als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, wieder Erst-Sendeempfangsgeräte E-SEG.

Das Kommunikationsnetzwerk KNW in der FIGUR 11 unterscheidet sich von den bisherigen Kommunikationsnetzwerken KNW in den FIGUREN 1 und 5 dadurch, dass das zu der fünften Funkzelle FZ5 korrespondierende Sendeempfangsgerät SEG als drittes Sendeempfangsgerät SEG3 neben herkömmlichen Festnetzstationen FNS1...FNS3, von denen eine erste Festnetzstation FNS1 in der fünften Funkzelle FZ5 und eine zweite und dritte Festnetzstation FNS2, FNS3 sowohl in der vierten Funkzelle FZ4 als auch in der fünften Funkzelle FZ5 enthalten sind, über eine Festnetzanbindung mit einem Festnetz FN verbunden ist.

Gemäß der FIGUR 11 ist es das zu der vierten Funkzelle FZ4 korrespondierende Sendeempfangsgerät SEG, das als erstes Sendeempfangsgerät SEG1 die Master- bzw. Basisstationsfunktionalität besitzt. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 11 dargestellte Kommunikationsnetzwerk KNW erläutert werden:
In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht wieder dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG wieder ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 11 durch die Sendeempfangsgeräte SEG in der vierten Funkzelle FZ4 und der fünften Funkzelle FZ5 dargestellt. Das Sendeempfangsgerät SEG in der vierten Funkzelle FZ4 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der fünften Funkzelle FZ5 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der fünften Funkzelle FZ5 das Netzwerkexistenzsignal NES nur ein einziges Mal und zwar von dem Sendeempfangsgerät SEG in der vierten Funkzelle FZ4. Das Sendeempfangsgerät SEG in der vierten Funkzelle FZ4 ist somit aus der Sicht des Sendeempfangsgerätes SEG in der fünften Funkzelle FZ5 das bereits erwähnte Primär-Sendeempfangsgerät P-SEG. Inwieweit dieses Primär-Sendeempfangsgerät P-SEG in der vierten Funkzelle FZ4 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der vierten Funkzelle FZ4 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 11 sind dies die Sendeempfangsgeräte SEG in der zweiten Funkzelle FZ2, der dritten Funkzelle FZ3 und der vierten Funkzelle FZ4, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sende-empfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 11 wird das Anweisungssignal AS von dem Sendeempfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der vierten Funkzelle FZ4 das Anweisungssignal AS nicht erhält. Damit ist das Sendeempfangsgerät SEG in der vierten Funkzelle FZ4 zugleich Primär-Sendeempfangsgerät P-SEG (aus der Sicht des Sendeempfangsgerätes SEG in der fünften Funkzelle FZ5) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert.

In der ersten Phase des ersten Autokonfigurationsszenarios wird außerdem wieder von jedem Sendeempfangsgerät SEG, sowohl von dem ersten Sendeempfangsgerät SEG1 als auch von den zweiten Sendeempfangsgeräten SEG2 in regelmäßigen Zeitabständen während einer Messphase zumindest ein Teil des Signalverkehrs SV von in Kommunikationsreichweite zu dem messenden Sendeempfangsgerät SEG befindlichen Sendeempfangsgeräten SEG erfasst. Anhand dieses erfassten Signalverkehrs SV wird wieder die Empfangbarkeit der Sendeempfangsgeräte SEG festgestellt und es werden wieder von jedem Sendeempfangsgerät SEG jeweils vier Hinweisinformationen HWI über die insgesamt empfangenen Sendeempfangsgeräte SEG generiert und gespeichert.

So werden eine erste Hinweisinformation HWI1, mit der die Anzahl der empfangenen Sendeempfangsgeräte SEG angegeben wird, eine zweite Hinweisinformation HWI2, die die Empfangsqualität angibt, mit der die empfangenen Sendeempfangsgeräte SEG jeweils empfangen werden, eine dritte Hinweisinformation HWI3, mit der die Existenz eines privilegierten Sendeempfangsgerätes unter den empfangenen Sendeempfangsgeräten SEG angegeben wird, und eine vierte Hinweisinformation HWI4, mit der die Gerätetypen der empfangenen Sendeempfangsgeräte SEG angegeben werden, generiert und gespeichert.

Alternativ ist es auch wieder möglich weniger oder mehr als vier Hinweisinformationen HWI zu generieren und zu speichern. So ist es beispielsweise möglich, sich nur auf die erste Hinweisinformation HWI1 zu beschränken.

In dieser ersten Phase des dritten Autokonfigurationsszenarios gemäß der FIGUR 11 wird außerdem von dem zu der fünften Funkzelle FZ5 korrespondierenden, mit dem Festnetz FN verbundenen Sendeempfangsgerät SEG - dem zweiten und zugleich dritten Sendeempfangsgerät SEG2, SEG3 - eine spezielle Identifikationsinformation IDI ausgesendet, mit der es die in unmittelbarer Kommunikationsreichweite befindlichen Sendeempfangsgeräte SEG - gemäß der FIGUR 11 sind dies die sich in der fünften Funkzelle FZ5 befindenden oder aufhaltenden Sendeempfangsgeräte SEG, also auch das erste Sendeempfangsgerät SEG1, das die Master- bzw. Basisstationsfunktionalität besitzt - über den vorhandenen Festnetzzugang informiert.

Von dem ersten Sendeempfangsgerät SEG1 empfängt das den Festnetzzugang aufweisende dritte Sendeempfangsgerät SEG3, vorzugsweise im Gegenzug, eine von dem ersten Sendeempfangsgerät SEG1 gesendete Netzwerkzustandsinformation NZI, mit der das dritte Sendeempfangsgerät SEG3 aktuelle Konfigurationsdaten über das Kommunikationsnetzwerk KNW und der diesem zugeordnete Sendeempfangsgeräte SEG erhält.

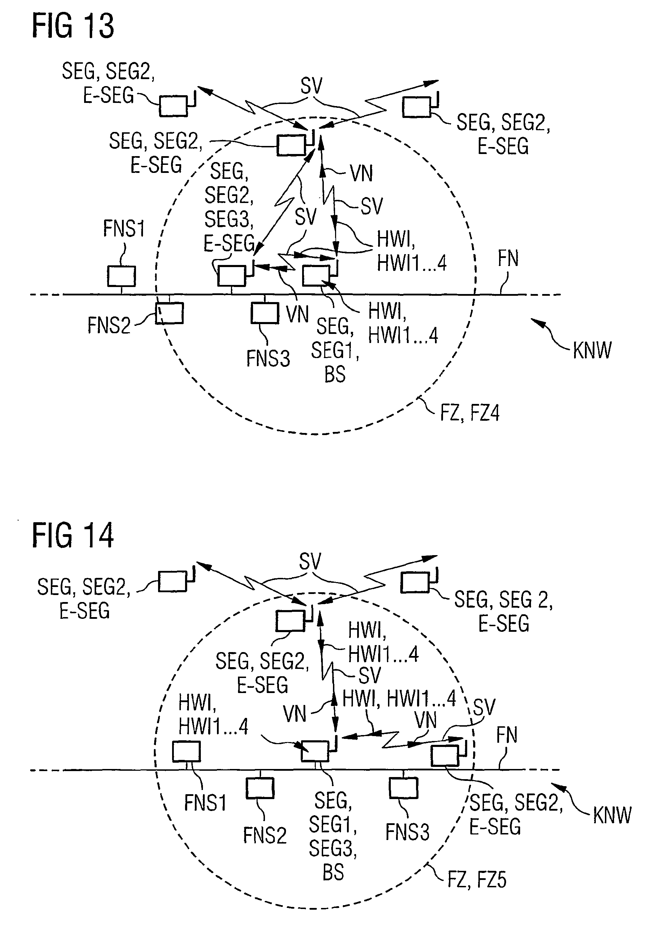

In einer zweiten Phase des dritten Autokonfigurationsszenarios gemäß der FIGUR 13, in der von dem Kommunikationsnetzwerk KNW in der FIGUR 11 nur die fünf Sendeempfangsgeräte SEG, die Festnetzstationen FNS1...FNS3 einschließlich des Festnetzanschlusses zum Festnetz FN und die vierte Funkzelle FZ4 dargestellt sind, wird von dem Sendeempfangsgerät SEG mit der Master- bzw. Basisstationsfunktionalität in der vierten Funkzelle FZ4, dem ersten Sendeempfangsgerät SEG1, wieder eine Verteilnachricht VN ausgesendet, mit der die zweiten Sendeempfangsgeräte SEG2, die diese Verteilnachricht VN empfangen können, jeweils aufgefordert werden, die von diesen Geräten generierten Hinweisinformationen HWI1...HWI4 an das erste Sendeempfangsgerät SEG1 zu senden. Die zweiten Sendeempfangsgeräte SEG2, die diesbezüglich aufgefordert werden, sind die beiden sich ebenfalls in der vierten Funkzelle FZ4 befindenden oder aufhaltenden Sendeempfangsgeräte SEG, die zu der ersten Funkzelle FZ1 und fünften Funkzelle FZ5 in der FIGUR 11 korrespondieren. Nach Erhalt der Verteilnachricht VN senden die aufgeforderten zweiten Sendeempfangsgeräte SEG2 ihre generierten Hinweisinformationen HWI1...HWI4 wieder an das erste Sendeempfangsgerät SEG1. Das erste Sendeempfangsgerät SEG1 ermittelt im Anschluss daran anhand der selbst generierten und der von den genannten zweiten Sendeempfangsgeräten SEG2 übertragenen Hinweisinformationen HWI1...HWI4 wieder, welches der genannten zweiten Sendeempfangsgeräte SEG2 im Vergleich zu dem ersten Sendeempfangsgerät SEG1 am besten geeignet ist, die Master- bzw. Basisstationsfunktionalität von dem ersten Sendeempfangsgerät SEG1 zu übernehmen.

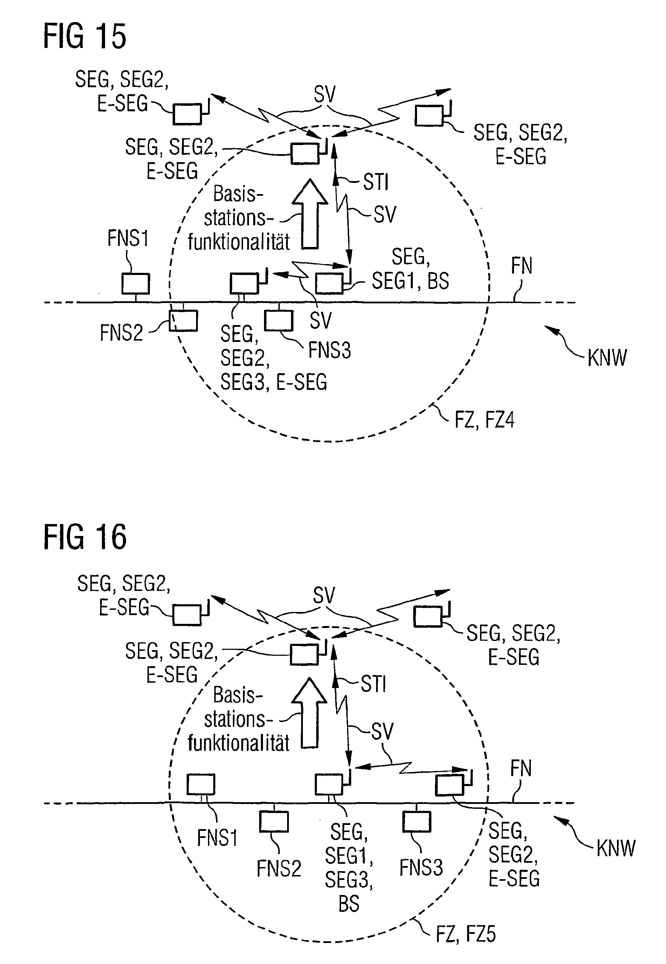

In einer dritten Phase des dritten Autokonfigurationsszenarios gemäß der FIGUR 15, in der wie in der FIGUR 13 wieder von dem Kommunikationsnetzwerk KNW in der FIGUR 11 nur die fünf Sendeempfangsgeräte SEG, die Festnetzstationen FNS1...FNS3 einschließlich des Festnetzanschlusses zum Festnetz FN und die vierte Funkzelle FZ4 dargestellt sind, wird wieder von dem Sendeempfangsgerät SEG mit der Master- bzw. Basisstationsfunktionalität in der vierten Funkzelle FZ4, dem ersten Sendeempfangsgerät SEG1, nachdem es gemäß der FIGUR 13 die eigenen und empfangenen Hinweisinformationen HWI1...HWI4 ausgewertet und das für die Funktionalitätsübernahme am besten geeignete zweite Sendeempfangsgerät SEG2 ermittelt hat, eine Steuerungsinformation STI generiert und diese an dieses am besten geeignete zweite Sendeempfangsgerät SEG2, dem gemäß der FIGUR 11 zur ersten Funkzelle FZ1 korrespondierenden Sendeempfangsgerät SEG, gesendet. Das zur ersten Funkzelle FZ1 korrespondierende zweite Sendeempfangsgerät SEG2 befindet sich wie das erste Sendeempfangsgerät SEG1 in der vierten Funkzelle FZ4, weshalb die Steuerungsinformation STI unmittelbar übertragen werden kann. Mit der Steuerungsinformation STI wird das zur ersten Funkzelle FZ1 korrespondierende zweite Sendeempfangsgerät SEG2 darauf hingewiesen, dass es die Master- und Basisstationsfunktionalität übernehmen soll.

Es sei an dieser Stelle wieder der Form halber erwähnt, dass das Aussenden der Steuerungsinformation STI durch das erste Sendeempfangsgerät SEG1 unterbleibt, wenn keines der zweiten Sendeempfangsgeräte SEG2 im Vergleich zu dem ersten Sendeempfangsgerät SEG1 besser geeignet ist.

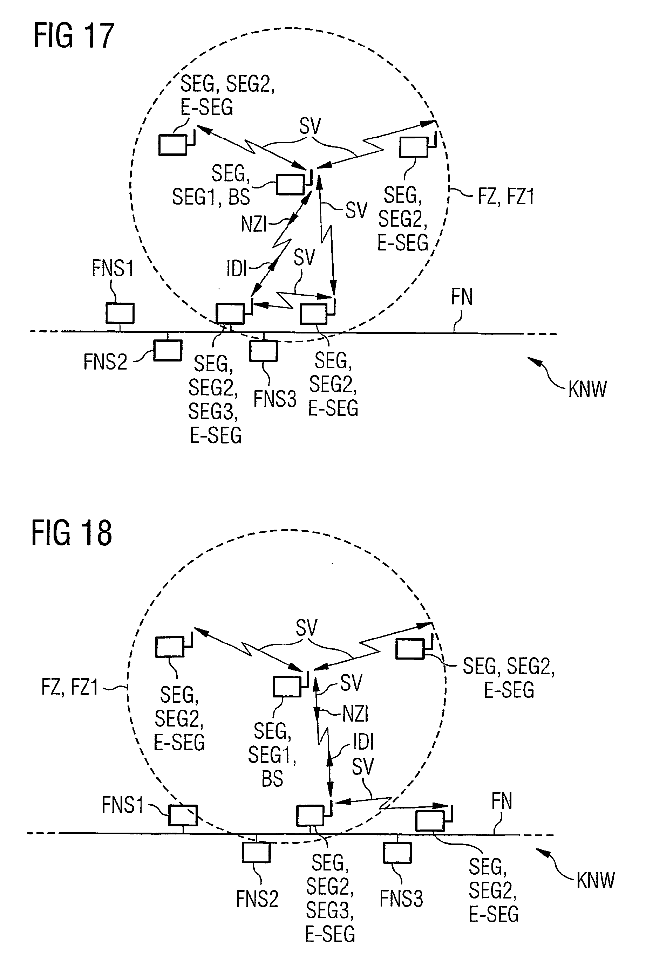

In einer vierten Phase des dritten Autokonfigurationsszenarios gemäß der FIGUR 17, in der von dem Kommunikationsnetzwerk KNW in der FIGUR 11 wieder nur die fünf Sendeempfangsgeräte SEG, die Festnetzstationen FNS1...FNS3 einschließlich des Festnetzanschlusses zum Festnetz FN und die erste Funkzelle FZ1 dargestellt sind, kommt es zum Wechsel des Sendeempfangsgerätes SEG, das die Master- bzw. Basisstationsfunktionalität besitzt. Die Master- bzw. Basisstationsfunktionalität geht dabei wieder von dem Sendeempfangsgerät SEG der vierten Funkzelle FZ4, dem bisherigen ersten Sendeempfangsgerät SEG1 (vgl. FIGUREN 11, 13 und 15), auf das zur ersten Funkzelle FZ1 korrespondierende Sendeempfangsgerät SEG, das neue erste Sendeempfangsgerät SEG1, über.

In dieser vierten Phase des dritten Autokonfigurationsszenarios gemäß der FIGUR 17 wird z.B. wieder von dem zu der fünften Funkzelle FZ5 korrespondierenden, mit dem Festnetz FN verbundenen Sendeempfangsgerät SEG - dem zweiten und zugleich dritten Sendeempfangsgerät SEG2, SEG3 - die spezielle Identifikationsinformation IDI ausgesendet, mit der es die in unmittelbarer Kommunikationsreichweite befindlichen Sendeempfangsgeräte SEG - gemäß der FIGUREN 11 und 17 sind dies die sich in der fünften Funkzelle FZ5 befindenden oder aufhaltenden Sendeempfangsgeräte SEG, also auch das erste Sendeempfangsgerät SEG1, das nunmehr die Master- bzw. Basisstationsfunktionalität besitzt - über den vorhandenen Festnetzzugang informiert.

Von dem ersten Sendeempfangsgerät SEG1 empfängt das den Festnetzzugang aufweisende dritte Sendeempfangsgerät SEG3 wieder, vorzugsweise im Gegenzug, die von dem ersten Sendeempfangsgerät SEG1 gesendete Netzwerkzustandsinformation NZI, mit der das dritte Sendeempfangsgerät SEG3 aktuelle Konfigurationsdaten über das Kommunikationsnetzwerk KNW und der diesem zugeordnete Sendeempfangsgeräte SEG erhält.

Die in den FIGUREN 11, 13, 15 und 17 dargestellten und beschriebenen Autokonfigurationsphasen können wieder zu jeder Zeit wiederholt werden. Auf diese Weise kann auf Änderungen in dem Kommunikationsnetzwerk, z.B. was die Anzahl der beteiligten Sendeempfangsgeräte betrifft, flexibel im Sinne einer dynamischen Anpassung reagiert und immer eine optimale Netzwerkperformance und Netzwerkausleuchtung erreicht werden.

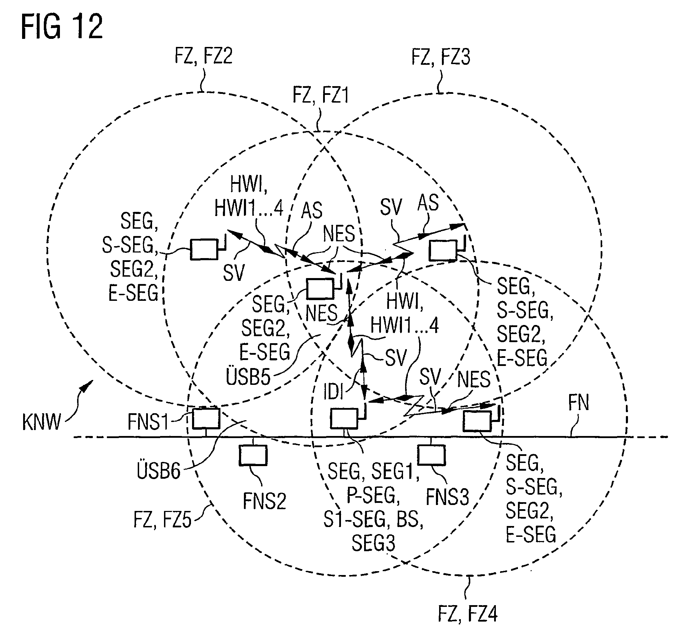

FIGUREN 12, 14, 16, 18 zeigen ein viertes Autokonfigurationsszenario, wieder bestehend aus vier Autokonfigurationsphasen, zum Erreichen einer optimalen Netzwerkperformance und Netzwerkausleuchtung für ein drahtloses, selbstorganisierendes Kommunikationsnetzwerk KNW mit Festnetzanbindung und mit einer einzigen Master- bzw. Basisstation, wobei die Master- bzw. Basisstation beim Start des Autokonfigurationsszenarios die Festnetzanbindung besitzt.

Das Kommunikationsnetzwerk KNW weist wieder fünf Sendeempfangsgeräte SEG auf, die wieder jeweils einen idealisierten Funkraum, eine so genannte Funkzelle FZ, abdeckend, im Zentrum der jeweiligen Funkzelle FZ liegend derart zueinander angeordnet sind, dass die einzelnen Funkzellen einen zusammenhängenden Funkversorgungsbereich des Kommunikationsnetzwerkes KNW bilden, bei dem die zu dem Kommunikationsnetzwerk KNW gehörenden Sendeempfangsgeräte SEG entweder unmittelbar oder mittelbar über ein Sendeempfangsgerät funktechnisch miteinander verbunden sind und durch drahtlose Kommunikation (Übertragung von Signalen) miteinander verkehren. Es findet also wieder ein Signalverkehr SV statt. Der Signalverkehr umfasst dabei erneut unter anderem spezielle in vorgegebenen Zeitrahmen gesendete Broadcast-Meldungen.

Das Kommunikationsnetzwerk KNW wird vorzugsweise als "Wireless Local Area Network (WLAN)" oder als DECT-Schnurlostelefonsystem betrieben, während die Sendeempfangsgeräte SEG z.B. als stationäre und/oder mobile Geräte ausgebildet sein können.

Der Funkversorgungsbereich des Kommunikationsnetzwerkes KNW wird gemäß der Darstellung in der FIGUR 12 wieder aus fünf Funkzellen FZ1...FZ5 gebildet, von denen in einer ersten Funkzelle FZ1 vier der fünf Sendeempfangsgeräte SEG enthalten sind. In dieser ersten Funkzelle FZ1 befindet sich des Weiteren ein fünfter Überschneidungsbereich ÜSB5 von drei zu der ersten Funkzelle FZ1 benachbarten Funkzellen - eine zweite Funkzelle FZ2, eine dritte Funkzelle FZ3 und eine fünfte Funkzelle FZ5 -, in dem ein Sendeempfangsgerät SEG der vier Sendeempfangsgeräte SEG angeordnet ist.

Die erste Funkzelle FZ1 bildet darüber hinaus mit der fünften Funkzelle FZ5 einen sechsten Überschneidungsbereich ÜSB6, der sich ebenfalls in der ersten Funkzelle FZ1 befindet. In diesem sechsten Überschneidungsbereich ÜSB6 sind das zu den ersten Funkzelle FZ1 korrespondierende Sendeempfangsgerät SEG und das zu der fünften Funkzelle FZ5 korrespondierende Sende-empfangsgerät SEG angeordnet.

In einer ersten Phase des vierten Autokonfigurationsszenarios (beim Start des Autokonfigurationsszenarios) gemäß der FIGUR 12 wird von den dem Kommunikationsnetzwerk KNW zugeordneten Sendeempfangsgeräten SEG wieder einem ersten Sendeempfangsgerät SEG1 eine erweiterte Funktionalität, die Master- oder Basisstationsfunktionalität, zugewiesen, während die übrigen Sendeempfangsgeräte SEG, auch als zweite Sendeempfangsgeräte SEG2 bezeichnet, eine gerätespezifische Grundfunktionalität besitzen, wenngleich auch sie, wie das erste Sendeempfangsgerät SEG1, wieder generell in der Lage sind, die Master- bzw. Basisstationsfunktionalität zu übernehmen. Entsprechend der zugewiesenen Funktionalität fungiert das erste Sendeempfangsgerät SEG1 wieder als Master- oder Basisstation BS. Aus der Sicht der Master- bzw. Basisstation BS sind die zweiten Sendeempfangsgeräte SEG2, die sich unmittelbar oder mittelbar in Kommunikationsreichweite zu der Master- bzw. Basisstation BS befinden, wieder Erst-Sendeempfangsgeräte E-SEG.

Das Kommunikationsnetzwerk KNW in der FIGUR 12 unterscheidet sich von den Kommunikationsnetzwerken KNW in den FIGUREN 1 und 5 dadurch, dass das zu der fünften Funkzelle FZ5 korrespondierende Sendeempfangsgerät SEG als drittes Sendeempfangsgerät SEG3 neben herkömmlichen Festnetzstationen FNS1...FNS3, von denen eine erste Festnetzstation FNS1 und eine zweite Festnetzstation FNS2 in der fünften Funkzelle FZ5 und eine dritte Festnetzstation FNS3 sowohl in der vierten Funkzelle FZ4 als auch in der fünften Funkzelle FZ5 enthalten sind, über eine Festnetzanbindung mit einem Festnetz FN verbunden ist.

Darüber hinaus besitzt gemäß der FIGUR 12 das zu der fünften Funkzelle FZ5 korrespondierende dritte Sendeempfangsgerät SEG3 als erstes Sendeempfangsgerät SEG1 die Master- bzw. Basisstationsfunktionalität. Das Sendeempfangsgerät SEG der vierten Funkzelle FZ4 kann die Funktionalität entweder vom Betreiber des Kommunikationsnetzwerkes KNW zugewiesen bekommen oder aus dem Kommunikationsnetzwerk KNW heraus durch eine spezielle Zuweisungsprozedur erhalten.

Diese spezielle Zuweisungsprozedur soll im nachfolgenden für das in der FIGUR 12 dargestellte Kommunikationsnetzwerk KNW erläutert werden:
In dem Kommunikationsnetzwerk KNW hat wieder keines der beteiligten Sendeempfangsgeräte SEG Kenntnis von der Existenz des jeweils benachbarten Sendeempfangsgerätes SEG oder der anderen Sendeempfangsgeräte SEG. Jedes Sendeempfangsgerät SEG wird deshalb wieder zunächst einmal ermitteln, ob in seiner Umgebung Sendeempfangsgeräte SEG vorhanden sind oder sogar bereits ein Kommunikationsnetzwerk KNW existiert. Stellt es hierbei fest, dass es kein benachbartes Sendeempfangsgerät SEG gibt, so wird es wieder von sich aus damit beginnen, ein Kommunikationsnetzwerk aufzuspannen. Dies geschieht wieder dadurch, dass das betreffende Sendeempfangsgerät SEG ein Netzwerkexistenzsignal NES als Rundum-Signal (Broadcast-Signal) aussendet. Empfängt ein benachbartes Sendeempfangsgerät SEG das ausgesendete Netzwerkexistenzsignal NES, so unterlässt es das empfangende Sendeempfangsgerät SEG wieder, selbst ein Netzwerkexistenzsignal NES zu auszusenden. Wenn das das Netzwerkexistenzsignal NES empfangende Sendeempfangsgerät SEG das Netzwerkexistenzsignal NES nur ein einziges Mal empfängt - in diesem Fall ist das Netzwerkexistenzsignal NES sendende Sendeempfangsgerät SEG wieder ein Primär-Sendeempfangsgerät P-SEG, dann besitzt das Primär-Sendeempfangsgerät P-SEG aus der Sicht des empfangenden Sendeempfangsgerätes SEG die erweiterte Funktionalität, also die Master- bzw. Basisstationsfunktionalität, und ist somit das erste Sendeempfangsgerät SEG1, das als Basisstation BS fungiert.

Dieser Fall ist in der FIGUR 12 durch die Sendeempfangsgeräte SEG in der vierten Funkzelle FZ4 und der fünften Funkzelle FZ5 dargestellt. Das Sendeempfangsgerät SEG in der fünften Funkzelle FZ5 "broadcastet" das Netzwerkexistenzsignal NES. Dieses Netzwerkexistenzsignal NES kann gemäß dem Funkversorgungsbereich des Kommunikationsnetzwerkes KNW sowohl von dem Sendeempfangsgerät SEG in der ersten Funkzelle FZ1 als auch von dem Sendeempfangsgerät SEG in der vierten Funkzelle FZ4 empfangen werden. Während das Sendeempfangsgerät SEG in der ersten Funkzelle FZ1 das Netzwerkexistenzsignal NES von mehreren benachbarten Sendeempfangsgeräten SEG empfängt, erhält das Sendeempfangsgerät SEG in der vierten Funkzelle FZ4 das Netzwerkexistenzsignal NES nur ein einziges Mal und zwar von dem Sendeempfangsgerät SEG in der fünften Funkzelle FZ5. Das Sendeempfangsgerät SEG in der fünften Funkzelle FZ5 ist somit aus der Sicht des Sendeempfangsgerätes SEG in der vierten Funkzelle FZ4 das bereits erwähnte Primär-Sendeempfangsgerät P-SEG. Inwieweit dieses Primär-Sendeempfangsgerät P-SEG in der fünften Funkzelle FZ5 nun auch die Master- bzw. Basisstationsfunktionalität besitzt und somit das erste Sendeempfangsgerät SEG1 ist, hängt letztlich davon ab, wie sich das Sendeempfangsgerät SEG in der ersten Funkzelle FZ1, das das von dem Primär-Sendeempfangsgerät P-SEG in der fünften Funkzelle FZ5 gesendete Netzwerkexistenzsignal NES ebenfalls erhalten hat, bezüglich dieses Netzwerkempfangssignal NES verhält.

Wenn ein das Netzwerkexistenzsignal NES empfangende Sendeempfangsgerät SEG, wie das Sendeempfangsgerät SEG in der ersten Funkzelle FZ1, statt von einem Sendeempfangsgerät SEG, dem Primär-Sendeempfangsgerät P-SEG, von mehreren Sendeempfangsgeräten SEG, Sekundär-Sendeempfangsgeräten S-SEG, jeweils ein solches Netzwerkexistenzsignal NES empfängt - gemäß der FIUGR 12 sind dies die Sendeempfangsgeräte SEG in der zweiten Funkzelle FZ2, der dritten Funkzelle FZ3 und der fünften Funkzelle FZ5, so sendet das die verschiedenen Netzwerkexistenzsignale NES empfangende Sendeempfangsgerät SEG in der ersten Funkzelle FZ1 wieder entweder an alle Sekundär-Sendeempfangsgerät S-SEG oder an alle Sekundär-Sendeempfangsgeräte S-SEG mit Ausnahme eines ersten Sekundär-Sendeempfangsgerätes S1-SEG jeweils ein Anweisungssignal AS, mit dem das betreffende Sekundär-Sendeempfangsgerät S-SEG jeweils angewiesen wird, das Aussenden des Netzwerkexistenzsignals NES zu beenden.

Im erstgenannten Fall wäre das die Netzwerkexistenzsignals NES empfangende Sendeempfangsgerät SEG dann das erste Sende-empfangsgerät SEG1, das die Master- bzw. Basisstationsfunktionalität besitzt. Im letztgenannten Fall hingegen wäre das erste Sekundär-Sendeempfangsgerät S1-SEG, das das Anweisungssignal AS nicht erhalten hat, das erste Sendeempfangsgerät SEG1, das die Master- bzw. Basisstationsfunktionalität besitzt.

Gemäß der FIGUR 12 wird das Anweisungssignal AS von dem Sendeempfangsgerät SEG in der ersten Funkzelle FZ1 an die Sendeempfangsgeräte SEG in der zweiten Funkzellen FZ2 und der dritten Funkzelle FZ3 gesendet, während das Sendeempfangsgerät SEG in der fünften Funkzelle FZ5 das Anweisungssignal AS nicht erhält. Damit ist das Sendeempfangsgerät SEG in der fünften Funkzelle FZ5 zugleich Primär-Sendeempfangsgerät P-SEG (aus der Sicht des Sendeempfangsgerätes SEG in der vierten Funkzelle FZ4) und erstes Sekundär-Sendeempfangsgerät S1-SEG (aus der Sicht des Sendeempfangsgerätes SEG in der ersten Funkzelle FZ1) und somit endgültig das erste Sendeempfangsgerät SEG1, das auch gemäß der Zuweisungsprozedur die Master- bzw. Basisstationsfunktionalität besitzt und damit als Basisstation BS fungiert, die zugleich auch den Zugang zum Festnetz FN besitzt.

In der ersten Phase des vierten Autokonfigurationsszenarios wird außerdem wieder von jedem Sendeempfangsgerät SEG, sowohl von dem ersten Sendeempfangsgerät SEG1 als auch von den zweiten Sendeempfangsgeräten SEG2 in regelmäßigen Zeitabständen während einer Messphase zumindest ein Teil des Signalverkehrs SV von in Kommunikationsreichweite zu dem messenden Sendeempfangsgerät SEG befindlichen Sendeempfangsgeräten SEG erfasst. Anhand dieses erfassten Signalverkehrs SV wird wieder die Empfangbarkeit der Sendeempfangsgeräte SEG festgestellt und es werden wieder von jedem Sendeempfangsgerät SEG jeweils vier Hinweisinformationen HWI über die insgesamt empfangenen Sendeempfangsgeräte SEG generiert und gespeichert.

So werden eine erste Hinweisinformation HWI1, mit der die Anzahl der empfangenen Sendeempfangsgeräte SEG angegeben wird, eine zweite Hinweisinformation HWI2, die die Empfangsqualität angibt, mit der die empfangenen Sendeempfangsgeräte SEG jeweils empfangen werden, eine dritte Hinweisinformation HWI3, mit der die Existenz eines privilegierten Sendeempfangsgerätes unter den empfangenen Sendeempfangsgeräten SEG angegeben wird, und eine vierte Hinweisinformation HWI4, mit der die Gerätetypen der empfangenen Sendeempfangsgeräte SEG angegeben werden, generiert und gespeichert.

Alternativ ist es auch wieder möglich weniger oder mehr als vier Hinweisinformationen HWI zu generieren und zu speichern. So ist es beispielsweise möglich, sich nur auf die erste Hinweisinformation HWI1 zu beschränken.

In dieser ersten Phase des vierten Autokonfigurationsszenarios gemäß der FIGUR 12 wird außerdem von dem zu der fünften Funkzelle FZ5 korrespondierenden, mit dem Festnetz FN verbundenen Sendeempfangsgerät SEG - dem ersten und zugleich dritten Sendeempfangsgerät SEG1, SEG3 - eine spezielle Identifikationsinformation IDI ausgesendet, mit der es die in unmittelbarer Kommunikationsreichweite befindlichen Sendeempfangsgeräte SEG - gemäß der FIGUR 12 sind dies die sich in der fünften Funkzelle FZ5 befindenden oder aufhaltenden Sendeempfangsgeräte SEG - über den vorhandenen Festnetzzugang informiert.

Da das erste Sendeempfangsgerät SEG1 und das dritte Sendeempfangsgerät SEG3 ein und dasselbe Gerät sind, wird im Unterschied zu dem dritten Autokonfigurationsszenario jetzt keine Netzwerkzustandsinformation NZI gesendet.

In einer zweiten Phase des vierten Autokonfigurationsszenarios gemäß der FIGUR 14, in der von dem Kommunikationsnetzwerk KNW in der FIGUR 12 nur die fünf Sendeempfangsgeräte SEG, die Festnetzstationen FNS1...FNS3 einschließlich des Festnetzanschlusses zum Festnetz FN und die fünfte Funkzelle FZ5 dargestellt sind, wird von dem Sendeempfangsgerät SEG mit der Master- bzw. Basisstationsfunktionalität in der fünften Funkzelle FZ5, dem ersten und dritten Sendeempfangsgerät SEG1, SEG3, wieder eine Verteilnachricht VN ausgesendet, mit der die zweiten Sendeempfangsgeräte SEG2, die diese Verteilnachricht VN empfangen können, jeweils aufgefordert werden, die von diesen Geräten generierten Hinweisinformationen HWI1...HWI4 an das erste und dritte Sendeempfangsgerät SEG1, SEG3 zu senden.

Die zweiten Sendeempfangsgeräte SEG2, die diesbezüglich aufgefordert werden, sind die beiden sich ebenfalls in der fünften Funkzelle FZ5 befindenden oder aufhaltenden Sendeempfangsgeräte SEG, die zu der ersten Funkzelle FZ1 und vierten Funkzelle FZ4 in der FIGUR 12 korrespondieren. Nach Erhalt der Verteilnachricht VN senden die aufgeforderten zweiten Sendeempfangsgeräte SEG2 ihre generierten Hinweisinformationen HWI1...HWI4 wieder an das erste und dritte Sendeempfangsgerät SEG1, SEG3. Das erste und dritte Sendeempfangsgerät SEG1, SEG3 ermittelt im Anschluss daran anhand der selbst generierten und der von den genannten zweiten Sendeempfangsgeräten SEG2 übertragenen Hinweisinformationen HWI1...HWI4 wieder, welches der genannten zweiten Sendeempfangsgeräte SEG2 im Vergleich zu dem ersten Sendeempfangsgerät SEG1 am besten geeignet ist, die Master- bzw. Basisstationsfunktionalität von dem ersten und dritten Sendeempfangsgerät SEG1, SEG3 zu übernehmen.

In einer dritten Phase des vierten Autokonfigurationsszenarios gemäß der FIGUR 16, in der wie in der FIGUR 14 wieder von dem Kommunikationsnetzwerk KNW in der FIGUR 12 nur die fünf Sendeempfangsgeräte SEG, die Festnetzstationen FNS1...FNS3 einschließlich des Festnetzanschlusses zum Festnetz FN und die fünfte Funkzelle FZ5 dargestellt sind, wird wieder von dem Sendeempfangsgerät SEG mit der Master- bzw. Basisstationsfunktionalität in der fünften Funkzelle FZ5, dem ersten und dritten Sendeempfangsgerät SEG1, SEG3, nachdem es gemäß der FIGUR 14 die eigenen und empfangenen Hinweisinformationen HWI1...HWI4 ausgewertet und das für die Funktionalitätsübernahme am besten geeignete zweite Sendeempfangsgerät SEG2 ermittelt hat, eine Steuerungsinformation STI generiert und diese an dieses am besten geeignete zweite Sendeempfangsgerät SEG2, dem gemäß der FIGUR 12 zur ersten Funkzelle FZ1 korrespondierenden Sendeempfangsgerät SEG, gesendet. Das zur ersten Funkzelle FZ1 korrespondierende zweite Sendeempfangsgerät SEG2 befindet sich wie das erste und dritte Sendeempfangsgerät SEG1, SEG3 in der fünften Funkzelle FZ5, weshalb die Steuerungsinformation STI unmittelbar übertragen werden kann. Mit der Steuerungsinformation STI wird das zur ersten Funkzelle FZ1 korrespondierende zweite Sendeempfangsgerät SEG2 darauf hingewiesen, dass es die Master- und Basisstationsfunktionalität übernehmen soll.

Es sei an dieser Stelle wieder der Form halber erwähnt, dass das Aussenden der Steuerungsinformation STI durch das erste und dritte Sendeempfangsgerät SEG1, SEG3 unterbleibt, wenn keines der zweiten Sendeempfangsgeräte SEG2 im Vergleich zu dem ersten und dritten Sendeempfangsgerät SEG1, SEG3 besser geeignet ist.

In einer vierten Phase des vierten Autokonfigurationsszenarios gemäß der FIGUR 18, in der von dem Kommunikationsnetzwerk KNW in der FIGUR 12 wieder nur die fünf Sendeempfangsgeräte SEG, die Festnetzstationen FNS1...FNS3 einschließlich des Festnetzanschlusses zum Festnetz FN und die erste Funkzelle FZ1 dargestellt sind, kommt es zum Wechsel des Sendeempfangsgerätes SEG, das die Master- bzw. Basisstationsfunktionalität besitzt. Die Master- bzw. Basisstationsfunktionalität geht dabei wieder von dem Sendeempfangsgerät SEG der fünften Funkzelle FZ5, dem bisherigen ersten und dritten Sendeempfangsgerät SEG1, SEG3 (vgl. FIGUREN 12, 14 und 16), auf das zur ersten Funkzelle FZ1 korrespondierende Sendeempfangsgerät SEG, das neue erste Sendeempfangsgerät SEG1, über.

In dieser vierten Phase des vierten Autokonfigurationsszenarios gemäß der FIGUR 18 wird z.B. wieder von dem zu der fünften Funkzelle FZ5 korrespondierenden, mit dem Festnetz FN verbundenen Sendeempfangsgerät SEG - dem jetzt zweiten und zugleich dritten Sendeempfangsgerät SEG2, SEG3 - die spezielle Identifikationsinformation IDI ausgesendet, mit der es die in unmittelbarer Kommunikationsreichweite befindlichen Sendeempfangsgeräte SEG - gemäß der FIGUREN 12 und 18 sind dies die sich in der fünften Funkzelle FZ5 befindenden oder aufhaltenden Sendeempfangsgeräte SEG, also auch das erste Sende-empfangsgerät SEG1, das nunmehr die Master- bzw. Basisstationsfunktionalität besitzt - über den vorhandenen Festnetzzugang informiert.

Von dem ersten Sendeempfangsgerät SEG1 empfängt das den Festnetzzugang aufweisende dritte Sendeempfangsgerät SEG3 wieder, vorzugsweise im Gegenzug, eine von dem ersten Sendeempfangsgerät SEG1 gesendete Netzwerkzustandsinformation NZI, mit der das dritte Sendeempfangsgerät SEG3 aktuelle Konfigurationsdaten über das Kommunikationsnetzwerk KNW und der diesem zugeordnete Sendeempfangsgeräte SEG erhält.

Die in den FIGUREN 12, 14, 16 und 18 dargestellten und beschriebenen Autokonfigurationsphasen können wieder zu jeder Zeit wiederholt werden. Auf diese Weise kann auf Änderungen in dem Kommunikationsnetzwerk, z.B. was die Anzahl der beteiligten Sendeempfangsgeräte betrifft, flexibel im Sinne einer dynamischen Anpassung reagiert und immer eine optimale Netzwerkperformance und Netzwerkausleuchtung erreicht werden.

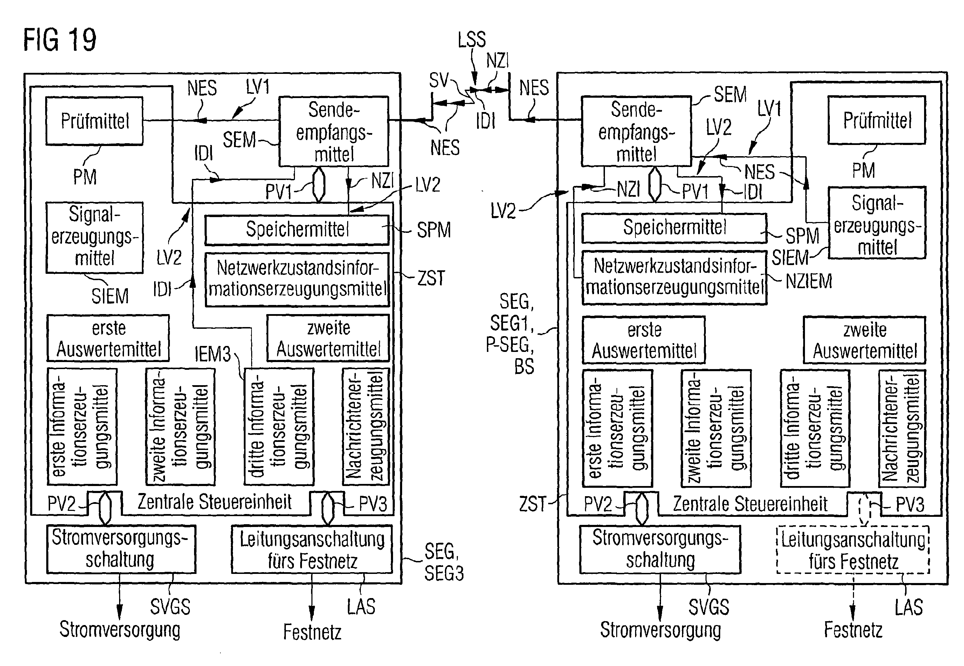

FIGUREN 19 bis 22 zeigen jeweils den Aufbau eines Sendeempfangsgerätes und einer Master- bzw. Basisstation, wie sie in den Kommunikationsnetzwerken KNW der FIGUREN 1 bis 18 zum Einsatz kommen. Die in den FIGUREN 19 bis 21 gezeigten Master- bzw. Basisstation und das Sendeempfangsgerät weisen jeweils eine Zentrale Steuereinheit ZST und Sendeempfangsmittel SEM auf, zwischen denen eine erste Physikalische Verbindung PV1 existiert. Darüber hinaus bestehen zur Stromversorgung zwischen der Zentralen Steuereinheit ZST und einer Stromversorgungsschaltung SVGS eine zweite Physikalische Verbindung PV2 und zur aktiven oder inaktiven Anbindung an das Festnetz zwischen der Zentralen Steuereinheit ZST und einer Leitungsanschaltung für das Festnetz LAS eine dritte Physikalische Verbindung PV3, wobei die inaktive Anbindung an das Festnetz durch eine gestrichelt eingezeichnete Leitungsanschaltung LAS zum Ausdruck kommt.

In der Zentralen Steuereinheit ZST sind mit Ausnahme von vorzugsweise als Hardware ausgebildete Speichermitteln SPM und einem in den genannten FIGUREN nicht dargestellten Mikroprozessor und Mikrocontroller insbesondere z.B. als Software ausgebildete programmierbare Module enthalten, die dem Mikroprozessor und/oder dem Mikrocontroller zugeordnet sind. Diese Module umfassen:
Erste Auswertemittel AWM1, zweite Auswertemittel AWM2, erste Informationserzeugungsmittel IEM1, zweite Informationserzeugungsmittel IEM2, dritte Informationserzeugungsmittel IEM3, Nachrichtenerzeugungsmittel NEM, Netzwerkzustandsinformationserzeugungsmittel NZIEM, Prüfmittel PM und Signalerzeugungsmittel SIEM.

Das Sendeempfangsgerät und die Master- bzw. Basisstation in den FIGUREN 19 bis 22 sind über eine Luftschnittstelle LSS miteinander verbunden, über die ein Signalverkehr SV abgewickelt wird. Die Luftschnittstelle LSS steht jedoch nicht nur für den Signalverkehr SV zwischen dem Sendeempfangsgerät und der Master- bzw. Basisstation sondern ganz generell auch für den Signalverkehr SV zwischen verschiedenen Sendeempfangsgeräten.

In der FIGUR 19 ist dargestellt, wie das gemäß der FIGUR 11 als dritte Sendeempfangsgerät SEG3 mit der Anbindung an das Festnetz FN ausgebildete, zu der fünften Funkzelle FZ5 korrespondierende Sendeempfangsgerät SEG mit einem weiteren Sendeempfangsgerät SEG das gemäß der FIGUR 11 zu der vierten Funkzelle FZ4 korrespondiert, über die Luftschnittstelle LSS mittels des hierüber abgewickelten Signalverkehrs SV derart kommuniziert, dass das weitere Sendeempfangsgerät SEG, nachdem diese Kommunikation beendet ist, als erstes Sendeempfangsgerät SEG1 die Master- bzw. Basisstationsfunktionalität aus der Sicht des dritten Sendeempfangsgerätes SEG3 besitzt und demzufolge als Master- bzw. Basisstation BS fungiert (Zuweisungsprozedur).

Im Zuge dieser Zuweisungsprozedur, auf die bereits bei der Beschreibung der FIGUR 11 detailliert eingegangen worden ist, wird eine erste Logische Verbindung LV1 zwischen der Zentralen Steuereinheit ZST in dem dritten Sendeempfangsgerät SEG3 und der Zentralen Steuereinheit ZST in dem ersten Sendeempfangsgerät SEG1 hergestellt. Gemäß dieser Verbindung LV1 werden in der Zentralen Steuereinheit ZST des ersten Sendeempfangsgerätes SEG1 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM und von dort über die Luftschnittstelle LSS dem dritten Sendeempfangsgerät SEG3 zugeführt und in dem dritten Sendeempfangsgerät SEG3 das zugeführte Netzwerkexistenzsignal NES von den Sendeempfangsmitteln SEM über die erste Physikalische Verbindung PV1 an die Prüfmittel PM in der Zentralen Steuereinheit ZST weitergeleitet.

In dem dritten Sendeempfangsgerät SEG3 sind die Zentrale Steuereinheit ZST mit den Prüfmitteln PM und den Signalerzeugungsmitteln SIEM sowie die Sendeempfangsmittel SEM derart ausgebildet, dass ermittelt wird, ob das Netzwerkexistenzsignal NES empfangen worden ist und somit vorliegt, wobei,
(i) wenn nur von dem ersten Sendeempfangsgerät SEG1 das Netzwerkexistenzsignal NES vorliegt, das erste Sendeempfangsgerät SEG1 ein Primär-Sendeempfangsgerät P-SEG ist, das als Master- bzw. Basisstation BS fungiert und
(ii) wenn kein Netzwerkexistenzsignal NES empfangen worden wäre, das dritte Sendeempfangsgerät SEG3 selber mit dem Aufspannen eines eigenen Netzwerkes begonnen hätte, indem in der Zentralen Steuereinheit ZST des dritten Sendeempfangsgerätes SEG3 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM zugeführt und von dort über die Luftschnittstelle LSS ausgesendet worden wäre.

Darüber hinaus wird gemäß der FIGUR 11, damit das erste Sendeempfangsgerät SEG1 über den vorhandenen Festnetzzugang informiert ist und das dritte Sendeempfangsgerät SEG3 aktuelle Konfigurationsdaten über das Kommunikationsnetzwerk und der diesem zugeordnete Sendeempfangsgeräte erhält, eine zweite Logische Verbindung LV2 zwischen der Zentralen Steuereinheit ZST in dem dritten Sendeempfangsgerät SEG3 und der Zentralen Steuereinheit ZST in dem ersten Sendeempfangsgerät SEG1 hergestellt.

Gemäß dieser Verbindung LV2 werden zunächst in der Zentralen Steuereinheit ZST des dritten Sendeempfangsgerätes SEG3 von den dritten Informationserzeugungsmitteln IEM3 eine Identifikationsinformation IDI erzeugt sowie die Identifikationsinformation IDI über die erste Physikalische Verbindung PV1 den Sendeempfangsmitteln SEM und von dort über die Luftschnittstelle LSS dem ersten Sendeempfangsgerät SEG1 zugeführt und in dem ersten Sendeempfangsgerätes SEG1 die zugeführte Identifikationsinformation IDI von den Sendeempfangsmitteln SEM über die erste Physikalische Verbindung PV1 an die Speichermittel SPM in der Zentralen Steuereinheit ZST weitergeleitet.

Im Zuge der Identifikationsinformationsübermittlung werden anschließend gemäß der zweiten Logischen Verbindung LV2 in der Zentralen Steuereinheit ZST des ersten Sendeempfangsgerätes SEG1 von den Netzwerkzustandserzeugungsmitteln NZIEM eine Netzwerkzustandsinformation NZI erzeugt sowie die Netzwerkzustandsinformation NZI über die erste Physikalische Verbindung PV1 den Sendeempfangsmitteln SEM und von dort über die Luftschnittstelle LSS dem dritten Sendeempfangsgerät SEG3 zugeführt und in dem dritten Sendeempfangsgerät SEG3 die zugeführte Netzwerkzustandsinformation NZI von den Sendeempfangsmitteln SEM über die erste Physikalische Verbindung PV1 an die Speichermittel SPM in der Zentralen Steuereinheit ZST weitergeleitet.

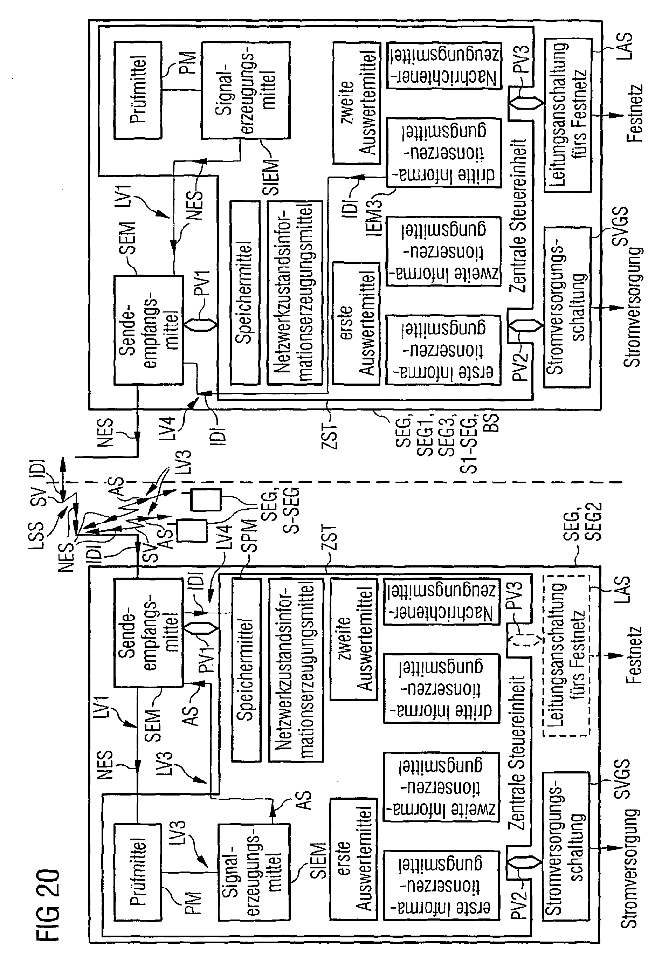

In der FIGUR 20 ist dargestellt, wie das gemäß der FIGUR 12 als dritte Sendeempfangsgerät SEG3 mit der Anbindung an das Festnetz FN ausgebildete, zu der fünften Funkzelle FZ5 korrespondierende Sendeempfangsgerät SEG mit einem weiteren als zweites Sendeempfangsgerät SEG2 bezeichnetes Sendeempfangsgerät SEG, das gemäß der FIGUR 12 zu der ersten Funkzelle FZ1 korrespondiert, über die Luftschnittstelle LSS mittels des hierüber abgewickelten Signalverkehrs SV derart kommuniziert, dass das dritte Sendeempfangsgerät SEG3, nachdem diese Kommunikation beendet ist, zusätzlich als erstes Sendeempfangsgerät SEG1 die Master- bzw. Basisstationsfunktionalität aus der Sicht des zweiten Sendeempfangsgerätes SEG2 besitzt und demzufolge als Master- bzw. Basisstation BS fungiert (Zuweisungsprozedur).

Im Zuge dieser Zuweisungsprozedur, auf die bereits bei der Beschreibung der FIGUR 12 detailliert eingegangen worden ist, wird wieder die erste Logische Verbindung LV1 zwischen der Zentralen Steuereinheit ZST in dem ersten und dritten Sende-empfangsgerät SEG1, SEG3 und der Zentralen Steuereinheit ZST in dem zweiten Sendeempfangsgerät SEG2 hergestellt. Gemäß dieser Verbindung LV1 werden in der Zentralen Steuereinheit ZST des ersten und dritten Sendeempfangsgerätes SEG1, SEG3 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM und von dort über die Luftschnittstelle LSS dem zweiten Sendeempfangsgerät SEG2 zugeführt und in dem zweiten Sende-empfangsgerät SEG2 das zugeführte Netzwerkexistenzsignal NES von den Sendeempfangsmitteln SEM über die erste Physikalische Verbindung PV1 an die Prüfmittel PM in der Zentralen Steuereinheit ZST weitergeleitet.

In dem zweiten Sendeempfangsgerät SEG2 sind die Zentrale Steuereinheit ZST mit den Prüfmitteln PM und den Signalerzeugungsmitteln SIEM sowie die Sendeempfangsmittel SEM derart ausgebildet, dass ermittelt wird, ob das Netzwerkexistenzsignal NES empfangen worden ist und somit vorliegt, wobei,
(i) wenn von mehreren als Sekundär-Sendeempfangsgeräte S-SEG bezeichnete Sendeempfangsgeräten SEG das Netzwerkexistenzsignal NES vorliegt, das zweite Sendeempfangsgerät SEG2 den Sekundär-Sendeempfangsgeräten S-SEG mit Ausnahme eines ersten Sekundär-Sendeempfangsgerätes S1-SEG jeweils ein Anweisungssignal AS sendet, mit dem das betreffende Sekundär-Sendeempfangsgerät S-SEG jeweils angewiesen wird, das Aussenden des Netzwerkexistenzsignals NES zu beenden, womit das erste Sekundär-Sendeempfangsgerät S1-SEG die Master- bzw. Basisstation BS ist,
(ii) wenn von mehreren als Sekundär-Sendeempfangsgeräte S-SEG bezeichnete Sendeempfangsgeräten SEG das Netzwerkexistenzsignal NES vorläge, das zweite Sendeempfangsgerät SEG2 aber allen Sekundär-Sendeempfangsgeräten S-SEG jeweils ein Anweisungssignal AS sendete, mit dem das betreffende Sekundär-Sendeempfangsgerät S-SEG jeweils angewiesen würde, das Aussenden des Netzwerkexistenzsignals NES zu beenden, womit das zweite Sendeempfangsgerät SEG2 die Master- bzw. Basisstation BS sein würde und
(iii) wenn kein Netzwerkexistenzsignal NES empfangen worden wäre, das zweite Sendeempfangsgerät SEG2 selber mit dem Aufspannen eines eigenen Netzwerkes begonnen hätte, indem in der Zentralen Steuereinheit ZST des zweiten Sendeempfangsgerätes SEG2 von den Signalerzeugungsmitteln SIEM ein Netzwerkexistenzsignal NES erzeugt sowie das Netzwerkexistenzsignal NES über die erste Physikalische Verbindung PV1 den Sendeempfangsmitteln SEM zugeführt und von dort über die Luftschnittstelle LSS ausgesendet worden wäre.

Gemäß dem vorstehenden Fall (i), der in der FIGUR 20 dargestellt ist, wird eine dritte Logische Verbindung LV3 zwischen der Zentralen Steuereinheit ZST in dem zweiten Sendeempfangsgerät SEG2 und den Sekundär-Sendeempfangsgeräten S-SEG hergestellt. Gemäß dieser Verbindung LV3 werden in der Zentralen Steuereinheit ZST des zweiten Sendeempfangsgerätes SEG2 von den Signalerzeugungsmitteln SIEM das Anweisungssignal AS erzeugt sowie das Anweisungssignal AS über die erste Physikalische Verbindung PV1 den Sendeempfangsmitteln SEM und von dort über die Luftschnittstelle LSS den Sekundär-Sendeempfangsgeräten S-SEG zugeführt.

Darüber hinaus wird gemäß der FIGUR 12, damit das zweite Sendeempfangsgerät SEG2 über den vorhandenen Festnetzzugang informiert ist, eine vierte Logische Verbindung LV4 zwischen der Zentralen Steuereinheit ZST in dem dritten Sendeempfangsgerät SEG3 und der Zentralen Steuereinheit ZST in dem ersten Sendeempfangsgerät SEG1 hergestellt.

Gemäß dieser Verbindung LV4 werden in der Zentralen Steuereinheit ZST des ersten und dritten Sendeempfangsgerätes SEG1, SEG3 von den dritten Informationserzeugungsmitteln IEM3 eine Identifikationsinformation IDI erzeugt sowie die Identifikationsinformation IDI über die erste Physikalische Verbindung PV1 den Sendeempfangsmitteln SEM und von dort über die Luftschnittstelle LSS dem zweiten Sendeempfangsgerät SEG2 zugeführt und in dem zweiten Sendeempfangsgerätes SEG2 die zugeführte Identifikationsinformation IDI von den Sendeempfangsmitteln SEM über die erste Physikalische Verbindung PV1 an die Speichermittel SPM in der Zentralen Steuereinheit ZST weitergeleitet.

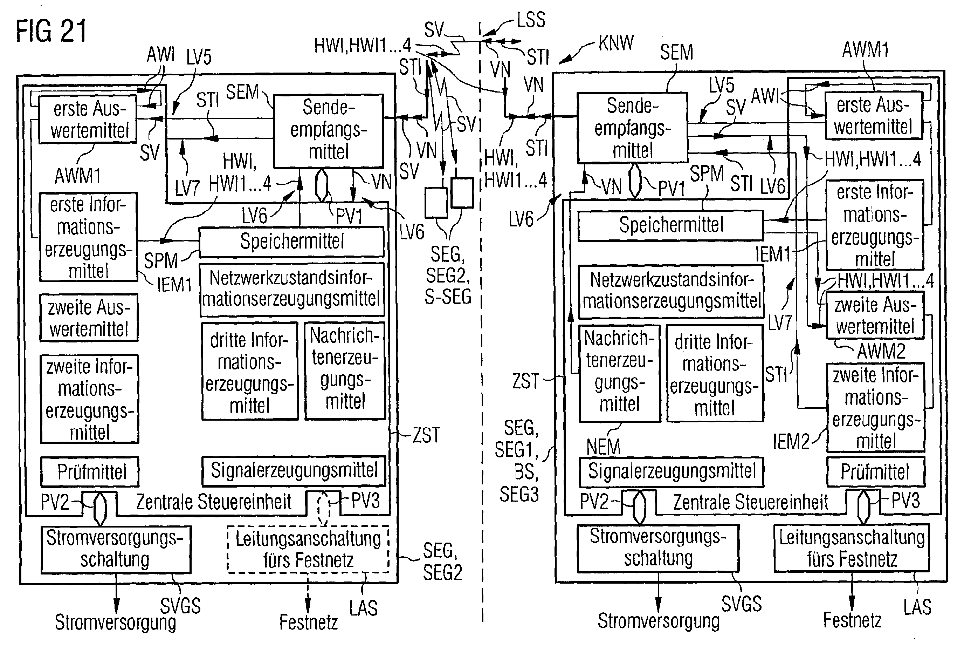

In der FIGUR 21 ist dargestellt, wie das gemäß der FIGUREN 12, 14 und 16 als dritte Sendeempfangsgerät SEG3 mit der Anbindung an das Festnetz FN ausgebildete, als Master- bzw. Basisstation BS mit der zugewiesenen Master- bzw. Basisstationsfunktionalität fungierende, zu der fünften Funkzelle FZ5 korrespondierende Sendeempfangsgerät SEG mit einem weiteren als zweites Sendeempfangsgerät SEG2 bezeichnetes Sendeempfangsgerät SEG, das gemäß der FIGUR 12 zu der ersten Funkzelle FZ1 korrespondiert, über die Luftschnittstelle LSS mittels des hierüber abgewickelten Signalverkehrs SV derart kommuniziert, dass das erste und dritte Sendeempfangsgerät SEG1, SEG3, nachdem diese Kommunikation beendet ist, die Master- bzw. Basisstationsfunktionalität an das zweiten Sendeempfangsgerätes SEG2 übergeben werden kann .

Zu diesem Zweck werden zunächst eine fünfte Logische Verbindung LV5 zwischen der Zentralen Steuereinheit ZST in dem ersten und dritten Sendeempfangsgerät SEG1, SEG3 und der Zentralen Steuereinheit ZST in dem zweiten Sendeempfangsgerät SEG2 sowie zwischen dem zweiten Sendeempfangsgerät SEG2 und den weiteren zweiten Sendeempfangsgeräten SEG2, den Sekundär-Sendeempfangsgeräten S-SEG hergestellt.

Gemäß dieser Verbindung LV5 wird sowohl in der Zentralen Steuereinheit ZST des ersten und dritten Sendeempfangsgerätes SEG1, SEG3 als auch in der Zentralen Steuereinheit ZST des zweiten Sendeempfangsgerätes SEG2 der von jeweils in Kommunikationsreichweite befindlichen, also benachbarten Sendeempfangsgeräten - im Fall des ersten und dritten Sendeempfangsgerätes SEG1, SEG3 ist dies z.B. das zweite Sendeempfangsgerät SEG2 und im Fall des zweiten Sendeempfangsgerätes SEG2 sind dies die Sekundär-Sendeempfangsgeräte S-SEG - über die Luftschnittstelle LSS mittels der Sendeempfangsmittel SEM empfangene Signalverkehr SV den ersten Auswertemitteln AWM1 zugeführt. Die ersten Auswertemittel AWM1 in der Zentralen Steuereinheit ZST sind derart ausgebildet, dass in regelmäßigen Zeitabständen während einer Messphase zumindest ein Teil eines Signalverkehrs SV von den in Kommunikationsreichweite befindlichen bzw. benachbarten Sendeempfangsgeräten erfasst und dabei die Empfangbarkeit dieser Sendeempfangsgeräte festgestellt wird.

Darüber hinaus sind die ersten Auswertemittel AWM1 derart ausgebildet, dass in der Messphase eine Auswerteinformation AWI über die Signalqualitätsänderung des von den Sendeempfangsgeräten jeweils empfangenen Signalverkehrs SV generiert und die Regelmäßigkeit der Zeitabstände für die Messphase in Abhängigkeit von dieser Auswerteinformation AWI bemessen wird.

In der jeweiligen Zentralen Steuereinheit ZST wirken die ersten Auswertemittel AWM1, die ersten Informationserzeugungsmittel IEM1 und die Speichermittel SPM so zusammen - sind also derart ausgebildet und bilden eine gemeinsame Funktionseinheit, dass mindestens eine Hinweisinformation HWI, vorzugsweise jedoch vier Hinweisinformationen HWI1...4, über die insgesamt empfangenen Sendeempfangsgeräte generiert und gespeichert wird.

Im Anschluss daran wird eine sechste Logische Verbindung LV6 zwischen der Zentralen Steuereinheit ZST in dem ersten und dritten Sendeempfangsgerät SEG1, SEG3 und der Zentralen Steuereinheit ZST in dem zweiten Sendeempfangsgerät SEG2 hergestellt.

Gemäß dieser Verbindung LV6 werden in der Zentralen Steuereinheit ZST des ersten und dritten Sendeempfangsgerätes SEG1, SEG3 von den ersten Nachrichtenerzeugungsmitteln NEM eine Verteilnachricht VN erzeugt sowie die Verteilnachricht VN über die erste Physikalische Verbindung PV1 den Sendeempfangsmitteln SEM und von dort über die Luftschnittstelle LSS dem zweiten Sendeempfangsgerät SEG2 zugeführt und in dem zweiten Sendeempfangsgerät SEG2 die zugeführte Verteilnachricht VN von den Sendeempfangsmitteln SEM über die erste Physikalische Verbindung PV1 an die Speichermittel SPM in der Zentralen Steuereinheit ZST weitergeleitet.

Mit der Verteilnachricht VN werden die Sendeempfangsgeräte, die diese Nachricht empfangen und die ihrerseits auch jeweils mindestens eine Hinweisinformation HWI, HWI1...4 über die insgesamt von dem jeweiligen Sendeempfangsgerät empfangenen Sendeempfangsgeräte generiert und gespeichert haben - gemäß der Darstellung in der FIGUR 21 ist es das zweite Sendeempfangsgerät SEG2 -, aufgefordert werden diese generierten und gespeicherten Hinweisinformationen HWI, HWI1...4 an das erste und dritte Sendeempfangsgerät SEG1, SEG3 zu senden.

Im Zuge der Verteilnachrichtübermittlung werden anschließend gemäß der sechsten Logischen Verbindung LV8 in der Zentralen Steuereinheit ZST des zweiten Sendeempfangsgerätes SEG2 die gespeicherten Hinweisinformationen HWI, HWI1...4 aus den Speichermitteln SPM ausgelesen sowie die ausgelesenen Hinweisinformationen HWI, HWI1...4 über die erste Physikalische Verbindung PV1 den Sendeempfangsmitteln SEM und von dort über die Luftschnittstelle LSS dem dritten Sendeempfangsgerät SEG3 zugeführt und in dem ersten und dritten Sendeempfangsgerät SEG1, SEG3 die zugeführte Hinweisinformationen HWI, HWI1...4 von den Sendeempfangsmitteln SEM über die erste Physikalische Verbindung PV1 an die zweiten Auswertemittel AWM2 in der Zentralen Steuereinheit ZST weitergeleitet.

In der Zentralen Steuereinheit ZST des ersten und dritten Sendeempfangsgerätes SEG1, SEG3 wirken die zweiten Auswertemittel AWM2 und die Speichermittel SPM so zusammen - sind also derart ausgebildet und bilden eine gemeinsame Funktionseinheit, dass anhand der an das erste und dritte Sendeempfangsgerät SEG1, SEG3 übertragenen und der von dem ersten und dritten Sendeempfangsgerät SEG1, SEG3 selbst generierten Hinweisinformationen HWI, HWI1...4 ermittelt wird, ob das zweite Sendeempfangsgerät SEG2 im Vergleich zu dem ersten und dritten Sendeempfangsgerät SEG1, SEG3 besser als Master- bzw. Basisstation geeignet ist und daher die Master- bzw. Basisstationsfunktionalität übernehmen sollte.

Aufgrund der Auswertung, die ergeben hat, dass das zweite Sendeempfangsgerät SEG2 besser geeignet ist, wird eine siebte Logische Verbindung LV7 zwischen der Zentralen Steuereinheit ZST in dem ersten und dritten Sendeempfangsgerät SEG1, SEG3 und der Zentralen Steuereinheit ZST in dem zweiten Sendeempfangsgerät SEG2 hergestellt.

Gemäß dieser Verbindung LV7 werden in der Zentralen Steuereinheit ZST des ersten und dritten Sendeempfangsgerätes SEG1, SEG3 von den zweiten Informationserzeugungsmitteln IEM2 eine Steuerungsinformation STI erzeugt sowie die Steuerungsinformation STI über die erste Physikalische Verbindung PV1 den Sendeempfangsmitteln SEM und von dort über die Luftschnittstelle LSS dem zweiten Sendeempfangsgerät SEG2 zugeführt und in dem zweiten Sendeempfangsgerätes SEG2 die zugeführte Steuerungsinformation STI von den Sendeempfangsmitteln SEM über die erste Physikalische Verbindung PV1 an die Zentralen Steuereinheit ZST weitergeleitet. Mit der Steuerungsinformation STI wird das zweite Sendeempfangsgerät SEG2 aufgefordert, die die Master- bzw. Basisstationsfunktionalität zu übernehmen.

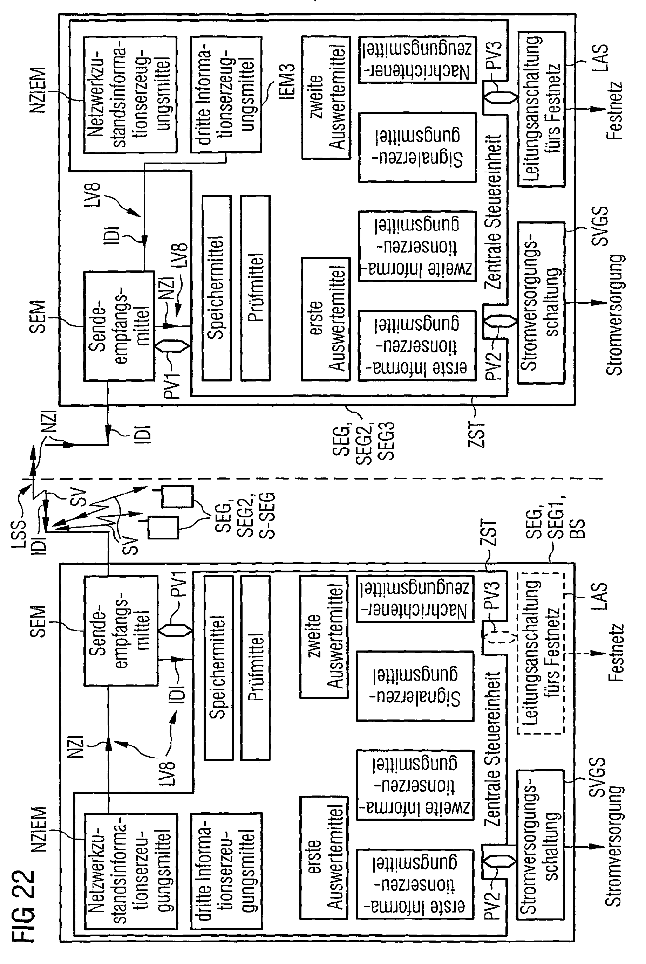

In der FIGUR 22 ist dargestellt, wie das gemäß der FIGUR 18 als dritte Sendeempfangsgerät SEG3 mit der Anbindung an das Festnetz FN ausgebildete, zu der fünften Funkzelle FZ5 korrespondierende Sendeempfangsgerät SEG mit einem ersten Sende-empfangsgerät SEG1, das gemäß der FIGUR 18 zu der ersten Funkzelle FZ1 korrespondiert und die Master- bzw. Basisstationsfunktionalität übernommen hat und demzufolge als Maste- bzw. Basisstation BS fungiert, über die Luftschnittstelle LSS mittels des hierüber abgewickelten Signalverkehrs SV derart kommuniziert, dass das erste Sendeempfangsgerät SEG1 über den vorhandenen Festnetzzugang informiert ist und das dritte Sendeempfangsgerät SEG3 aktuelle Konfigurationsdaten über das Kommunikationsnetzwerk und der diesem zugeordnete Sendeempfangsgeräte erhält.

Zu diesem Zweck wird eine achte Logische Verbindung LV8 zwischen der Zentralen Steuereinheit ZST in dem dritten Sende-empfangsgerät SEG3 und der Zentralen Steuereinheit ZST in dem ersten Sendeempfangsgerät SEG1 hergestellt.

Gemäß dieser Verbindung LV8 werden zunächst in der Zentralen Steuereinheit ZST des dritten Sendeempfangsgerätes SEG3 von den dritten Informationserzeugungsmitteln IEM3 eine Identifikationsinformation IDI erzeugt sowie die Identifikationsinformation IDI über die erste Physikalische Verbindung PV1 den Sendeempfangsmitteln SEM und von dort über die Luftschnittstelle LSS dem ersten Sendeempfangsgerät SEG1 zugeführt und in dem ersten Sendeempfangsgerätes SEG1 die zugeführte Identifikationsinformation IDI von den Sendeempfangsmitteln SEM über die erste Physikalische Verbindung PV1 an die Speichermittel SPM in der Zentralen Steuereinheit ZST weitergeleitet.

Im Zuge der Identifikationsinformationsübermittlung werden anschließend gemäß der achten Logischen Verbindung LV8 in der Zentralen Steuereinheit ZST des ersten Sendeempfangsgerätes SEG1 von den Netzwerkzustandserzeugungsmitteln NZIEM eine Netzwerkzustandsinformation NZI erzeugt sowie die Netzwerkzustandsinformation NZI über die erste Physikalische Verbindung PV1 den Sendeempfangsmitteln SEM und von dort über die Luftschnittstelle LSS dem dritten Sendeempfangsgerät SEG3 zugeführt und in der Zentralen Steuereinheit ZST des dritten Sendeempfangsgerätes SEG3 die zugeführte Netzwerkzustandsinformation NZI von den Sendeempfangsmitteln SEM über die erste Physikalische Verbindung PV1 an die Speichermittel SPM weitergeleitet.

## Patentansprüche

1. Verfahren zum Aufbau eines drahtlosen selbstorganisierenden Kommunikationsnetzwerkes, bei dem
a) dem Kommunikationsnetzwerk (KNW) mehrere Sendeempfangsgeräte (SEG) zugeordnet werden, die jeweils unmittelbar oder mittelbar, über ein Sendeempfangsgerät (SEG) der Sendeempfangsgeräte (SEG), durch drahtlose Kommunikation miteinander verkehren, wobei
a1) mindestens einem ersten Sendeempfangsgerät (SEG1) eine Basisstationsfunktionalität für den Betrieb als Basisstation (BS) zugewiesen wird,
a2) zweite Sendeempfangsgeräte (SEG2) unmittelbar und/oder mittelbar, über mindestens ein weiteres zweites Sendeempfangsgerät (SEG2), in Kommunikationsreichweite zu dem ersten Sendeempfangsgerät (SEG1, BS) betrieben werden,
**dadurch gekennzeichnet, dass**
b) in regelmäßigen Zeitabständen während einer Messphase von jedem Sendeempfangsgerät (SEG) zumindest ein Teil eines Signalverkehrs (SV) von in Kommunikationsreichweite befindlichen Sendeempfangsgeräten (SEG) erfasst wird,
c) anhand des Signalverkehrs (SV) die Empfangbarkeit der Sendeempfangsgeräte (SEG) feststellt wird und von jedem Sende-empfangsgerät (SEG) jeweils mindestens eine Hinweisinformation (HWI, HWI1...4) über die insgesamt empfangenen Sendeempfangsgeräte (SEG) generiert und gespeichert wird,
d) nach der Messphase von dem ersten Sendeempfangsgerät (SEG1, BS) eine Verteilnachricht (VN) ausgesendet wird, mit der die zweiten Sendeempfangsgeräte (SEG2), die diese Nachricht empfangen, jeweils aufgefordert werden, die Hinweisinformation (HWI, HWI1...4) an das erste Sendeempfangsgerät (SEG1, BS) zu senden,
e) in dem ersten Sendeempfangsgerät (SEG1, BS) anhand der selbst generierten und der übertragenen Hinweisinformationen (HWI, HWI1...4) ermittelt wird, welches der korrespondierenden zweiten Sendeempfangsgeräte (SEG2) im Vergleich zu dem ersten Sendeempfangsgerät (SEG1, BS) am besten geeignet ist, die Basisstationsfunktionalität von dem ersten Sendeempfangsgerät (SEG1, BS) zu übernehmen,
f) zur Übertragung der Basisstationsfunktionalität eine Steuerungsinformation (STI) von dem ersten Sendeempfangsgerät (SEG1, BS) generiert und diese an das zweite Sendeempfangsgerät (SEG2), das am besten für die Übernahme der Basisstationsfunktionalität geeignet ist, gesendet wird, während das Generieren und Versenden der Steuerungsinformation (STI) unterbleibt und damit das erste Sendeempfangsgerät (SEG1, BS) die Basisstationsfunktionalität behält, wenn keines der zweiten Sendeempfangsgeräte (SEG2) im Vergleich zu dem ersten Sendeempfangsgerät (SEG1, BS) für die Übernahme der Basisstationsfunktionalität besser geeignet ist.

2. Verfahren nach Anspruch 1, **dadurch gekennzeichnet, dass**
die Basisstationsfunktionalität dem ersten Sendeempfangsgerät (SEG1, BS) zugewiesen wird, indem
a) jedes dem Kommunikationsnetzwerk (KNW) zugeordnete Sende-empfangsgerät (SEG) ermittelt, ob die Existenz eines Netzwerkes anzeigende Netzwerkexistenzsignale (NES) von in Kommunikationsreichweite befindlichen weiteren Sendeempfangsgeräten (SEG) empfangen werden, wobei
a1) ,wenn das jeweilige ermittelnde Sendeempfangsgerät (SEG) nur von einem Primär-Sendeempfangsgerät (P-SEG) der weiteren Sendeempfangsgeräte (SEG) ein Netzwerkexistenzsignal (NES) empfängt, das Primär-Sendeempfangsgerät (P-SEG) die Basisstationsfunktionalität besitzt und somit das erste Sendeempfangsgerät (SEG1, BS) ist oder
a2) ,wenn das jeweilige ermittelnde Sendeempfangsgerät (SEG) von mehreren Sekundär-Sendeempfangsgeräten (S-SEG) der weiteren Sendeempfangsgeräte (SEG) jeweils ein Netzwerkexistenzsignal (NES) empfängt, das ermittelnde Sendeempfangsgerät (SEG) den Sekundär-Sendeempfangsgeräten (S-SEG) mit Ausnahme eines ersten Sekundär-Sendeempfangsgerätes (S1-SEG) oder allen Sekundär-Sendeempfangsgeräten (S-SEG) jeweils ein Anweisungssignal (AS) sendet, mit dem das betreffende Sekundär-Sendeempfangsgerät (S-SEG) jeweils angewiesen wird, das Aussenden des Netzwerkexistenzsignals (NES) zu beenden, womit das erste Sekundär-Sendeempfangsgerät (S1-SEG) beziehungsweise das ermittelnde Sendeempfangsgerät (SEG) die Basisstationsfunktionalität besitzt und das erste Sendeempfangsgerät (SEG1, BS) ist und womit das Sekundär-Sendeempfangsgerät (S-SEG) das zweite Sendeempfangsgerät (SEG2) ist oder
a3) ,wenn das jeweilige ermittelnde Sendeempfangsgerät (SEG) kein Netzwerkexistenzsignal (NES) von den weiteren Sendeempfangsgeräten (SEG) empfängt, das ermittelnde Sendeempfangsgerät (SEG) mit dem Aufspannen eines eigenen Netzwerkes beginnt, indem es das Netzwerkexistenzsignal (NES) aussendet, womit das ermittelnde Sendeempfangsgerät (SEG) entweder das Primär-Sendeempfangsgerät (P-SEG) oder das erste Sekundär-Sendeempfangsgerät (S1-SEG) oder das das Anweisungssignal (AS) erhaltende Sekundär-Sendeempfangsgerät (S-SEG) ist.

3. Verfahren nach Anspruch 2, **dadurch gekennzeichnet, dass**
das erste Sekundär-Sendeempfangsgerät (S1-SEG) das Netzwerkexistenzsignal (NES) als erstes sendet.

4. Verfahren nach Anspruch 1, **dadurch gekennzeichnet, dass**
ein drittes Sendeempfangsgerät (SEG3) der ersten und zweiten Sendeempfangsgeräte (SEG1, BS, SEG2) einem Festnetz (FN) zugeordnet wird, das in Kommunikationsreichweite zum ersten Sendeempfangsgerät (SEG1, BS) und zum zweiten Sendeempfangsgerät (SEG2), das am besten für die Übernahme der Basisstationsfunktionalität geeignet ist, betrieben wird.

5. Verfahren nach Anspruch 4, **dadurch gekennzeichnet, dass**
das dritte Sendeempfangsgerät (SEG3) während der Messphase eine spezielle Identifikationsinformation (IDI) aussendet, mit der es die in unmittelbarer Kommunikationsreichweite befindlichen Sendeempfangsgeräte (SEG) über den vorhandenen Festnetzzugang informiert.

6. Verfahren nach Anspruch 4 oder 5, **dadurch gekennzeichnet, dass**
das erste Sendeempfangsgerät (SEG1, BS) dem dritten Sendeempfangsgerät (SEG3) eine Netzwerkzustandsinformation (NZI) sendet, mit der das dritte Sendeempfangsgerät (SEG3) aktuelle Konfigurationsdaten über das drahtlose Kommunikationsnetzwerk (KNW) und der diesem zugeordnete Sendeempfangsgeräte (SEG) erhält.

7. Verfahren nach Anspruch 4 oder 5, **dadurch gekennzeichnet, dass**
das dritte Sendeempfangsgerät (SEG3) als erstes Sendeempfangsgerät (SEG1, BS) benutzt wird.

8. Verfahren nach Anspruch 1, **dadurch gekennzeichnet, dass**
eine erste Hinweisinformation (HWI1) generiert und gespeichert wird, mit der die Anzahl der empfangenen Sendeempfangsgeräte (SEG) angegeben wird.

9. Verfahren nach Anspruch 1 oder 8, **dadurch gekenn- zeichnet, dass**
eine zweite Hinweisinformation (HWI2) generiert und gespeichert wird, die die Empfangsqualität angibt, mit der die empfangenen Sendeempfangsgeräte (SEG) jeweils empfangen werden.

10. Verfahren nach Anspruch 1, 8 oder 9, **dadurch ge- kennzeichnet , dass**
eine dritte Hinweisinformation (HWI3) generiert und gespeichert wird, mit der die Existenz eines privilegierten Sendeempfangsgerätes unter den empfangenen Sendeempfangsgeräten (SEG) angegeben wird.

11. Verfahren nach Anspruch 1, 8, 9 oder 10, **dadurch gekennzeichnet , dass**
eine vierte Hinweisinformation (HWI4) generiert und gespeichert wird, mit der die Gerätetypen der empfangenen Sendeempfangsgeräte (SEG) angegeben werden

12. Verfahren nach Anspruch 1, **dadurch gekennzeichnet, dass**
der von den in Kommunikationsreichweite befindlichen Sendeempfangsgeräten (SEG) erfasste Signalverkehr (SV) spezielle in vorgegebenen Zeitrahmen gesendete Broadcast-Meldungen umfasst.

13. Verfahren nach Anspruch 1 oder 12, **dadurch gekennzeichnet, dass**
jedes Sendeempfangsgerät (SEG) in der Messphase eine Auswerteinformation (AWI) über die Signalqualitätsänderung des von den in Kommunikationsreichweite befindlichen Sendeempfangsgeräten (SEG) jeweils empfangenen Signalverkehrs (SV) generiert und die Regelmäßigkeit der Zeitabstände für die Messphase in Abhängigkeit von dieser Auswerteinformation (AWI) bemisst.

14. Verfahren nach einem der Ansprüche 1 bis 13, **dadurch gekennzeichnet , dass**
die Sendeempfangsgeräte (SEG) jeweils als stationäre und/oder mobile Geräte betrieben werden.

15. Verfahren nach Anspruch 1, **dadurch gekennzeichnet, dass**
das Kommunikationsnetzwerk (KNW) als "Wireless Local Area Network" oder als DECT-Schnurlostelefonsystem betrieben wird.

16. Drahtloses selbstorganisierendes Kommunikationsnetzwerk, mit
a) mehreren Sendeempfangsgeräten (SEG), die jeweils unmittelbar oder mittelbar, über ein Sendeempfangsgerät (SEG) der Sendeempfangsgeräte (SEG), durch drahtlose Kommunikation miteinander verkehren,
b) mindestens einem ersten Sendeempfangsgerät (SEG1) der Sendeempfangsgeräte (SEG), das durch Zuweisung einer Basisstationsfunktionalität als Basisstation (BS) fungiert,
c) zweiten Sendeempfangsgeräten (SEG2) der Sendeempfangsgeräte (SEG), die unmittelbar und/oder mittelbar, über mindestens ein weiteres zweites Sendeempfangsgerät (SEG2), in Kommunikationsreichweite zu dem ersten Sendeempfangsgerät (SEG1, BS) angeordnet sind,
**dadurch gekennzeichnet, dass**
d) jedes Sendeempfangsgerät (SEG) in regelmäßigen Zeitabständen während einer Messphase zumindest einen Teil eines Signalverkehrs (SV) von in Kommunikationsreichweite befindlichen Sendeempfangsgeräten (SEG) erfasst, dabei die Empfangbarkeit der Sendeempfangsgeräte (SEG) feststellt und von jedem Sende-empfangsgerät (SEG) jeweils mindestens eine Hinweisinformation (HWI, HWI1...4) über die insgesamt empfangenen Sendeempfangsgeräte (SEG) generiert und speichert,
e) das erste Sendeempfangsgerät (SEG1) nach der Messphase eine Verteilnachricht (VN) aussendet, mit der es die zweiten Sendeempfangsgeräte (SEG2), die diese Nachricht empfangen, auffordert die Hinweisinformationen (HWI, HWI1...4) an das erste Sendeempfangsgerät (SEG1) zu senden,
f) jedes die Verteilnachricht (VN) empfangende zweite Sende-empfangsgerät (SEG2) die Hinweisinformation (HWI, HWI1...4) an das erste Sendeempfangsgerät (SEG1, BS) sendet,
g) das erste Sendeempfangsgerät (SEG1, BS) anhand der selbst generierten und der übertragenen Hinweisinformationen (HWI, HWI1...4) ermittelt, welches der korrespondierenden zweiten Sendeempfangsgeräte (SEG2) im Vergleich zu dem ersten Sende-empfangsgerät (SEG1, BS) am besten geeignet ist, die Basisstationsfunktionalität von dem ersten Sendeempfangsgerät (SEG1, BS) zu übernehmen,
h) das erste Sendeempfangsgerät (SEG1, BS) eine Steuerungsinformation (STI) generiert, diese an das zweite Sendeempfangsgerät (SEG2), das am besten für die Übernahme der Basisstationsfunktionalität geeignet ist, sendet und damit die Basisstationsfunktionalität auf das betreffende zweite Sendeempfangsgerät (SEG2) überträgt, während das Generieren und Versenden der Steuerungsinformation (STI) unterbleibt und damit das erste Sendeempfangsgerät (SEG1, BS) die Basisstationsfunktionalität behält, wenn keines der zweiten Sendeempfangsgeräte (SEG2) im Vergleich zu dem ersten Sendeempfangsgerät (SEG1, BS) für die Übernahme der Basisstationsfunktionalität besser geeignet ist.

17. Kommunikationsnetzwerk nach Anspruch 16, **dadurch ge- kennzeichnet, dass**
a) für die Zuweisung der Basisstationsfunktionalität die dem Kommunikationsnetzwerk (KNW) zugeordneten Sendeempfangsgeräte (SEG) derart ausgebildet sind, dass jeweils ermittelt wird, ob die Existenz des Netzwerkes anzeigende Netzwerkexistenzsignale (NES) von in Kommunikationsreichweite befindlichen weiteren Sendeempfangsgeräten (SEG) empfangen werden, wobei
a1) ,wenn das jeweilige ermittelnde Sendeempfangsgerät (SEG) nur von einem Primär-Sendeempfangsgerät (P-SEG) der weiteren Sendeempfangsgeräte (SEG) ein Netzwerkexistenzsignal (NES) empfängt, das Primär-Sendeempfangsgerät (P-SEG) die Basisstationsfunktionalität besitzt und somit das erste Sendeempfangsgerät (SEG1, BS) ist oder
a2) ,wenn das jeweilige ermittelnde Sendeempfangsgerät (SEG) von mehreren Sekundär-Sendeempfangsgeräten (S-SEG) der weiteren Sendeempfangsgeräte (SEG) jeweils ein Netzwerkexistenzsignal (NES) empfängt, das ermittelnde Sendeempfangsgerät (SEG) den Sekundär-Sendeempfangsgeräten (S-SEG) mit Ausnahme eines ersten Sekundär-Sendeempfangsgerätes (S1-SEG) oder allen Sekundär-Sendeempfangsgeräten (S-SEG) jeweils ein Anweisungssignal (AS) sendet, mit dem das betreffende Sekundär-Sendeempfangsgerät (S-SEG) jeweils angewiesen wird, das Aussenden des Netzwerkexistenzsignals (NES) zu beenden, womit das erste Sekundär-Sendeempfangsgerät (S1-SEG) beziehungsweise das ermittelnde Sendeempfangsgerät (SEG) die Basisstationsfunktionalität besitzt und das erste Sendeempfangsgerät (SEG1, BS) ist und womit das Sekundär-Sendeempfangsgerät (S-SEG) das zweite Sendeempfangsgerät (SEG2) ist oder
a3) wenn das jeweilige ermittelnde Sendeempfangsgerät (SEG) kein Netzwerkexistenzsignal (NES) von den weiteren Sendeempfangsgeräten (SEG) empfängt, das ermittelnde Sendeempfangsgerät (SEG) mit dem Aufspannen eines eigenen Netzwerkes beginnt, indem es das Netzwerkexistenzsignal (NES) aussendet, womit das ermittelnde Sendeempfangsgerät (SEG) entweder das Primär-Sendeempfangsgerät (P-SEG) oder das erste Sekundär-Sendeempfangsgerät (S1-SEG) oder das das Anweisungssignal (AS) erhaltende Sekundär-Sendeempfangsgerät (S-SEG) ist.

18. Kommunikationsnetzwerk nach Anspruch 17, **dadurch gekennzeichnet, dass**
das erste Sekundär-Sendeempfangsgerät (S1-SEG) derart ausgebildet ist, dass es das Netzwerkexistenzsignal (NES) als erstes sendet.

19. Kommunikationsnetzwerk nach Anspruch 16, **dadurch gekennzeichnet, dass**
ein drittes Sendeempfangsgerät (SEG3) der ersten und zweiten Sendeempfangsgeräte (SEG1, BS, SEG2) vorhanden ist, das einem Festnetz (FN) zugeordnet wird und das in Kommunikationsreichweite zum ersten Sendeempfangsgerät (SEG1, BS) und zum zweiten Sendeempfangsgerät (SEG2), das am besten für die Übernahme der Basisstationsfunktionalität geeignet ist, betrieben wird.

20. Kommunikationsnetzwerk nach Anspruch 19, **dadurch gekennzeichnet , dass**
das dritte Sendeempfangsgerät (SEG3) derart ausgebildet ist, dass es während der Messphase eine spezielle Identifikationsinformation (IDI) aussendet, mit der es die in unmittelbarer Kommunikationsreichweite befindlichen Sendeempfangsgeräte (SEG) über den vorhandenen Festnetzzugang informiert.

21. Kommunikationsnetzwerk nach Anspruch 19 oder 20, **dadurch gekennzeichnet, dass**
das erste Sendeempfangsgerät (SEG1, BS) derart ausgebildet ist, dass es dem dritten Sendeempfangsgerät (SEG3) eine Netzwerkzustandsinformation (NZI) sendet, mit der das dritte Sendeempfangsgerät (SEG3) aktuelle Konfigurationsdaten über das drahtlose Kommunikationsnetzwerk (KNW) und der diesem zugeordnete Sendeempfangsgeräte (SEG) erhält.

22. Kommunikationsnetzwerk nach Anspruch 19 oder 20, **dadurch gekennzeichnet, dass**
das dritte Sendeempfangsgerät (SEG3) und das erste Sendeempfangsgerät (SEG1, BS) ein und dasselbe Sendeempfangsgerät sind.

23. Kommunikationsnetzwerk nach Anspruch 16, **dadurch ge- kennzeichnet, dass**
eine erste Hinweisinformation (HWI1) generiert und gespeichert ist, mit der die Anzahl der empfangenen Sendeempfangsgeräte (SEG) angegeben wird.

24. Kommunikationsnetzwerk nach Anspruch 16 oder 23, **dadurch gekennzeichnet, dass**
eine zweite Hinweisinformation (HWI2) generiert und gespeichert ist, die die Empfangsqualität angibt, mit der die empfangenen Sendeempfangsgeräte (SEG) jeweils empfangen werden.

25. Kommunikationsnetzwerk nach Anspruch 16, 23 oder 24, **dadurch gekennzeichnet, dass**
eine dritte Hinweisinformation (HWI3) generiert und gespeichert ist, mit der die Existenz eines privilegierten Sendeempfangsgerätes unter den empfangenen Sendeempfangsgeräten (SEG) angegeben wird.

26. Kommunikationsnetzwerk nach Anspruch 16, 23, 24 oder 25, **dadurch gekennzeichnet, dass**
eine vierte Hinweisinformation (HWI4) generiert und gespeichert ist, mit der die Gerätetypen der empfangenen Sendeempfangsgeräte (SEG) angegeben werden.

27. Kommunikationsnetzwerk nach Anspruch 16, **dadurch gekennzeichnet , dass**
der von den in Kommunikationsreichweite befindlichen Sendeempfangsgeräten (SEG) erfasste Signalverkehr (SV) spezielle in vorgegebenen Zeitrahmen gesendete Broadcast-Meldungen umfasst.

28. Kommunikationsnetzwerk nach Anspruch 16 oder 27, **dadurch gekennzeichnet , dass**
jedes Sendeempfangsgerät (SEG) derart ausgebildet ist, dass es in der Messphase eine Auswerteinformation (AWI) über die Signalqualitätsänderung des von den in Kommunikationsreichweite befindlichen Sendeempfangsgeräten (SEG) jeweils empfangenen Signalverkehrs (SV) generiert und die Regelmäßigkeit der Zeitabstände für die Messphase in Abhängigkeit von dieser Auswerteinformation (AWI) bemisst.

29. Kommunikationsnetzwerk nach einem der Ansprüche 16 bis 28, **dadurch gekennzeichnet, dass**
die Sendeempfangsgeräte (SEG) jeweils stationäre und/oder mobile Geräte sind.

30. Kommunikationsnetzwerk nach Anspruch 16, **dadurch gekennzeichnet , dass**
das Kommunikationsnetzwerk (KNW) als "Wireless Local Area Network" oder als DECT-Schnurlostelefonsystem ausgebildet ist.

31. Basisstation eines drahtlosen selbstorganisierenden Kommunikationsnetzwerkes, die
a) eine Zentrale Steuereinheit (ZST) zur Steuerung der Bedienungs- und Funktionsabläufe in der Basisstation (BS) und Sendeempfangsmittel (SEM) aufweist, die miteinander verbunden und derart ausgebildet sind, dass die Basisstation (BS) mit mindestens einem Sendeempfangsgerät (SEG) des Kommunikationsnetzwerkes (KNW) unmittelbar oder mittelbar, über ein weiteres Sendeempfangsgerät (SEG), durch drahtlose Kommunikation verkehrt,
b) unmittelbar in Kommunikationsreichweite zu mindestens einem Erst-Sendeempfangsgerät (E-SEG) und/oder mittelbar, über mindestens einem weiteren Erst-Sendeempfangsgerät (E-SEG) in Kommunikationsreichweite zu dem Erst-Sendeempfangsgerät (E-SEG) bzw. den Erst-Sendeempfangsgeräten (E-SEG), angeordnet ist,
**dadurch gekennzeichnet, dass**
c) erste Auswertemittel (AWM1) vorhanden sind, die der Zentralen Steuereinheit (ZST) zugeordnet sind und wobei die Zentrale Steuereinheit (ZST) mit den ersten Auswertemitteln (AWM1) sowie die Sendeempfangsmittel (SEM) derart ausgebildet sind, dass in regelmäßigen Zeitabständen während einer Messphase zumindest ein Teil eines Signalverkehrs (SV) von in Kommunikationsreichweite befindlichen Erst-Sendeempfangsgeräten (E-SEG) erfasst und dabei die Empfangbarkeit der Erst-Sendeempfangsgeräte (E-SEG) festgestellt wird,
d) erste Informationserzeugungsmittel (IEM1) und Speichermittel (SPM) vorhanden sind, die der Zentralen Steuereinheit (ZST) zugeordnet sind und wobei die Zentrale Steuereinheit (ZST) mit den ersten Auswertemitteln (AWM1), Speichermitteln (SPM) und ersten Informationserzeugungsmitteln (IEM1) derart ausgebildet ist, dass mindestens eine Hinweisinformation (HWI, HWI1...4) über die insgesamt empfangenen Erst-Sendeempfangsgeräte (E-SEG) generiert und gespeichert wird,
e) Nachrichtenerzeugungsmittel (NEM) vorhanden sind, die der Zentralen Steuereinheit (ZST) zugeordnet sind und wobei die Zentrale Steuereinheit (ZST) mit den Nachrichtenerzeugungsmitteln (NEM) sowie die Sendeempfangsmittel (SEM) derart ausgebildet sind, dass nach der Messphase eine Verteilnachricht (VN) ausgesendet wird, mit der die Erst-Sendeempfangsgeräte (E-SEG), die diese Nachricht empfangen und die ihrerseits auch jeweils mindestens eine Hinweisinformation (HWI, HWI1...4) über die insgesamt von dem jeweiligen Erst-Sendeempfangsgerät (E-SEG) empfangenen Sendeempfangsgeräte (SEG) generiert und gespeichert haben, aufgefordert werden diese Hinweisinformationen (HWI, HWI1...4) an die Basisstation (BS) zu senden,
f) die Sendeempfangsmittel (SEM) derart ausgebildet sind, dass die von den Erst-Sendeempfangsgeräten (E-SEG) gesendeten Hinweisinformationen (HWI, HWI1...4) empfangen werden,
g) zweite Auswertemittel (AWM2) vorhanden sind, die der Zentralen Steuereinheit (ZST) zugeordnet sind und wobei die Zentrale Steuereinheit (ZST) mit den zweiten Auswertemitteln (AWM2) sowie die Sendeempfangsmittel (SEM) derart ausgebildet sind, dass anhand der an die Basisstation (BS) übertragenen und der von der Basisstation (BS) selbst generierten Hinweisinformationen (HWI, HWI1...4) ermittelt wird, welches der korrespondierenden Erst-Sendeempfangsgeräte (E-SEG) im Vergleich zu der Basisstation (BS) am besten geeignet ist, die Basisstationsfunktionalität der Basisstation (BS) zu übernehmen,
h) zweite Informationserzeugungsmittel (IEM2) vorhanden sind, die der Zentralen Steuereinheit (ZST) zugeordnet sind und wobei die Zentrale Steuereinheit (ZST) mit den zweiten Informationserzeugungsmitteln (IEM2) und die Sendeempfangsmittel (SEM) derart ausgebildet sind, dass eine Steuerungsinformation (STI) generiert wird, diese an das Erst-Sendeempfangsgerät (E-SEG), das am besten für die Übernahme der Basisstationsfunktionalität geeignet ist, gesendet wird und damit die Basisstationsfunktionalität auf das betreffende Erst-Sendeempfangsgerät (E-SEG) übertragen wird, während das Generieren und Versenden der Steuerungsinformation (STI) unterbleibt und damit die Basisstation (BS) die Basisstationsfunktionalität behält, wenn keines der Erst-Sendeempfangsgeräte (E-SEG) im Vergleich zu der Basisstation (BS) für die Übernahme der Basisstationsfunktionalität besser geeignet ist.

32. Basisstation nach Anspruch 31, **dadurch gekennzeichnet, dass**
die Basisstation (BS) einem Festnetz (FN) zugeordnet ist.

33. Basisstation nach Anspruch 32, **dadurch gekennzeichnet, dass**
dritte Informationserzeugungsmittel (IEM3) vorhanden sind, die der Zentralen Steuereinheit (ZST) zugeordnet sind und wobei die Zentrale Steuereinheit (ZST) mit den dritten Informationserzeugungsmitteln (IEM3) und die Sendeempfangsmittel (SEM) derart ausgebildet sind, dass die Basisstation (BS) während der Messphase eine spezielle Identifikationsinformation (IDI) aussendet, mit der es die in unmittelbarer Kommunikationsreichweite befindlichen Erst-Sendeempfangsgeräte (E-SEG) über den vorhandenen Festnetzzugang informiert.

34. Basisstation nach Anspruch 32 oder 33, **dadurch gekennzeichnet, dass**
Netzwerkzustandsinformationserzeugungsmittel (NZIEM3) vorhanden sind, die der Zentralen Steuereinheit (ZST) zugeordnet sind und wobei die Zentrale Steuereinheit (ZST) mit den Netzwerkzustandsinformationserzeugungsmittel (NZIEM3) und die Sendeempfangsmittel (SEM) derart ausgebildet sind, dass die Basisstation (BS) dem in unmittelbarer Kommunikationsreichweite befindlichen Erst-Sendeempfangsgeräte (E-SEG), das den Festnetzzugang besitzt, eine Netzwerkzustandsinformation (NZI) sendet, mit der das den Festnetzzugang besitzende dritte Erst-Sendeempfangsgeräte (E-SEG) aktuelle Konfigurationsdaten über das drahtlose Kommunikationsnetzwerk (KNW) und der diesem zugeordnete Sendeempfangsgeräte (SEG) erhält.

35. Basisstation nach Anspruch 31, **dadurch gekennzeichnet, dass**
eine erste Hinweisinformation (HWI1) generiert und gespeichert ist, mit der die Anzahl der empfangenen Erst-Sendeempfangsgeräte (E-SEG) angegeben wird.

36. Basisstation nach Anspruch 31 oder 35, **dadurch ge- kennzeichnet , dass**
eine zweite Hinweisinformation (HWI2) generiert und gespeichert ist, die die Empfangsqualität angibt, mit der die empfangenen Erst-Sendeempfangsgeräte (E-SEG) jeweils empfangen werden.

37. Basisstation nach Anspruch 31, 35 oder 36, **dadurch gekennzeichnet, dass**
eine dritte Hinweisinformation (HWI3) generiert und gespeichert ist, mit der die Existenz eines privilegierten Sendeempfangsgerätes unter den empfangenen Erst-Sendeempfangsgeräten (E-SEG) angegeben wird.

38. Basisstation nach Anspruch 31, 35, 36 oder 37, **dadurch gekennzeichnet , dass**
eine vierte Hinweisinformation (HWI4) generiert und gespeichert wird, mit der die Gerätetypen der empfangenen Erst-Sendeempfangsgeräte (E-SEG) angegeben werden.

39. Basisstation nach Anspruch 31, **dadurch gekennzeichnet, dass**
der von den Erst-Sendeempfangsgeräten (E-SEG) erfasste Signalverkehr (SV) spezielle in vorgegebenen Zeitrahmen gesendete Broadcast-Meldungen umfasst.

40. Basisstation nach Anspruch 31 oder 39, **dadurch gekennzeichnet, dass**
die ersten Auswertemittel (AWM1) derart ausgebildet sind, dass in der Messphase eine Auswerteinformation (AWI) über die Signalqualitätsänderung des von den Erst-Sendeempfangsgeräten (E-SEG) jeweils empfangenen Signalverkehrs (SV) generiert und
die Regelmäßigkeit der Zeitabstände für die Messphase in Abhängigkeit von dieser Auswerteinformation (AWI) bemessen wird.

41. Basisstation nach einem der Ansprüche 31 bis 40, **dadurch gekennzeichnet, dass**
die Basisstation (BS) jeweils ein stationäres und/oder mobiles Gerät ist.

42. Basisstation nach Anspruch 31, **dadurch gekennzeichnet, dass**
das Kommunikationsnetzwerk (KNW) als "Wireless Local Area Network" oder als DECT-Schnurlostelefonsystem ausgebildet ist.

## Claims

1. Method for establishing a wireless, autonomous communications network, in which
a) multiple transceivers (SEG) are assigned to the communications network (KNW), which transceivers respectively communicate with one another directly or indirectly, via one transceiver (SEG) of the transceivers (SEG), by means of wireless communication, wherein
a1) a base station functionality for operating as a base station (BS) is assigned to at least one first transceiver (SEG),
a2) second transceivers (SEG2) are operated directly and/or indirectly, via at least one further second transceiver (SEG2), within communication range of the first transceiver (SEG1, BS),
**characterised in that**
b) at regular time intervals during a measurement phase at least a part of a signal traffic (SV) of transceivers (SEG) located within communication range is recorded by each transceiver (SEG),
c) with the aid of the signal traffic (SV), the receivability of the transceivers (SEG) is determined and at least one advisory information (HWI, HWI1...4) about the overall transceivers (SEG) received is generated and stored by each transceiver (SEG) respectively,
d) after the measurement phase, a distribution message (VN) is emitted by the first transceiver (SEG1, BS), by means of which distribution message the second transceivers (SEG2) which receive this message are respectively prompted to transmit the advisory information (HWI, HWI1...4) to the first transceiver (SEG1, BS),
e) it is determined in the first transceiver (SEG1, BS) from the auto-generated and the transmitted advisory information (HWI, HWI1...4) which of the corresponding second transceivers (SEG2) is, in comparison with the first transceiver (SEG1, BS), best suited to take over the base station functionality from the first transceiver (SEG1, BS),
f) in order to transfer the base station functionality, a control information (STI) is generated by the first transceiver (SEG1, BS) and this is transmitted to the second transceiver (SEG2) that is best suited to take over the base station functionality, while the generation and sending of control information (STI) is discontinued and the first transceiver (SEG1, BS) thus retains the base station functionality if, in comparison with the first transceiver (SEG1, BS), none of the second transceivers (SEG2) is better suited to take over the base station functionality.

2. Method according to claim 1,
**characterised in that**
the base station functionality is assigned to the first transceiver (SEG1, BS), **in that**
a) each transceiver (SEG) assigned to the communications network (KNW) determines whether network existence signals (NES) indicating the existence of a network are received from further transceivers (SEG) located within communication range, wherein
a1) if the respective determining transceiver (SEG) receives a network existence signal (NES) only from a primary transceiver (P-SEG) of the further transceivers (SEG), the primary transceiver (P-SEG) holds the base station functionality and is consequently the first transceiver (SEG1, BS) or
a2) if the respective determining transceiver (SEG) receives a network existence signal (NES) respectively from multiple secondary transceivers (S-SEG) of the further transceivers (SEG), the determining transceiver (SEG) transmits an instruction signal (AS) to each of the secondary transceivers (S-SEG) with the exception of a first secondary transceiver (S1-SEG) or to all the secondary transceivers (S-SEG), by means of which instruction signal the secondary transceiver (S-SEG) concerned is respectively instructed to discontinue emitting network existence signals (NES), whereupon the first secondary transceiver (S1-SEG) or the determining transceiver (SEG) holds the base station functionality and is the first transceiver (SEG1, BS) and whereupon the secondary transceiver (S-SEG) is the second transceiver (SEG2) or
a3) if the respective determining transceiver (SEG) does not receive any network existence signal (NES) from the further transceivers (SEG), the determining transceiver (SEG) starts to set up its own network by emitting the network existence signal (NES), whereupon the determining transceiver (SEG) is either the primary transceiver (P-SEG) or the first secondary transceiver (S1-SEG) or the secondary transceiver (S-SEG) receiving the instruction signal (AS).

3. Method according to claim 2,
**characterised in that**
the first secondary transceiver (S1-SEG) is the first to transmit the network existence signal (NES).

4. Method according to claim 1,
**characterised in that**
a third transceiver (SEG3) of the first and second transceivers (SEG1, BS, SEG2) is assigned to a fixed network, (FN) which is operated within communication range of the first transceiver (SEG1, BS) and of the second transceiver (SEG2) that is best suited for taking over the base station functionality.

5. Method according to claim 4,
**characterised in that**
during the measurement phase, the third transceiver (SEG3) emits a special identification information (IDI) by means of which it informs the transceivers located in direct communication range about the existing fixed-network access.

6. Method according to claim 4 or 5,
**characterised in that**
the first transceiver (SEG1, BS) transmits to the third transceiver (SEG3) a network state information (NZI) by means of which the third transceiver (SEG3) obtains current configuration data about the wireless communications network (KNW) and the transceivers (SEG) assigned to said wireless communications network.

7. Method according to claim 4 or 5,
**characterised in that**
the third transceiver (SEG3) is used as the first transceiver (SEG1, BS).

8. Method according to claim 1,
**characterised in that**
a first advisory information (HWI1), by means of which the number of transceivers (SEG) received is indicated, is generated and stored.

9. Method according to claim 1 or 8,
**characterised in that**
a second advisory information (HWI2), which indicates the reception quality with which the received transceivers (SEG) are respectively received, is generated and stored.

10. Method according to claims 1, 8 or 9,
**characterised in that**
a third advisory information (HWI3), by means of which the existence of a privileged transceiver among the received transceivers (SEG) is indicated, is generated and stored.

11. Method according to claim 1, 8, 9 or 10,
**characterised in that**
a fourth advisory information (HWI4), by means of which the device types of the received transceivers (SEG) are indicated, is generated and stored.

12. Method according to claim 1,
**characterised in that**
the signal traffic (SV) recorded by the transceivers (SEG) located within communication range comprises special broadcast messages transmitted in predetermined time frames.

13. Method according to claim 1 or 12,
**characterised in that**
each transceiver (SEG) generates in the measurement phase an evaluation information (AWI) about the change in signal quality of the signal traffic (SV) received respectively from the transceivers (SEG) located within communication range and, depending on this evaluation information (AWI), measures the regularity of the time intervals for the measurement phase.

14. Method according to one of claims 1 to 13,
**characterised in that**
the transceivers (SEG) are operated as fixed and/or mobile devices respectively.

15. Method according to claim 1,
**characterised in that**
the communications network (KNW) is operated as a wireless local area network or as a DECT cordless telephone system.

16. Wireless, autonomous communications network comprising
a) multiple transceivers (SEG) which respectively communicate with one another directly or indirectly, via one transceiver (SEG) of the transceivers (SEG), by means of wireless communication,
b) at least one first transceiver (SEG) of the transceivers (SEG) which, through assignment of a base station functionality, functions as a base station (BS),
c) second transceivers (SEG2) of the transceivers (SEG) which are arranged directly or indirectly, via at least one further second transceiver (SEG2), within communication range of the first transceiver (SEG1, BS),
**characterised in that**
d) each transceiver (SEG) records at regular time intervals during a measurement phase at least one part of a signal traffic (SV) of transceivers located within communication range, determines the receivability of the transceivers (SEG) and generates and stores from each transceiver (SEG) respectively at least one advisory information (HWI, HWI1...4) about the overall transceivers (SEG) received,
e) the first transceiver (SEG1) emits after the measurement phase a distribution message (VN) by means of which it prompts the second transceivers (SEG2) that receive this message to transmit the advisory information (HWI, HWI1...4) to the first transceiver (SEG1),
f) each second transceiver (SEG2) receiving the distribution message (VN) transmits the advisory information (HWI, HWI1...4) to the first transceiver (SEG1, BS),
g) the first transceiver (SEG1, BS) determines with the aid of the auto-generated and the transmitted advisory information (HWI, HWI1...4) which of the corresponding second transceivers (SEG2) is best suited, in comparison with the first transceiver (SEG1, BS), to take over the base station functionality from the first transceiver (SEG1, BS),
h) the first transceiver (SEG1, BS) generates a control information (STI), transmits this to the second transceiver (SEG2) that is best suited for taking over the base station functionality and thus transmits the base station functionality to the second transceiver (SEG2) concerned, while the generation and sending of control information (STI) is discontinued and thus the first transceiver (SEG1, BS) retains the base station functionality if none of the second transceivers (SEG2) is better suited, in comparison with the first transceiver (SEG1, BS), for taking over the base station functionality.

17. Communications network according to claim 16,
**characterised in that**
a) for the assignment of the base station functionality, the transceivers (SEG) assigned to the communications network (KNW) respectively determine whether network existence signals indicating the existence of the network are received from further transceivers (SEG) located within communication range, wherein
a1) if the respective determining transceiver (SEG) receives a network existence signal (NES) only from a primary transceiver (P-SEG) of the further transceivers (SEG), the primary transceiver (P-SEG) holds the base station functionality and is consequently the first transceiver (SEG1, BS) or
a2) if the respective determining transceiver (SEG) receives a network existence signal (NES) respectively from multiple secondary transceivers (S-SEG) of the further transceivers (SEG), the determining transceiver (SEG) transmits respectively an instruction signal (AS) to the secondary transceivers (S-SEG) with the exception of a first secondary transceiver (S1-SEG) or to all the secondary transceivers (S-SEG), by means of which instruction signal the secondary transceiver (S-SEG) concerned is respectively instructed to discontinue emitting the network existence signal (NES), whereupon the first secondary transceiver (S1-SEG) or the determining transceiver (SEG) holds the base station functionality and is the first transceiver (SEG1, BS) and whereupon the secondary transceiver (S-SEG) is the second transceiver (SEG2) or
a3) if the respective determining transceiver (SEG) does not receive any network existence signal (NES) from the further transceivers (SEG), the determining transceiver (SEG) starts to set up its own network by emitting the network existence signal (NES), whereupon the determining transceiver (SEG) is either the primary transceiver (P-SEG) or the first secondary transceiver (S1-SEG) or the secondary transceiver (S-SEG) receiving the instruction signal (AS).

18. Communications network according to claim 17,
**characterised in that**
the first secondary transceiver (S1-SEG) is the first to transmit the network existence signal (NES).

19. Communications network according to claim 16,
**characterised in that**
a third transceiver (SEG3) of the first and second transceivers (SEG1, BS, SEG2) exists which is assigned to a fixed network (FN) and which is operated within communication range of the first transceiver (SEG1, BS) and of the second transceiver (SEG2) that is best suited for taking over the base station functionality.

20. Communications network according to claim 19,
**characterised in that**
during the measurement phase, the third transceiver (SEG3) emits a special identification information (IDI) by means of which it informs the transceivers (SEG) located within direct communication range about the existing fixed-network access.

21. Communications network according to claim 19 or claim 20,
**characterised in that**
the first transceiver (SEG1, BS) transmits to the third transceiver (SEG3) a network state information (NZI) by means of which the third transceiver (SEG3) obtains current configuration data about the wireless communications network (KNW) and the transceivers (SEG) assigned to said wireless communications network.

22. Communications network according to claim 19 or 20,
**characterised in that**
the third transceiver (SEG3) and the first transceiver (SEG1, BS) are one and the same transceiver.

23. Communications network according to claim 16,
**characterised in that**
a first advisory information (HWI1), by means of which the number of transceivers (SEG) received is indicated, is generated and stored.

24. Communications network according to claim 16 or claim 23,
**characterised in that**
a second advisory information (HWI2), which indicates the reception quality with which the transceivers (SEG) received are respectively received, is generated and stored.

25. Communications network according to claim 16, 23 or 24,
**characterised in that**
a third advisory information (HWI3), by means of which the existence of a privileged transceiver among the transceivers (SEG) received is indicated, is generated and stored.

26. Communications network according to claim 16, 23, 24 or 25,
**characterised in that**
a fourth advisory information (HWI4), by means of which the device types of the transceivers (SEG) received are indicated, is generated and stored.

27. Communications network according to claim 16,
**characterised in that**
the signal traffic (SV) recorded by the transceivers (SEG) located within communications range comprises special broadcast messages transmitted in predetermined time frames.

28. Communications network according to claim 16 or claim 27,
**characterised in that**
each transceiver (SEG) generates in the measurement phase an evaluation information (AWI) about the change in signal quality of the signal traffic (SV) received respectively from the transceivers (SEG) located within communication range and, depending on this evaluation information (AWI), measures the regularity of the time intervals for the measurement phase.

29. Communications network according to one of claims 16 to 28,
**characterised in that**
the transceivers (SEG) are fixed and/or mobile devices respectively.

30. Communications network according to claim 16,
**characterised in that**
the communications network (KNW) is configured as a wireless local area network or as a DECT cordless telephone system.

31. Base station of a wireless, autonomous communications network which
a) has a central control unit (ZST) for controlling the operational and functional flows in the base station (BS) and transceiver means (SEM) which are connected to one another and configured such that the base station (BS) communicates with at least one transceiver (SEG) of the communications network (KNW) directly or indirectly, via a further transceiver (SEG), by means of wireless communication,
b) is arranged directly within communication range of at least one first transceiver (E-SEG) and/or indirectly, via at least one further first transceiver (E-SEG), within communication range of the first transceiver (E-SEG) or the first transceivers (E-SEG)
**characterised in that**
c) first evaluation means (AWM1) exist which are assigned to the central control unit (ZST) and wherein the central control unit (ZST) with the first evaluation means (AWM1) as well as the transceiver means (SEM) are configured such that at regular time intervals during a measurement phase at least one part of a signal traffic (SV) from first transceivers (E-SEG) located within communication range is recorded and, in the process, the receivability of the first transceivers (E-SEG) is determined,
d) first information generation means (IEM1) and memory means (SPM) exist which are assigned to the central control unit (ZST) and wherein the central control unit (ZST) with the first evaluation means (AWM1), memory means (SPM) and first information generation means (IEM1) are configured such that at least one advisory information (HWI, HWI1...4) about the first transceivers (E-SEG) received overall is generated and stored,
e) message information generation means (NEM) exist which are assigned to the central control unit (ZST) and wherein the central control unit (ZST) with the message information generation means (NEM) and the transceiver means (SEM) are configured such that after the measurement phase a distribution message (VN) is emitted by means of which the first transceivers (E-SEG) which receive this message and which in turn have also generated and stored respectively at least one advisory information (HWI, HWI1...4) about the transceivers (SEG) received overall from the respective first transceiver (E-SEG) are prompted to transmit this advisory information (HWI, HWI1...4) to the base station (BS),
f) the transceiver means (SEM) are configured such that the advisory information (HWI, HWI1...4) transmitted by the first transceivers (E-SEG) is received,
g) second evaluation means (AWM2) exist which are assigned to the central control unit (ZST) and wherein the central control unit (ZST) with the second evaluation means (AWM2) and the transceiver means (SEM) are configured such that, with the aid of the advisory information (HWI, HWI1...4) transmitted to the base station (BS) and auto-generated by the base station (BS), it is determined which of the corresponding first transceivers (E-SEG) is best suited, in comparison with the base station (BS), to take over the base station functionality of the base station (BS),
h) second information generation means (IEM2) exist which are assigned to the central control unit (ZST) and wherein the central control unit (ZST) with the second information generation means (IEM2) and the transceiver means (SEM) are configured such that a control information (STI) is generated, said control information is transmitted to the first transceiver (E-SEG) which is best suited for taking over the base station functionality, and thus the base station functionality is transferred to the first transceiver (E-SEG) concerned, while the generation and sending of control information (STI) is discontinued and the base station (BS) thus retains the base station functionality if, in comparison with the base station (BS), none of the first transceivers (E-SEG) is better suited for taking over the base station functionality.

32. Base station according to claim 31,
**characterised in that**
the base station (BS) is assigned to a fixed network (FN).

33. Base station according to claim 32,
**characterised in that**
third information generation means (IEM3) exist which are assigned to the central control unit (ZST) and wherein the central control unit (ZST) with the third information generation means (IEM3) and the transceiver means (SEM) are configured such that, during the measurement phase, the base station (BS) transmits a special identification information (IDI), by means of which it informs the first transceivers (E-SEG) located within direct communication range about the existing fixed-network access.

34. Base station according to claim 32 or claim 33,
**characterised in that**
network state information generation means (NZIEM3) exist which are assigned to the central control unit (ZST) and
wherein the central control unit (ZST) with the network state information generation means (NZIEM3) and the transceiver means (SEM) are configured such that the base station (BS) transmits to the first transceiver (E-SEG) which holds the fixed-network access a network state information (NZI), by means of which the third first transceiver (E-SEG) holding the fixed-network access obtains current configuration data about the wireless communications network (KNW) and the transceivers (SEG) assigned to said communications network.

35. Base station according to claim 31,
**characterised in that**
a first advisory information (HWI1), by means of which the number of first transceivers (E-SEG) received is indicated, is generated and stored.

36. Base station according to claim 31 or claim 35,
**characterised in that**
a second advisory information (HWI2), which indicates the reception quality with which the first transceivers (E-SEG) received are respectively received, is generated and stored.

37. Base station according to claim 31, 35 or 36,
**characterised in that**
a third advisory information (HWI3), by means of which the existence of a privileged transceiver among the received first transceivers (E-SEG) is indicated, is generated and stored.

38. Base station according to claim 31, 35, 36 or 37,
**characterised in that**
a fourth advisory information (HWI4), by means of which the device types of the received first transceivers (E-SEG) are indicated, is generated and stored.

39. Base station according to claim 31,
**characterised in that**
the signal traffic (SV) recorded by the first transceivers (E-SEG) comprises special broadcast messages transmitted in predetermined time frames.

40. Base station according to claim 31 or 39,
**characterised in that**
the first evaluation means (AWM1) are configured such that in the measurement phase an evaluation information (AWI) about the change in signal quality of the signal traffic (SV) received respectively by the first transceivers (E-SEG) is generated and, depending on said evaluation information (AWI), the regularity of the time intervals for the measurement phase is measured.

41. Base station according to one of claims 31 to 40,
**characterised in that**
the base station (BS) is respectively a fixed and/or mobile device.

42. Base station according to claim 31,
**characterised in that**
the communications network (KNW) is configured as a wireless local area network or as a DECT cordless telephone system.

## Revendications

1. Procédé pour établir un réseau de communication auto-organisant sans fil, dans lequel
a) plusieurs appareils émetteurs récepteurs (SEG) sont associés au réseau de communication (KNW), lesquels communiquent respectivement entre eux par communication sans fil, directement ou indirectement, via un appareil émetteur récepteur (SEG) des appareils émetteurs récepteurs (SEG),
a1) une fonctionnalité de station de base étant attribuée à au moins un premier appareil émetteur récepteur (SEG1) pour le fonctionnement en tant que station de base (BS),
a2) des deuxièmes appareils émetteurs récepteurs (SEG2) étant exploités directement et/ou indirectement, via au moins un autre deuxième appareil émetteur récepteur (SEG2), en portée de communication avec le premier appareil émetteur récepteur (SEG1, BS),
**caractérisé en ce que**
b) au moins une partie d'un trafic de signaux (SV) d'appareils émetteurs récepteurs (SEG) qui sont en portée de communication est détectée à intervalles de temps réguliers pendant une phase de mesure par chaque appareil émetteur récepteur (SEG),
c) l'aptitude des appareils émetteurs récepteurs (SEG) à être reçus est constatée à l'aide du trafic de signaux (SV) et au moins une information indicatrice (HWI, HWI1 ... 4) concernant les appareils émetteurs récepteurs (SEG) reçus au total est respectivement générée et mise en mémoire par chaque appareil émetteur récepteur (SEG),
d) après la phase de mesure, le premier appareil émetteur récepteur (SEG1, BS) émet un message de diffusion (VN) avec lequel les deuxièmes appareils émetteurs récepteurs (SEG2) qui reçoivent ce message sont respectivement invités à envoyer l'information indicatrice (HWI, HWI1 ... 4) au premier appareil émetteur récepteur (SEG1, BS),
e) il est déterminé, dans le premier appareil émetteur récepteur (SEG1, BS), à l'aide des informations indicatrices auto-générées et des informations indicatrices transmises (HWI, HWI1 ... 4), lequel des deuxièmes appareils émetteurs récepteurs (SEG2) correspondants convient le mieux, en comparaison avec le premier appareil émetteur récepteur (SEG1, BS), pour la prise en charge de la fonctionnalité de station de base du premier appareil émetteur récepteur (SEG1, BS),
f) aux fins de la transmission de la fonctionnalité de station de base, une information de commande (STI) est générée par le premier appareil émetteur récepteur (SEG1, BS) et envoyée au deuxième appareil émetteur récepteur (SEG2) qui convient le mieux pour la prise en charge de la fonctionnalité de station de base tandis que la production et l'envoi de l'information de commande (STI) n'ont pas lieu et que, de la sorte, le premier appareil émetteur récepteur (SEG1, BS) conserve la fonctionnalité de station de base si aucun des deuxièmes appareils émetteurs récepteurs (SEG2), en comparaison avec le premier appareil émetteur récepteur (SEG1, BS), ne convient mieux pour la prise en charge de la fonctionnalité de station de base.

2. Procédé selon la revendication 1, **caractérisé en ce que** la fonctionnalité de station de base est attribuée au premier appareil émetteur récepteur (SEG1, BS) par le fait que
a) chaque appareil émetteur récepteur (SEG) associé au réseau de communication (KNW) détecte si des signaux d'existence de réseau (NES) indiquant l'existence d'un réseau sont reçus par d'autres appareils émetteurs récepteurs (SEG) qui sont en portée de communication,
a1) lorsque l'appareil émetteur récepteur détecteur respectif (SEG ne reçoit un signal d'existence de réseau (NES) que d'un appareil émetteur récepteur primaire (P-SEG) des autres appareils émetteurs récepteurs (SEG), l'appareil émetteur récepteur primaire (P-SEG),possède la fonctionnalité de station de base et est ainsi le premier appareil émetteur récepteur (SEG1, BS) ou
a2) lorsque l'appareil émetteur récepteur détecteur respectif (SEG) reçoit un signal d'existence de réseau (NES) respectivement de plusieurs appareils émetteurs récepteurs secondaires (S-SEG) des autres appareils émetteurs récepteurs (SEG), l'appareil émetteur récepteur détecteur (SEG),envoie aux appareils émetteurs récepteurs secondaires (S-SEG), à l'exception d'un premier appareil émetteur récepteur secondaire (S1-SEG), ou à tous les appareils émetteurs récepteurs secondaires (S-SEG), à chaque fois un signal d'instruction (AS) par lequel il est à chaque fois ordonné à l'appareil émetteur récepteur secondaire (S-SEG) concerné de terminer l'émission du signal d'existence de réseau (NES), le premier appareil émetteur récepteur secondaire (S1-SEG) respectivement l'appareil émetteur récepteur détecteur (SEG) possédant ainsi la fonctionnalité de station de base et étant le premier appareil émetteur récepteur (SEG1, BS) et l'appareil émetteur récepteur secondaire (S-SEG) étant le deuxième appareil émetteur récepteur (SEG2) ou
a3) lorsque l'appareil émetteur récepteur détecteur respectif (SEG) ne reçoit aucun signal d'existence de réseau (NES) des autres appareils émetteurs récepteurs (SEG), l'appareil émetteur récepteur détecteur (SEG), commence à tendre un propre réseau par émission du signal d'existence de réseau (NES), l'appareil émetteur récepteur détecteur (SEG) étant ainsi soit l'appareil émetteur récepteur primaire (P-SEG), soit le premier appareil émetteur récepteur secondaire (S1-SEG), soit l'appareil émetteur récepteur secondaire (S-SEG) qui reçoit le signal d'instruction (AS).

3. Procédé selon la revendication 2, **caractérisé en ce que** le premier appareil émetteur récepteur secondaire (S1-SEG) émet le signal d'existence de réseau (NES) en premier lieu.

4. Procédé selon la revendication 1, **caractérisé en ce qu'**un troisième appareil émetteur récepteur (SEG3) des premiers et deuxièmes appareils émetteurs récepteurs (SEG1, BS, SEG2) est associé à un réseau fixe (FN) qui est exploité en portée de communication avec le premier appareil émetteur récepteur (SEG1, BS) et avec le deuxième appareil émetteur récepteur (SEG2) qui convient le mieux pour la prise en charge de la fonctionnalité de station de base.

5. Procédé selon la revendication 4, **caractérisé en ce que** le troisième appareil émetteur récepteur (SEG3), pendant la phase de mesure, émet une information d'identification spéciale (IDI) par laquelle il informe de la présence de l'accès au réseau fixe les appareils émetteurs récepteurs (SEG) qui sont en portée de communication directe.

6. Procédé selon la revendication 4 ou 5, **caractérisé en ce que** le premier appareil émetteur récepteur (SEG1, BS) envoie au troisième appareil émetteur récepteur (SEG3) une information d'état de réseau (NZI) avec laquelle le troisième appareil émetteur récepteur (SEG3) reçoit des données de configuration actuelles sur le réseau de communication sans fil (KNW) et des appareils émetteurs récepteurs (SEG) qui y sont associés.

7. Procédé selon la revendication 4 ou 5, **caractérisé en ce que** le troisième appareil émetteur récepteur (SEG3) est utilisé en tant que premier appareil émetteur récepteur (SEG1, BS).

8. Procédé selon la revendication 1, **caractérisé en ce qu'**une première information indicatrice (HWI1) est générée et mise en mémoire, au moyen de laquelle est indiqué le nombre des appareils émetteurs récepteurs (SEG) reçus.

9. Procédé selon la revendication 1 ou 8, **caractérisé en ce qu'**une deuxième information indicatrice (HWI2) est générée et mise en mémoire, laquelle indique la qualité de la réception avec laquelle les appareils émetteurs récepteurs (SEG) reçus sont respectivement reçus.

10. Procédé selon la revendication 1, 8 ou 9, **caractérisé en ce qu'**une troisième information indicatrice (HWI3) est générée et mise en mémoire, au moyen de laquelle est indiquée l'existence d'un appareil émetteur récepteur privilégié parmi les appareils émetteurs récepteurs (SEG) reçus.

11. Procédé selon la revendication 1, 8, 9 ou 10, **caractérisé en ce qu'**une quatrième information indicatrice (HWI4) est générée et mise en mémoire, au moyen de laquelle sont indiqués les types d'appareil des appareils émetteurs récepteurs (SEG) reçus.

12. Procédé selon la revendication 1, **caractérisé en ce que** le trafic de signaux (SV) détecté par les appareils émetteurs récepteurs (SEG) qui sont en portée de communication inclut des messages broadcast spéciaux émis dans des trames temporelles prédéterminées.

13. Procédé selon la revendication 1 ou 12, **caractérisé en ce que** chaque appareil émetteur récepteur (SEG) génère, dans la phase de mesure, une information d'évaluation (AWI) sur la modification de la qualité de signal du trafic de signaux (SV) respectivement reçu par les appareils émetteurs récepteurs qui sont en portée de communication et mesure la régularité des intervalles de temps pour la phase de mesure en fonction de cette information d'évaluation (AWI).

14. Procédé selon l'une des revendications 1 à 13, **caractérisé en ce que** les appareils émetteurs récepteurs (SEG) sont exploités respectivement en tant qu'appareils fixes et/ou mobiles.

15. Procédé selon la revendication 1, **caractérisé en ce que** le réseau de communication (KNW) est exploité en tant que «Wireless Local Area Network» ou en tant que système de téléphonie sans fil DECT.

16. Réseau de communication auto-organisant sans fil, comportant
a) plusieurs appareils émetteurs récepteurs (SEG) qui communiquent respectivement entre eux par communication sans fil, respectivement directement ou indirectement, via un appareil émetteur récepteur (SEG) des appareils émetteurs récepteurs (SEG),
b) au moins un premier appareil émetteur récepteur (SEG1) des appareils émetteurs récepteurs (SEG) qui, du fait de l'affectation d'une fonctionnalité de station de base, fait office de station de base (BS),
c) des deuxièmes appareils émetteurs récepteurs (SEG2) des appareils émetteurs récepteurs (SEG) qui sont en portée de communication avec le premier appareil émetteur récepteur (SEG1, BS), directement et/ou indirectement, via au moins un autre deuxième appareil émetteur récepteur (SEG2),
**caractérisé en ce que** .
d) chaque appareil émetteur récepteur (SEG) détecte, à intervalles de temps réguliers, pendant une phase de mesure, au moins une partie d'un trafic de signaux (SV) d'appareils émetteurs récepteurs (SEG) qui sont en portée de communication, constate dans ce cadre l'aptitude des appareils émetteurs récepteurs (SEG) à être reçus et génère et met en mémoire respectivement au moins une information indicatrice (HWI, HWI1 ... 4) concernant les appareils émetteurs récepteurs reçus au total,
e) après la phase de mesure, le premier appareil émetteur récepteur (SEG1) émet un message de diffusion (VN) par lequel il invite les deuxièmes appareils émetteurs récepteurs (SEG2) qui reçoivent ce message à envoyer les informations indicatrices (HWI, HWI1 ... 4) au premier appareil émetteur récepteur (SEG1),
f) chaque deuxième appareil émetteur récepteur (SEG2) recevant le message de diffusion (VN) envoie l'information indicatrice (HWI, HWI1 ... 4) au premier appareil émetteur récepteur (SEG1, BS),
g) le premier appareil émetteur récepteur (SEG1, BS) détermine, à l'aide des informations indicatrices auto-générées et des informations indicatrices transmises (HWI, HWI1, ..., 4), lequel des deuxièmes appareils émetteurs récepteurs (SEG2) correspondants convient le mieux, en comparaison avec le premier appareil émetteur récepteur (SEG1, BS), pour la prise en charge de la fonctionnalité de station de base du premier appareil émetteur récepteur (SEG1, BS),
h) le premier appareil émetteur récepteur (SEG1, BS) génère une information de commande (STI), envoie celle-ci au deuxième appareil émetteur récepteur (SEG2) qui convient le mieux pour la prise en charge de la fonctionnalité de station de base et transfère ainsi la fonctionnalité de station de base au deuxième appareil émetteur récepteur (SEG2) concerné tandis que la production et l'envoi de l'information de commande (STI) n'ont pas lieu et que, de la sorte, le premier appareil émetteur récepteur (SEG1, BS) conserve la fonctionnalité de station de base si aucun des deuxièmes appareils émetteurs récepteurs (SEG2), en comparaison avec le premier appareil émetteur récepteur (SEG1, BS), ne convient mieux pour la prise en charge de la fonctionnalité de station de base.

17. Réseau de communication selon la revendication 16, **caractérisé en ce que**
a) aux fins de l'attribution de la fonctionnalité de station de base, les appareils émetteurs récepteurs (SEG) associés au réseau de communication (KNW) sont réalisés de manière telle qu'il est à chaque fois détecté si des signaux d'existence de réseau (NES) indiquant l'existence du réseau sont reçus par d'autres appareils émetteurs récepteurs (SEG) qui sont en portée de communication,
a1) lorsque l'appareil émetteur-récepteur détecteur respectif (SEG) ne reçoit un signal d'existence de réseau (NES) que d'un appareil émetteur récepteur primaire (P-SEG) des autres appareils émetteurs récepteurs (SEG), l'appareil émetteur récepteur primaire (P-SEG), possède la fonctionnalité de station de base et est ainsi le premier appareil émetteur récepteur (SEG1, BS) ou
a2) lorsque l'appareil émetteur récepteur détecteur respectif (SEG) reçoit un signal d'existence de réseau (NES) respectivement de plusieurs appareils émetteurs récepteurs secondaires (S-SEG) des autres appareils émetteurs récepteurs (SEG), l'appareil émetteur récepteur détecteur (SEG), envoie aux appareils émetteurs récepteurs secondaires (S-SEG) à l'exception d'un premier appareil émetteur récepteur secondaire (S1-SEG), ou à tous les appareils émetteurs récepteurs secondaires (S-SEG), respectivement un signal d'instruction (AS) par lequel il est à chaque fois ordonné à l'appareil émetteur récepteur secondaire (S-SEG) concerné de terminer l'émission du signal d'existence de réseau (NES), le premier appareil émetteur récepteur secondaire (S1-SEG) respectivement l'appareil émetteur récepteur détecteur (SEG) possédant ainsi la fonctionnalité de station de base et étant le premier appareil émetteur récepteur (SEG1, BS) et l'appareil émetteur récepteur secondaire (S-SEG) étant ainsi le deuxième appareil émetteur récepteur (SEG2) ou
a3) lorsque l'appareil émetteur récepteur détecteur respectif (SEG) ne reçoit aucun signal d'existence de réseau (NES) des autres appareils émetteurs récepteurs (SEG), l'appareil émetteur récepteur détecteur (SEG), commence à tendre un propre réseau par émission du signal d'existence de réseau (NES), l'appareil émetteur récepteur détecteur (SEG) étant ainsi soit l'appareil émetteur récepteur primaire (P-SEG), soit le premier appareil émetteur récepteur secondaire (S1-SEG), soit l'appareil émetteur récepteur secondaire (S-SEG) qui reçoit le signal d'instruction (AS).

18. Réseau de communication selon la revendication 17, **caractérisé en ce que** le premier appareil émetteur récepteur secondaire (S1-SEG) est réalisé de manière telle qu'il émet le signal d'existence de réseau (NES) en premier lieu.

19. Réseau de communication selon la revendication 16, **caractérisé par** la présence d'un troisième appareil émetteur récepteur (SEG3) des premiers et deuxièmes appareils émetteurs récepteurs (SEG1, BS, SEG2) qui est associé à un réseau fixe (FN) et qui est exploité en portée de communication avec le premier appareil émetteur récepteur (SEG1, BS) et avec le deuxième appareil émetteur récepteur (SEG2) qui convient le mieux pour la prise en charge de la fonctionnalité de station de base.

20. Réseau de communication selon la revendication 19, **caractérisé en ce que** le troisième appareil émetteur récepteur (SEG3) est réalisé de manière telle que, pendant la phase de mesure, il émet une information d'identification spéciale (IDI) par laquelle il informe de la présence de l'accès au réseau fixe les appareils émetteurs récepteurs (SEG) qui sont en portée de communication directe.

21. Réseau de communication selon la revendication 19 ou 20, **caractérisé en ce que** le premier appareil émetteur récepteur (SEG1, BS) est réalisé de manière telle qu'il envoie au troisième appareil émetteur récepteur (SEG3) une information d'état de réseau (NZI) avec laquelle le troisième appareil émetteur récepteur (SEG3) reçoit des données de configuration actuelles sur le réseau de communication sans fil (KNW) et des appareils émetteurs récepteurs (SEG) qui y sont associés.

22. Réseau de communication selon la revendication 19 ou 20, **caractérisé en ce que** le troisième appareil émetteur récepteur (SEG3) et le premier appareil émetteur récepteur (SEG1, BS) sont un seul et même appareil émetteur récepteur.

23. Réseau de communication selon la revendication 16, **caractérisé en ce qu'**une première information indicatrice (HWI1) est générée et mise en mémoire, au moyen de laquelle est indiqué le nombre des appareils émetteurs récepteurs (SEG) reçus.

24. Réseau de communication selon la revendication 16 ou 23, **caractérisé en ce qu'**une deuxième information indicatrice (HWI2) est générée et mise en mémoire, laquelle indique la qualité de la réception avec laquelle les appareils émetteurs récepteurs (SEG) reçus sont respectivement reçus.

25. Réseau de communication selon la revendication 16, 23 ou 24, **caractérisé en ce qu'**une troisième information indicatrice (HWI3) est générée et mise en mémoire, au moyen de laquelle est indiquée l'existence d'un appareil émetteur récepteur privilégié parmi les appareils émetteurs récepteurs (SEG) reçus.

26. Réseau de communication selon la revendication 16, 23, 24 ou 25, **caractérisé en ce qu'**une quatrième information indicatrice (HWI4) est générée et mise en mémoire, au moyen de laquelle sont indiqués les types d'appareil des appareils émetteurs récepteurs (SEG) reçus.

27. Réseau de communication selon la revendication 16, **caractérisé en ce que** le trafic de signaux (SV) détecté par les appareils émetteurs récepteurs (SEG) qui sont en portée de communication inclut des messages broadcast spéciaux émis dans des trames temporelles prédéterminées.

28. Réseau de communication selon la revendication 16 ou 27, **caractérisé en ce que** chaque appareil émetteur récepteur (SEG) est réalisé de manière telle qu'il génère, dans la phase de mesure, une information d'évaluation (AWI) sur la modification de la qualité de signal du trafic de signaux (SV) respectivement reçu par les appareils émetteurs récepteurs (SEG) qui sont en portée de communication et mesure la régularité des intervalles de temps pour la phase de mesure en fonction de cette information d'évaluation (AWI).

29. Réseau de communication selon l'une des revendications 16 à 28, **caractérisé en ce que** les appareils émetteurs récepteurs (SEG) sont respectivement des appareils fixes et/ou mobiles.

30. Réseau de communication selon la revendication 16, **caractérisé en ce que** le réseau de communication (KNW) se présente sous la forme d'un «Wireless Local Area Network» ou d'un système de téléphonie sans fil DECT.

31. Station de base d'un réseau de communication auto-organisant sans fil, laquelle
a) comporte une unité de commande centrale (ZST) pour commander les déroulements opérationnels et fonctionnels dans la station de base BS et des moyens émetteurs récepteurs (SEM) qui sont reliés entre eux et réalisés de manière telle que la station de base (BS) communique, par communication sans fil, avec au moins un appareil émetteur récepteur (SEG) du réseau de communication (KNW), directement ou indirectement, via un autre appareil émetteur récepteur (SEG),
b) est directement en portée de communication avec au moins un premier appareil émetteur récepteur (E-SEG) et/ou indirectement, par l'intermédiaire d'au moins un autre premier appareil émetteur récepteur (E-SEG), en portée de communication avec le premier appareil émetteur récepteur (E-SEG) resp. les premiers appareils émetteurs récepteurs (E-SEG),
**caractérisée**
c) **par** la présence de premiers moyens d'évaluation (AWM1) qui sont associés à l'unité de commande centrale (ZST), et l'unité de commande centrale (ZST) avec les premiers moyens d'évaluation (AWM1), ainsi que les moyens émetteurs récepteurs (SEM) étant réalisés de manière telle qu'au moins une partie d'un trafic de signaux (SV) de premiers appareils émetteurs récepteurs (E-SEG) qui sont en portée de communication est détectée à intervalles de temps réguliers et, dans ce cadre, l'aptitude des premiers appareils émetteurs récepteurs (E-SEG) à être reçus est constatée,
d) par la présence de premiers moyens de production d'informations (IEM1) et de mémoire (SPM) qui sont associés à l'unité de commande centrale (ZST), et l'unité de commande centrale (ZST) avec les premiers moyens d'évaluation (AWM1), les moyens de mémoire (SPM) et les premiers moyens de production d'informations (IEM1) étant réalisés de manière telle qu'au moins une information indicatrice (HWI, HWI1 ... 4) concernant les premiers appareils émetteurs récepteurs (E-SEG) reçus au total est générée et mise en mémoire,
e) par la présence de moyens de production de messages (NEM) qui sont associés à l'unité de commande centrale (ZST), et l'unité de commande centrale (ZST) avec les moyens de production de messages (NEM), ainsi que les moyens émetteurs récepteurs (SEM) étant réalisés de manière telle que, après la phase de mesure, un message de diffusion (VN) est émis, avec lequel les premiers appareils émetteurs récepteurs (E-SEG) qui reçoivent ce message et qui, de leur côté, ont également généré et mis en mémoire respectivement au moins une information indicatrice (HWI, HWI1 ... 4) concernant les appareils émetteurs récepteurs (SEG) reçus au total par le premier appareil émetteur récepteur respectif (E-SEG), sont invités à envoyer ces informations indicatrices (HWI, HWI1 ... 4) à la station de base (BS),
f) en ce que les moyens émetteurs récepteurs (SEM) sont réalisés de manière telle que les informations indicatrices (HWI, HWI1 ... 4) émises par les premiers appareils émetteurs récepteurs (E-SEG) sont reçues,
g) par la présence de deuxièmes moyens d'évaluation (AWM2) qui sont associés à l'unité de commande centrale (ZST), et l'unité de commande centrale (ZST) avec les deuxièmes moyens d'évaluation (AWM2), ainsi que les moyens émetteurs récepteurs (SEM) étant réalisés de manière telle qu'il est déterminé, à l'aide des informations indicatrices (HWI, HWI1, ..., 4) transmises à la station de base (BS) et auto-générées par la station de base (BS), lequel des premiers appareils émetteurs récepteurs (E-SEG) correspondants convient le mieux, en comparaison avec la station de base (BS), pour la prise en charge de la fonctionnalité de station de base de la station de base (BS),
h) par la présence de deuxièmes moyens de production d'informations (IEM2) qui sont associés à l'unité de commande centrale (ZST), et l'unité de commande centrale (ZST) avec les deuxièmes moyens de production d'informations (IEM2), et les moyens émetteurs récepteurs (SEM) étant réalisés de manière telle qu'une information de commande (STI) est générée, que celle-ci est envoyée au premier appareil émetteur récepteur (E-SEG) qui convient le mieux pour la prise en charge de la fonctionnalité de station de base et que, de la sorte, la fonctionnalité de station de base est transférée au premier appareil émetteur récepteur (E-SEG) concerné tandis que la production et l'envoi de l'information de commande (STI) n'ont pas lieu et que, de la sorte, la station de base (BS) conserve la fonctionnalité de station de base si aucun des premiers appareils émetteurs récepteurs (E-SEG), en comparaison avec la station de base (BS), ne convient mieux pour la prise en charge de la fonctionnalité de station de base.

32. Station de base selon la revendication 31, **caractérisée en ce que** la station de base (BS) est associée à un réseau fixe (FN).

33. Station de base selon la revendication 32, **caractérisée par** la présence de troisièmes moyens de production d'informations (IEM3) qui sont associés à l'unité de commande centrale (ZST), et l'unité de commande centrale (ZST) avec les troisièmes moyens d'information (IEM3), et les moyens émetteurs récepteurs (SEM) étant réalisés de manière telle que la station de base (BS), pendant la phase de mesure, émet une information d'identification spéciale (IDI) par laquelle elle informe de la présence de l'accès au réseau fixe les premiers appareils émetteurs récepteurs (E-SEG) qui sont en portée de communication directe.

34. Station de base selon la revendication 32 ou 33, **caractérisée par** la présence de moyens de production d'informations d'état de réseau (NZIEM3) qui sont associés à l'unité de commande centrale (ZST), et l'unité de commande centrale (ZST) avec les moyens de production d'informations d'état de réseau (NZIEM3), et les moyens émetteurs récepteurs (SEM) étant réalisés de manière telle que la station de base (BS) envoie au premier appareil émetteur récepteur (E-SEG), qui est en portée de communication directe et qui possède l'accès au réseau fixe, une information d'état de réseau (NZI) avec laquelle le troisième premier appareil émetteur récepteur (E-SEG) qui possède l'accès au réseau fixe reçoit des données de configuration actuelles sur le réseau de communication sans fil (KNW) et des appareils émetteurs récepteurs (SEG) qui y sont associés.

35. Station de base selon la revendication 31, **caractérisée en ce qu'**une première information indicatrice (HWI1) est générée et mise en mémoire, au moyen de laquelle est indiqué le nombre des premiers appareils émetteurs récepteurs (E-SEG) reçus.

36. Station de base selon la revendication 31 ou 35, **caractérisée en ce qu'**une deuxième information indicatrice (HWI2) est générée et mise en mémoire, laquelle indique la qualité de la réception avec laquelle les premiers appareils émetteurs récepteurs (SEG) reçus sont respectivement reçus.

37. Station de base selon la revendication 31, 35 ou 36, **caractérisée en ce qu'**une troisième information indicatrice (HWI3) est générée et mise en mémoire, au moyen de laquelle est indiquée l'existence d'un appareil émetteur récepteur privilégié parmi les premiers appareils émetteurs récepteurs (E-SEG) reçus.

38. Station de base selon la revendication 31, 35, 36 ou 37, **caractérisée en ce qu'**une quatrième information indicatrice (HWI4) est générée et mise en mémoire, au moyen de laquelle sont indiqués les types d'appareil des premiers appareils émetteurs récepteurs (E-SEG) reçus.

39. Station de base selon la revendication 31, **caractérisée en ce que** le trafic de signaux (SV) détecté par les premiers appareils émetteurs récepteurs (E-SEG) inclut des messages broadcast spéciaux émis dans des trames temporelles prédéterminées.

40. Station de base selon la revendication 31 ou 39, **caractérisée en ce que** les premiers moyens d'évaluation (AWM1) sont réalisés de manière telle que, dans la phase de mesure, une information d'évaluation (AWI) sur la modification de la qualité de signal du trafic de signaux (SV) respectivement reçu par les premiers appareils émetteurs récepteurs (E-SEG) est générée et la régularité des intervalles de temps pour la phase de mesure est mesurée en fonction de cette information d'évaluation (AWI).

41. Station de base selon l'une des revendications 31 à 40, **caractérisée en ce que** la station de base (BS) est respectivement un appareil fixe et/ou mobile.

42. Station de base selon la revendication 31, **caractérisée en ce que** le réseau de communication (KNW) se présente sous la forme d'un «Wireless Local Area Network» ou d'un système de téléphonie sans fil DECT.
